# EUROPÄISCHE PATENTANMELDUNG

(11) **EP 1 308 570 A2**
(43) Veröffentlichungstag der Anmeldung: **07.05.2003**
(21) Anmeldenummer: 02024692.2
(22) Anmeldetag: 05.11.2002
(51) Int. Cl.: E04B 1/80

(54) **Vakuum-Fügen für in-vacuo hergestellte Vakuumbehältnisse und Strukturen**

(30) Priorität: 05.11.2001 DE 10155028
(71) Anmelder: The Vac Company GmbH, 49492 Westerkappeln-Velpe (DE)
(72) Erfinder: Heise, Jörg, 49143 Bissendorf (DE); Keur, Arij, 49565 Bramsche (DE)
(74) Vertreter: Läufer, Martina, Dr.

(57) **Zusammenfassung**

Das Verfahren besteht u.a. aus:
1. dem in einem Vakuum ganzheitlich ausgeführtem und "getter"-Material-freiem "Fügen" von Vorprodukten,
2. in einer Vakuumkammer eine ganzheitliche"Aussetzung" mindestens eines Exemplares mindestens eines Vorproduktes an ein definiertes Vakuum zur Ausgasung unterschiedlicher Materialien in unterschiedlichen energetischen Zuständen,
3. der in-vacuo Fügebreich enthält ein "Unterdruck-Gleichgewicht" mit dem definiertem Vakuum.

## Beschreibung

Bezug wird genommen auf und Priorität wird beansprucht mit Bezug auf die deutsche Patentanmeldung 101 55 028.6-41 vom 05. November 2001 mit dem Titel " Vakuum-Fügen für in-vacuo hergestellte Vakuumbehältnisse und Strukturen".

### Stand der Technik

Die unter einem Vakuum in-situ durchgeführte Fügetechnik wie das Schweißen von Strukturmaterialien zu Strukturen erfolgt handwerklich und ohne eine effiziente Automatisierung oder eine geschlossen automatisierte oder reproduzierbare Fertigung(skette). Evakuierungs- und Komprimierungsvorgänge der entsprechenden Vakuumapparaturen sind deshalb in der Regel für jede einzelne vakuumzufertigende Struktur erforderlich. Automatisierte Vakuumverarbeitungsvorgänge sind lediglich unter Andocken eines Flansches für die Evakuierung einer Struktur wie des Innenraumes eines Behälters (cf. Verpackung von Kaffee in Kaffeepakete oder mit Ventil, Stutzen etc. versiegelte und relativ dickwandige Vakuumisolationspaneele (VIP) mit einem unter Normalatmosphäre abgepumpten Innenraum) bekannt, ohne daß die entsprechende Struktur ganz(heitlich) von einem Vakuum umgeben ist. Dadurch sind die Freiheitsgrade bei der Verarbeitung von Strukturmaterialien zu Strukturen unter Einsatz eines Vakuums stark reduziert. So ist die Evakuierungseffizienz wie die notwendige Pumpleistung pro Produktionseinheit entsprechender Behältnisse relativ hoch oder der Atmosphärendruck lastet auf einem quasi-geschlossenen Evakuierungs-Innenraum. Produkte mit entsprechend eingeschränkter Dimensionierungsfreiheit können ihren (vielfach bereits begrenzten) Marktanteil nur schwer erweitern.

Auf das Beispiel der Vakuumisolationspaneele (VIP) soll näher eingegangen werden. VIP sind Dämmplatten mit extrem niedriger Wärmeleitfähigkeit durch ihren transversalen Querschnitt. Instrumental ist dabei das Vakuum in diesem transversalen Querschnitt, welches von einer vakuumtauglichen, auf lange Zeit aber nicht unbedingt absolut vakuumdichten Folie eingefaßt ist. Damit dieses Vakuum eine relative dimensionale Form erhält, enthält und beibehält, werden vor einer abschließenden Anfertigung der VIP unter Vakuum bis zu einem gewissen Grad druckstabile Füllkörper in die Folie eingebracht (s. **Bild 1**), und zwar in der Regel vor Evakuierung außerhalb der entsprechenden Vakuumapparatur. Als gängige Füllkörper, auch Kernmaterialien genannt, werden mikroporöse Pulver, i.e forminstabile Materialien oder formstabile Pulverplatten (dem sogenannten Dämmkern zur Aufnahme äußerer Belastungen) eg. aus bis T = 1000° C pyrogener und in der Form mikroporöser und somit auf Vakuum evakuierbarer Kieselsäure (Porengröße ca. 0,5 µm) verwandt. Jüngere Entwicklungen umfassen den Einsatz von Aerogelen (ein Silikatwerkstoff) in VIP für eg. Kühlschränke (cf. Marcel Falk, *Frankfurter Rundschau*, 29. 06. 2001). Die Wärmeleitfähigkeit λ(t=0) von VIP nach dem Stand der Technik beträgt weniger als beziehungsweise ungefähr 5 x 10⁻³ W/mK und liegt demnach etwa 8mal unter entsprechenden λ(t=0)-Werten konventioneller Wärmedämmstoffe wie Mineralfasern oder Schaumstoffe mit etwa 40 x 10⁻³ W/mK. Entsprechende Leistungsdaten beruhen auf einem anfänglichen Innendruck im Vakuum-Innenraum einer VIP, dem VIP-Kern, von etwa 1 mbar bis zu 5 mbar, der aber nur unter den Bedingungen einer relativ teuren weil Ertrags-armen und/oder unproduktiven Fertigung, relativ teurer Einsatzmaterialien und relativ schmaler Schadenztoleranz und engem Anwendungstemperaturbereich nahe Raumtemperatur einzulösen ist. Hintergrund ist der rapide Anstieg der Wärmeleitfähigkeit einer VIP bei einem Innendruck von etwa 80 mbar im VIP-Kern, der zwar in einer perfekten VIP erst nach Jahrzehnten eintritt, in der Realität aber einen hohen Ausschuß in der Produktion voraussetzt, weil er aufgrund der Probleme in der Fertigung einer vakuumtauglichen Versiegelung nicht garantiert werden kann oder wenn er garantiert werden kann, dann hohe und durch handwerkliche Fertigung erhöhte Kosten vorraussetzt.

Ein Problem ist dabei die Wahl des gegenüber äußeren Drücken resistenten Füllstoffes, der der VIP in gewissen Grenzen eine Form(stabilität) verleiht und durch seine Ausgasungsresistenz die Beibehaltung des Unterdruckes im VIP-Kern garantieren muß. Von den kostengünstigeren Füllstoffen wie Polyurethan ist dies nur bei Raumtemperatur gewährleistet. Grundsätzlich gilt, daß für eine geforderte Wärmeisolation einer VIP der zulässige Unterdruckswert im Vakuum-Innenraum einer VIP um so mehr steigt, je geringer die Porengröße des Füllstoffes. Dies hängt mit der Tatsache zusammen, daß die Porengröße dem gasförmigen Medium im Innenraum die effektive Mittlere Freie Weglänge (MFW) aufzwingt, wenn die Porengröße kleiner als die MFW ist, das gasförmige Medium aber für die Wärmeleitung der hauptsächlich verantwortliche Stoff bleibt. Auf dem Gebiet der VIP wird in drei Druck-Füllstoffkombinationsbereiche unterschieden: bei einem (offenporigem) Schaum wie Polyurethan ist ausreichende Wärmeisolierung aufgrund der entsprechend großen Poren nur bei VIP-Innendrücke von 0,05 mbar möglich, bei einem Füllstoff aus pyrogener Kieselsäure VIP-Innendrücke von 5 mbar und bei einem Aerogel können VIP-Innendruck von 200 mbar zuzgelassen werden. Letztere kompensieren durch einzigartige intrinsische Wärmeleitwiderstände den Effekt des relativ hohen Innendruckes auf die resultierende Gesamt-Wärmeleitfähigkeit einer VIP.

Um den notwendigen Aufwand für das Vakuum in der VIP zu reduzieren, wird gegenwärtig versucht, relativ teure Aerogele als Füllstoff für den Dämmkern (s. **Bild 1**) einzuführen, weil damit der Einsatz höhere Vakuumdrücke im VIP-Innenraum praktikabel werden und gehofft wird, daß Aerogele einmal billiger werden (cf. Marcel Falk, *Frankfurter Rundschau* , 29. 06. 2001). Für einen weiter verbreiteten Gebrauch von VIP ist das wenig hilfreich, zumal die Ummantelung der VIP nach Stand der Technik weiter leicht zerstörbar und die Vielseitigkeit des resultierende Gebrauchs von VIP entsprechend begrenzt bleiben muß. Zwar gibt es weniger leicht zerstörbare VIP aus einem Stahl-Gehäuse, jedoch ist das Vakuum in ihnen aufgrund lösbarer und leicht undichter Verbindungen, die notwendig sind, weil diese VIP unter Normalatmosphäre gefertigt werden, nicht beständig. Entsprechende lösbare Verbindungen müssen häufig nachgearbeitet werden. Außerdem reduzieren diese Gehäuse die Wärmeisolation signifikant, weil relativ dicke Gehäuse-Querschnitte an den transversalen Außenbereichen durch eine erhöhte Wärmeleitung die Wirkung der Isolierung durch den entsprechenden Kern wieder zurücknehmen.

Eine VIP aus einem in-vacuo gefertigtem Stahlgehäuse ohne lösbare Verbindungen, welche die Vorteile der vorhandenen VIP kombiniert, nämlich geringe Wärmeleitung, geringer Querschnitt sowohl der VIP (um bei Einführung oder Substitution herkömmlicher Wärmedämmung möglichst wenig Platz zu beanspruchen) als auch der Ummantelung einer VIP (um der Wärmeleitung durch die transversalen Kanten einer VIP einen möglichst geringen Querschnitt zu bieten) und geringere Zerstörbarkeit sowie Benutzerfreundlichere mechanische Eigenschaften, ist nicht bekannt, obwohl genau dies die Marktchancen für VIP erheblich erhöhen würde. Das Problem liegt in der Fertigung, genauer, im Fügen unter Vakuum, welche (teuren Vakuumkammer-)Platz aufgrund der (gewünschten oder geforderten) Dimensionen einer VIP und entsprechender Vorbereitung und Handhabung im Vakuum und (zusätzliche) Zeit gegenüber einer Fertigung unter Normalatmosphäre beansprucht. Füllstoffmaterialien für VIP haben ein großes Oberflächen-zu-Volumen-Verhältnis und führen auf diese Weise unumgänglich zu einer signifikanten Adsorption von Feuchtigkeit und anderen Spezies vor und während der Fertigung einer VIP. Es ist daher Stand der Technik, sogenannte "getter"-Materialien während der Fertigung in einem Vakuum in der Vakuumapparatur und/oder der VIP auch in Abhängigkeit von Service-T gegen den Effekt der Zersetzung des Füllstoffkerns einzusetzen. NB. "Getter"-Materialien sind Feuchtigkeitfallen, relativ teuer und ggfs. toxisch und somit ein potentielles Problem für Wirtschaftlichkeit und zum Beispiel für das Rezykling von VIP. Sie stellen einen prinzipiellen ökologischen Widerspruch zum mit ihnen beabspruchten allgemeinen Wärmedämmungsanspruch dar und stehen daher ihrer breit angelegten Einführung im Weg. Auch ein relativ höher Aufwand für die Erlangung des Vakuums zur Herstellung von Vakuumisolationspaneelen (VIP) schränkt heute noch den wirtschaftlichen Einsatz und den Nutzen der Vorteile von Vakuumisolationspaneelen ein. Die Notwendigkeit der Herstellung einer VIP unter Vakuum wird häufig unterschlagen, wenn an der VIP-Ummantelung keine lösbaren Verbindungen für ein nach der Fertigung der VIP notwendiges Evakuieren vorliegen sollen (cf. DE 200 12 547 U1). Beanspruchte Gebrauchsmuster schlagen dann insoweit Kapriolen, als daß sogar "die Verbindung unter hohem Druck erfolgt." (DE 200 12 547 U1, Schutzanspruch 15) und nicht klar ist, ob als "nachträglich" beanspruchte Eigenschaften (DE 200 12 547 U1, Schutzanspruch 18) den Zustand der entsprechenden VIP bereits vor oder nach einem Schadensfall betreffen. Mit anderen Worten: es werden Isolationspaneele mit einem Vakuum beansprucht, ohne daß offenbart wird, wann, wo und wie das Vakuum überhaupt in die Panneele gelangt.

Dies aber entscheidet über Verbreitung und effektives Anwendungsspektrum von VIP. Die häufig noch handwerklichen Herstellmethoden, die mit der notwendigen Evakuierung des von den VIP-Folienmaterialien einzuschliessenen Vakuum-Innenraums zur Aufnahme eines Füllkörpers, dem sogenannten VIP-"Kern", je nach Anwendungs- und Kostenzweck verbunden sind, sind aber als wesentliche Ursache für eine begrenzte Materialauswahl bei der Herstellung von VIP einzustufen. Hierbei sind insbesondere der beschränkte Einsatz von wenigen oder sehr beschränkt verarbeitbaren oder anwendbaren VIP-Folienmaterialien zu nennen. Es ist Stand der Technik, VIP aus Verbundfolien, bestehend aus einer Außenlage aus Nylon oder Polyamid, einer mittleren Schicht als Gasbarriere zum Beispiel aus Polyethylen oder aus Aluminium, und einer dauerhaft versiegelbaren Innenseite mit einem thermisch versiegelbaren Stoff wie zum Beispiel Polyethylen, Nylon oder Teflon, herzustellen. Eine Alternative sind metallbedampfte Folien, die ggfs. den Vorteil besitzen, an der transversalen Außenseite durch reduzierte oder unterlassene Metallbedampfung den entsprechenden Wärmefluß (transversale "Wärmebrücke") zu minimieren oder zu kontrollieren.

Vor der eigentlichen Versiegelung des Vakuum-Innenraums einer VIP wird diese zunächst unter Normalbedingungen weitestgehend vorbereitet. Hierzu zählt der dreiseitige Verschluß einer VIP, der vielfach durch einen Fügeschritt (dann resultiert in der Regel eine Lasche oder Überlappung mit der Breite x₁) oder Formgebungsschritt unter Normalbedingungen realisiert wird, bevor unter einem Vakuum über die verbleibende offene Lasche das Gas aus dem Innenraum der VIP ausströmt (i.e. bis auf den Vakuum-Umgebungsdruck durch eben diese Umgebung abgesaugt wird) und eine Stirnnaht nach Evakuierung unter eben diesem Vakuum durch ein sogenanntes "Schweißen" (s. unten) versiegelt wird, hier ebenfalls unter Bildung einer Lasche oder Überlappung mit der Breite x₂ (s. Darstellung in **Bild 2**). Zuvor wurde bereits ein Füllkörper in die VIP eingebracht und die so gefüllte VIP in der Regel von Hand in den Vakuumversiegelungsapparat eingelegt. Dabei ist die Positionierung nicht notwendigerweise präzise, weil das Produkt in der Regel erlaubt, über den VIP-Kern hinaus überstehende Folien mit relativ hohen Toleranzen in der Breite zuzulassen (s. das in **Bild 2** dargestellte Schema).

Viele Patente und Gebrauchsmuster (cf. DE19758219A1, DE19814271A1, DE 200 12 547 U1) beanspruchen zwar ein "Verschweißen" der VIP-Folienummantelung, obwohl effektiv ein *partieller Verschmelzungsvorgang* vorliegt, weil Kunststoffschichten von Kunststoff/Metall-Verbünden versiegelt werden, also unklar bleibt, worin der Verschweißungsprozeß besteht, eg. über die Flüssigphase eines Metalles oder einer Legierung (mit oder ohne Vermischen eines Zusatzes) oder eg. über eine Festkörper-In-Diffussion zwischen einer Schweißnaht und der "heat affected zone" (HAZ). Kunststoffe, Kleber und organische oder Biomaterialien sind aber gerade unter den Bedingungen eines Verschmelzens, bei dem ein Teil der Verbundfolien wie etwa die Metallbarriereschicht noch nicht einmal flüssig wird, unlöslich in Metallen und Legierungen und umgekehrt. Mikrostrukturen entsprechender "Verschmelzungsnähte" können deshalb sehr leicht schädigende Einschlüsse enthalten, zumal nicht offenbart wird, ob die beanspruchte "Verschweißung" unter Vakuum oder unter Normalbedingungen stattfindet (cf. DE 200 12 547 U1). Ferner wird in den gängigen VIP-Patenten das "Schweißen" von Umhüllungen aus einer undefinierten Anzahl von Schichten oder Materialverbünden unterschiedlichster Materialien beansprucht, die ineinander unlöslich und (bei entsprechendem Ausschuß in der Produktion) für die Bildung einer homogenen Schweißnaht inkompatibel, also ausgeschlossen sind (cf. DE197 58 219 A1, DE 198 14 271 A1), ein Sachverhalt, der umso schwerwiegender wird, wenn die Randbedingungen, unter denen "verschweißt" wird oder werden soll (eg. Vakuum oder Normalatmosphäre), zusätzlich nicht offenbart, sondern im Widerspruch zur Breite dessen, was beansprucht wird, verschwiegen werden (cf. DE 200 12 547 U1) (cf. Metallverschweißung, bei der eine kunststoffreie metallische Verbindung zwischen mindestens zwei metallischen Seiten zu einer metallischen Verbindung führt).

VIP aus kunststoffhaltigen Ummantelungen haben thermisch, chemisch, physikalisch und mechanisch begrenzte Einsatzgebiete. Effektiv setzen Kunststoffbeschichtungen nicht nur die Einsatztemperaturen, sondern auch die Verarbeitungstemperaturen und für eine Herstellung einer VIP und somit die technischen Möglichkeiten wie die kritischen Eigenschaften einer VIP herab. Im Vakuum versiegelte VIP mit Ummantelungen aus handelsüblichen Verbundfolien (mit und ohne metallischer Gasbarriereschicht) sind makroskopisch leicht zu beschädigen und haben eine relativ hohe Schadensanfälligkeit im Verlauf ihrer Lebenszeit gegen Stoß, angefangen von der Produktion, zum Transport über Installation und Einsatz. Warum eine "mechanisch beständige Umhüllung" für den stoßfreien Gebrauch der entsprechenden Paneele per se einen Schutz gegen Perforation durch externe Stoßbelastung liefern soll (cf. Anspruch 1 in DE 200 12 547 U1), wird nicht offenbart, weil schon zuvor unterschlagen wurde, daß der als "Vakuum"-IP beanspruchte Gegenstand den entsprechenden Beweis für ein in ihr enthaltenes Vakuum gar nicht erst antritt. Häufig wird einfach nur vorausgesetzt, daß der Einsatz von VIP-Ummantelungen aus Stahl und Edelstahl einen erhöhten Schutz gegen die relative Intoleranz von VIP aus einer Verbundfolien-Ummantelung ge- genüber Schadenanfälligkeit eine Alternative bietet, ohne ein Verfahren zu offenbaren, welches diesen Anspruch gewährleistet.

Gemäß Stand der Technik erhalten Stahl-VIP das Vakuum aber erst nach der Fertigstellung der Ummantelung unter Normalbedingungen durch Abpumpen bzw. Evakuieren über einen Absaugstutzen, Ventil etc. (DE 42 14 002, vgl. a. DE 199 14 963 A1): "Nach Herstellung der Verbindung zwischen den Metallplatten **1** und der Kunststoffschicht **2** wird das Vakuumisolationspaneel über einen nicht gezeigten Stutzen mit einem Unterdruck versehen". In der beanspruchten Vakuum-IP ist damit der Stutzen und der Verschluß für die Einbringung und Aufrechterhaltung des Vakuums genauso wichtig wie die in-vacuo Versiegelung einer in-vacuo hergestellten VIP ohne Stutzen und Verschluß. Obwohl diese Vakuum-IP extern mit dem Vakuum versehen werden und das entsprechende Druckdifferential in den entsprechenden VIPs eine hohe Fehlerquelle gemäß Stand der Technik darstellt, fehlt als unumgänglicher Bestandteil für das *enthaltene* Vakuum die Offenbarung einer Vorrichtung und des Verfahrens oder einer anderen Lehre für das enthaltene Vakuum für die Beibehaltung des Vakuums während und nach Abkoppeln des Stutzens von einer entsprechenden Pumpe.

Eine Kombination aus in-vacuo gefertigten VIP mit kompletter Stahlfolienummantelung und gleichzeitiger Anwesenheit von im Vakuum angefertigten Stirnnähten zur in-vacuo Einkapselung desselben oder annähernd desselben Vakuums im den Kern der VIP aufnehmenden Vakuum-Innenraum oder gleichzeitiger Abwesenheit von entsprechenden nicht-lösbaren Verbindungen für eine Post-konstruktive Herstellung eines internen Isolationspaneelen-"Vakuums" ist dagegen unbekannt. Es soll noch einmal darauf hingewiesen werden, daß es ein Taschenspielertrick ist, die Post-konstruktive Herstellung eines internen Isolationspaneelen-"Vakuums" zu unterschlagen, wenn gleichzeitig eine VIP beansprucht wird, die über eben diese, aber nicht oder nicht vollständig offenbarte Post-konstruktive Herstellung realisiert wird. Wenn zusätzlich das Wärmebrückenproblem bei einer Stahl-VIP unter einer signifikanten Reduzierung der transversalen Wärmeleitung gelöst werden soll, werden gemäß Stand der Technik transversale Kunststofflächen eingesetzt, i.e. es resultiert ein Stahl-Kunststoff-Verbund. Aufgrund der den Kunststoffen inhärent anhaftenen relative hohen Ausgasung unter Vakuum festigt ein Stahl-Kunststoff-Werkstoffverbund innerhalb einer VIP die ohnehin limitierten Stand der Technik der entsprechenden in-vacuo Fertigungsproduktivität nur noch weiter, liefert aber keinen Lösungsansatz für ein signifikantes Markterweiterungspotential für VIP.

Dem steigenden Bedarf an großflächigen Isolationsmitteln zur (Wärme)Dämmung von Gebäuden und im Transportwesen steht der Mangel an geeigneten VIP-Herstellverfahren entgegen. Beliebt sind konstruktive Verbünde von mindestens zwei individuellen VIP, eingeschachtelt in einem gemeinsamen Blechgehäuse, welches über einen Absaugstutzen unter Normalatmosphäre unter Vakuum gesetzt wird (cf. DE 42 14 002). So berichtet DE 199 04 799 A 1 über "mehrere kleine Vakuumdämmpaneelen, die in eine gemeinsame Umhüllung eingebracht sind." (Col. 2, Zeile 31 - 33). Aber für den beanspruchten VIP-Verbund gibt es offenbar noch kein Verfahren, weil der beanspruchte VIP-Verbund in DE 199 04 799 A 1 nicht in Abhängigkeit von einem Verfahren beansprucht wurde. Der Grund ist nicht einfach nur, daß der entsprechende Verbund nicht funktionieren kann, weil das entsprechende Herstellverfahren in der Regel ohnehin unabhängig von diesem Verbund funktionieren müßte. In DE 199 04 799 A 1 funktioniert das Verfahren noch nicht einmal umgekehrt, i.e. das Verfahren funktioniert noch nicht einmal in Abhängigkeit von dem beanspruchten VIP-Verbund, weil die beanspruchte VIP nicht einmal selber funktionieren kann. Dieser Sachverhalt ergibt sich aus dem Umstand, daß in DE 199 04 799 A 1 zwar beansprucht wird, daß der Zwischenraum zwischen Umhüllung und VIP evakuiert wird, nicht aber gelehrt wird, wie die Wand der Umhüllung gegen eine Kollabierung beim Evakuieren des Zwischeraumes geschützt wird (cf. USP 5,500,305).

Zugrunde lag der DE 199 04 799 A 1 der Gedanke, gegenüber der Fertigung von VIP nach DE 42 14 002 kostengünstigeres Hüllenmaterial, einfachere Evakuierungstechnik und kürzere Evakuierungszeiträume offenbaren zu können (Col. 2, Zeilen 20 - 22). Wenn aber das Hüllenmaterial kostengünstig ist, sind einfache Evakuierungstechnik und kurze Evakuierungszeiten noch nicht ausreichend, daß auch die resultierende VIP (stück)kostengünstig ist. Der Pferdefuß an der DE 199 04 799 A 1 ist die fehlende Vorwärtintegration der Fertigung, darin ausdrückt, daß die notwendigen Einzelheiten zur Herstellung und Beibehaltung des Vakuums in der beanspruchten VIP einfach unterschlagen werden. Hierzu zählen nicht einfach nur die notwendigen Methoden zur Aufrechterhaltung des Zwischenraums während und nach dem Evakuieren (cf. DE 199 04 799 A 1 vs. USP 5,500,305, s. oben). Vielmehr sind lösbare Verbindungen wie Absaugstutzen und Ventile instrumental und kritisch zugleich für das Vakuum in dem entsprechenden "IP"-Verbund, i.e. ohne Absaugstutzen, Ventil und/oder Verschluß kein "V"IP-Verbund, wie er beansprucht wird. Man kann nicht versiegeln, wie in Anspruch 6 der DE 199 04 799, und dann evakuieren, ohne anschließend noch einmal etwas zu verschließen respektive zu versiegeln, damit die VIP auch unabhängig zu benutzen ist und zum Kunden gelangt. Es ist deshalb nur folgerichtig, daß das Ausführbeispiel zum in der DE 199 04 799 beanspruchten Verfahren fehlt, da sich das einzige Ausführungsbei-spiel auf die beanspruchte VIP beschränkt, die aber nicht funktionieren kann (s. oben). Die Konsequenzen liegen auf der Hand. Die Methodik der unvollständigen Offenbarung ist auch von anderen Patent-schriften bekannt (cf. DE199 14 963 A1). Gemeinsam ist diesen Patenten ihr Charakter, potentielle Orte des Versagens der VIP (cf. USP 5,695,844) wie der Verursachung von Kosten zugleich zu negieren. Sie sind deshalb unzureichend, zu überzeugen, obwohl die entsprechenden Patentschriften offensichtlich dafür gemacht wurden, weil natürlich auch jeder Verfahrensansatz fehlt, um die vielen zwar faszinierenden, aber relativ teuren Füllstoffe in einer resultierenden kostengünstigen VIP umgehen zu können oder entsprechenden Kompromisse einschlagen zu können.

So, wie in DE 199 14 963 A1 beanspucht, handelt es sich bei der beanspruchten Paneele um eine Isolationspaneele ohne Vakuum (in DE 199 04 799 A 1 um Isolationspaneelen-Verbünde ohne Vakuum, s. oben), weil die in DE 199 14 963 A1 (und DE 199 04 799 A 1, s. oben) nicht-gezeigten oder nicht offenbarten oder nicht beanspruchten Vorrichtungen für eine Post-Herstellung des Vakuums in der VIP (VIP-Verbund):
1. sowohl herstellungs- als auch anwendungskritisch sind, wie andere Patente wie zum Beispiel USP 5,695,844 zeigen.
2. in die Irre führen, weil suggeriert wird, daß die beanspruchten VIP (-Verbünde) universell vakuumtauglich seien, obwohl eine Randschicht aus einer geringen Wärmeleitfähigkeit eben nicht per se universell vakuumtauglich ist, wenn sie aus Kunststoff hergestellte transversale Ummantelungsflächen enthält (cf. DE 199 14 963 A1), ein Zwischenraum eben nicht per se evakuiert werden kann, wenn der Evakuierungsweg durch Kollabieren der Wand der (externen) Umhüllung vom Zugang zu einem Absaugstutzen unterbrochen wird (cf. DE 199 04 799 A 1) und auch eine Schweißnaht noch kein Vakuum in einer VIP schafft oder beibehält einfach dadurch, daß diese Schweißnaht nur bereichsweise an einer Stirnfläche einer VIP-Peripherie angebracht wird (cf. DE 200 12 547 U1).
3. nicht nur unvollständig beschrieben, sondern auch unvollständig abgegrenzt sind (cf. Ansprüche 1 aus DE 199 14 963 A1 vs. DE 200 12 547 U1), weil ja auch VIP ohne dem, was so alles weggelassen wird, über Kreuz wieder Bestand haben könnten, ohne aber das eigentliche Problem dabei gelöst wird, nämlich zu offenbaren, wann, wo und wie das Vakuum Teil des beanspruchten Produktes wird, somit die in DE 199 14 963 A1 (und DE 199 04 799) beanspruchten VIP (-Verbünde) sich auf ungerechtfertigte Weise gleichstellen und in Konkurrenz treten zu (a) gleichwertig beanspruchten Produkten (cf. DE 200 12 547 U1), zu (b) ggfs. noch zu offenbarenden in-vacuo versiegelten VIP (und VIP-Verbünden) und entsprechenden Ansprüchen, die die in-vacuo Herstellung berücksichtigen und (c) wenn es dann darum geht, Herausforderungen wie die Kontrolle der Wärmebrücke durch neue Materialverbünde oder Kostenaufwand durch neue Konstruktionen vakuumgerecht beziehungsweise in einer mit der Vakuumtechnik kompatiblen Weise zu lösen (s. Offenbarung der Erfindung).

Es handelt sich in DE 199 14 963 A1, DE 199 04 799 und DE 200 12 547 U1 (hier aufgegriffen als Stellvertreter für entsprechend beanspruchte VIP und VIP-Verbünde) aber nicht um VIP beziehungsweise um VIP-Verbünde, weil die VIP und VIP-Verbünde, die ohne dem existieren, was in DE 199 14 963 A1,DE 199 04 799 A 1 und DE 200 12 547 U1 weggelassen wurde, nur universell existieren können,wenn sie eine vakuumtaugliche Kombination aus Evakuierungsvorgang, Verarbeitung- bzw. Fügetechnik, Ma terial und resultierende notwendige Charakteristika aufweisen. Tatsache ist demnach, daß die in DE 199 14 963 A1, DE 199 04 799 A 1 und DE 200 12 547 U1 beanspruchten VIP und VIP-Verbünde gar kein Vakuum enthalten können, weil erst nach Fertigstellung der im Hauptanspruch beanspruchten Eigen-schaften das Vakuum zu dem beanspruchten Isolationspanel hinzugefügt wird beziehungsweise hinzugefügt werden kann, die Hinzufügung und Absicherung des Vakuums aber nicht beansprucht wird oder wenn, man dann aber ggfs. auch verzichten kann. Es ist vergleichsweise irrelevant, was in DE 199 14 963 A1, DE 199 04 799 und DE 200 12 547 U1 beansprucht wird, weil so gar nicht existieren kann, was beansprucht wird, ohne in einen zumindest technisch nicht auflösbaren Widerspruch zu geraten.

Ein wesentlicher Grund für diesen Stand der Technik dürften die zwei grundsätzlichen Probleme sein, welche mit der Verwendung von Standard-Verbundfolien mit einer viel zu dünnen Diffusionsbarriereschicht, in der Regel aus Aluminium, für das Verschweißen von Vakuumisolationspaneelen unweigerlich verbunden sind selbst dann, wenn die Ausführung des in-vacuo-Versiegelns optimal ausgeführt wurde, und die in den **Bildern 2-2 und 2-3** dargestellt sind. So sind Standard-Verbundfolien nicht nur theoretisch sondern auch praktisch in ihrer Fläche nicht dicht, weil sie zwangsläufig aufgrund der dünnen Wandstärke von nur 7 µm ihrer mit "dry-Laminatschichten" umgebenen Aluminiumdiffusisonsbarrierenschicht sogenannte "pin-hole" enthalten. Hinsichtlich dieser dem Fachmann bekannten Problematik soll auf die einschlägige Literatur hingewiesen werden, i.e. s. :
"High barrier Film", Firmenbroschüre, TOYO Aluminium K.K., 2000.5.17
   A. Sugiyama, H. Tada, M. Yoshimoto, "Gas permeation through pinholes of plastic film laminated with Aluminium foil", Vuoto, Vol. XXVIII, N.1-2 - Gennaio-Giugno 1999.
"pin-holes" sind in allen Schichtmaterialien unterhalb einer kritischen Wandstärke enthalten, so auch in Edelstahlfolien. Die Erfindung basiert darauf, daß die verwendeten Folien die in Anspruch 1 gelehrten Verfahrenskriterien voraussetzen und unabhängig vom Material der metallischen Diffusionsbarriereschicht quer zu ihrer Oberfläche unter anderem eine Wandstärke von ≥ 15 µm enthalten, deren erfolgreiches in-vacuo Fügen durch Verfahren nach Anspruch 1 gesichert wird.

Ein zweites Dilemma ist mit der resultierenden Heißsiegelnaht bei Verwendung dieser Standard-Verbundfolien gegeben. In dem einen Grenzfall, bei dem eg. durch Überhitzung der ebenfalls enthaltene Kunststoff im Vakuum vollständig ausgedampf sein soll, wird eine maximale Wandstärke der in-vacuo Verbindung von eben der Wandstärke der Diffusionsbarriereschicht erzielt und die "pin-hole" Problematik im Produkt eines jeden noch so guten Verfahrens in der einen oder anderen Form reproduziert. In dem anderen Grenzfall, in dem überhaupt kein Kunststoff der Ausgangsfolie beim in-vacuo Versiegeln verschwindet, diktieren die Diffusionseigenschaften des Kunststoffes zumindest in der in-vacuo Heißsiegelnaht nach wie vor die Dichtungseigenschaften der Vakuumisolationspaneele, wenngleich die metallische Schicht einer von pinholes abhängige Diffusionsbarriere diese Diffusionseigenschaften zumindest großflächig ausschließt. Dieses Problem ist in **Bild 2 - 2** dargestellt.

Auch enthält der Stand der Technik viele unscharfe Grenzen und vermeintlich ähnliche Eigenschaften der hier offenbarten und beanspruchten Verfahren und Produkte. Eine Auswahl davon soll hier diskutiert werden.

### DE 42 06 563 A1

Hinsichtlich der Strahlungsquelle in DE 42 06 563 A1 gelten die unter DE 198 01 612 C1 weiter unten gemachten Ausführungen zu den Vakuumkammern für undefinierte Laserbearbeitung, i.e. keine der Merkmale des in den Abschnitten a) - f3) des Anspruches 1 des hier offenbarten und beanspruchten Verfahrens wird durch die in DE 42 06 563 A1 offenbarte Vorrichtung gewährleistet und ist auch nicht das Ziel (vgl. weiter unten).

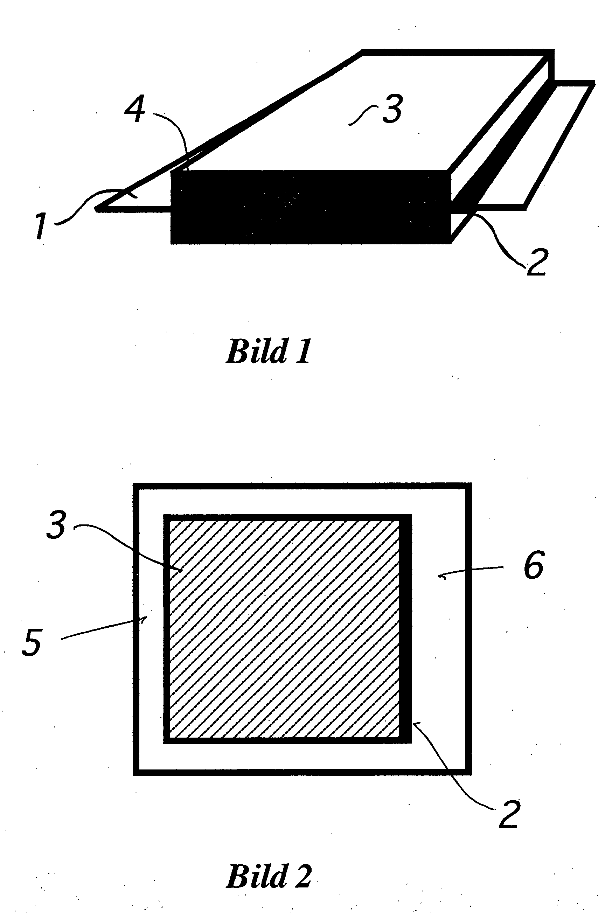

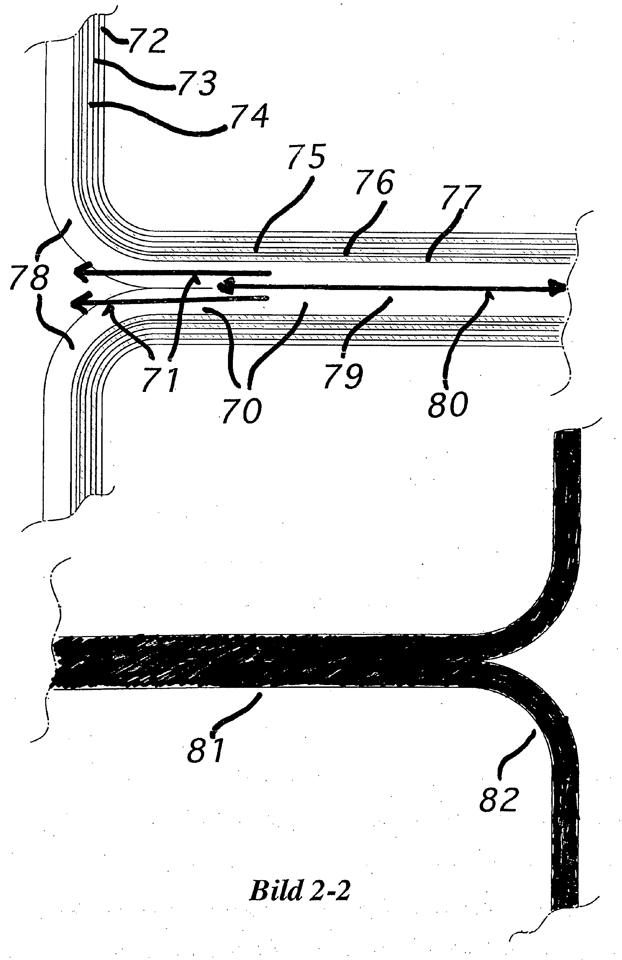

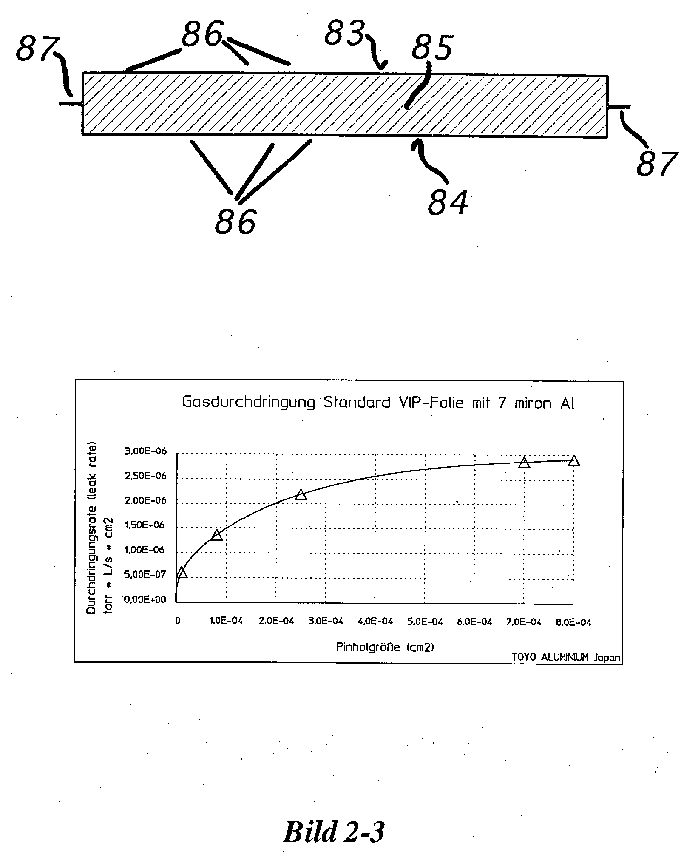

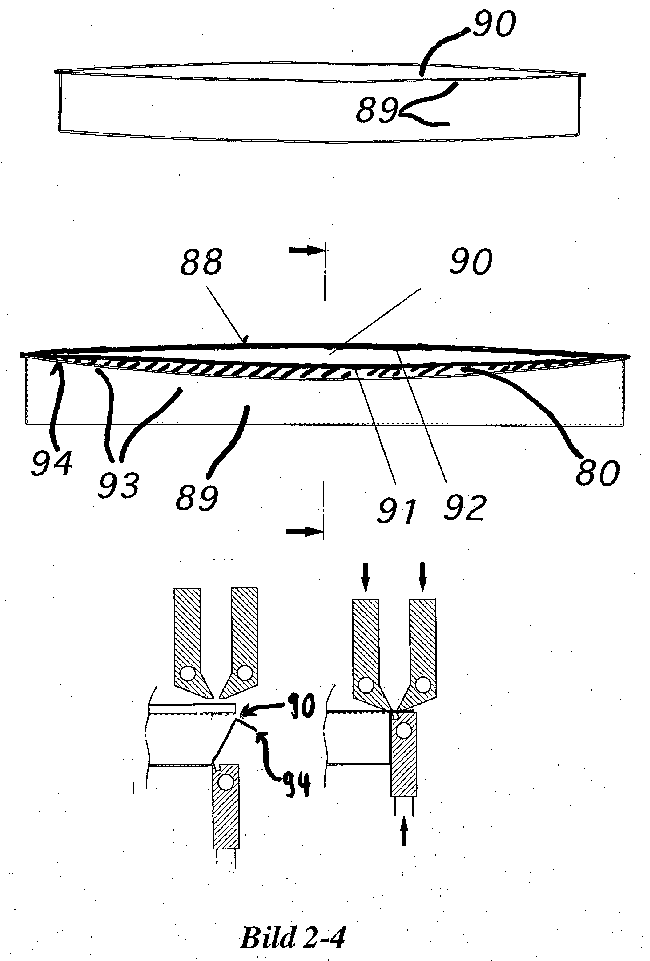

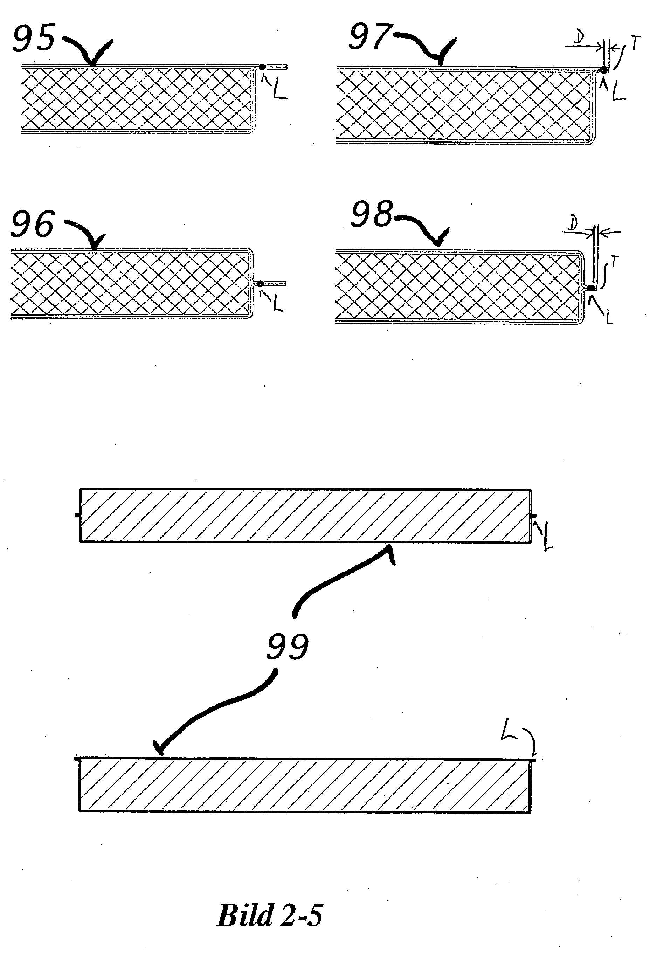

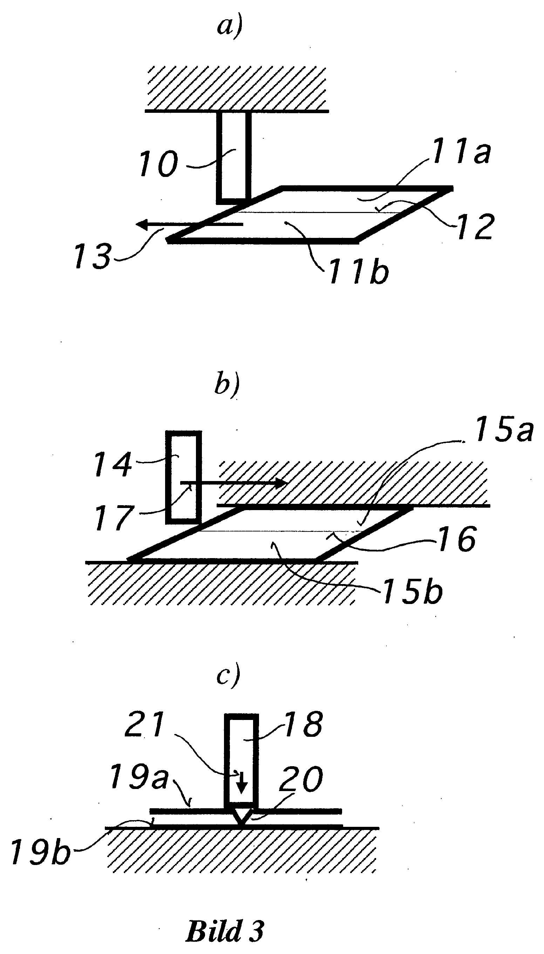

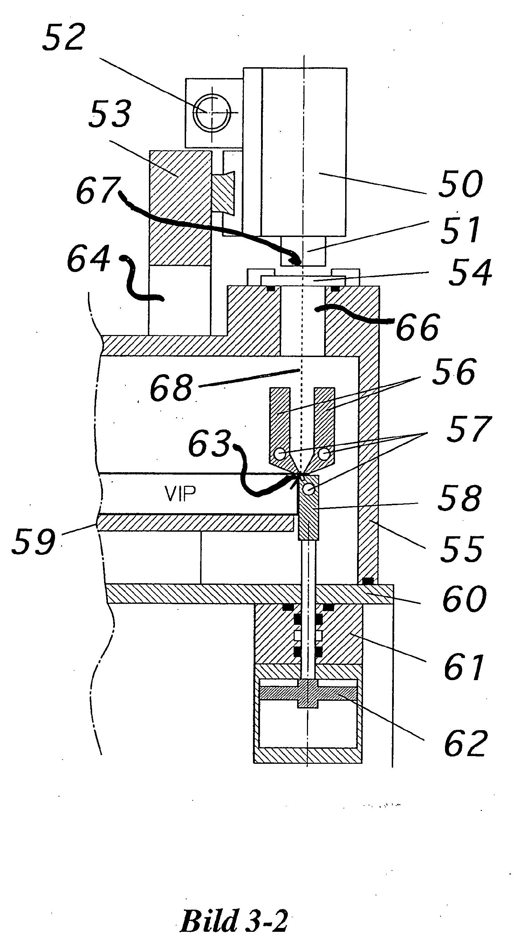

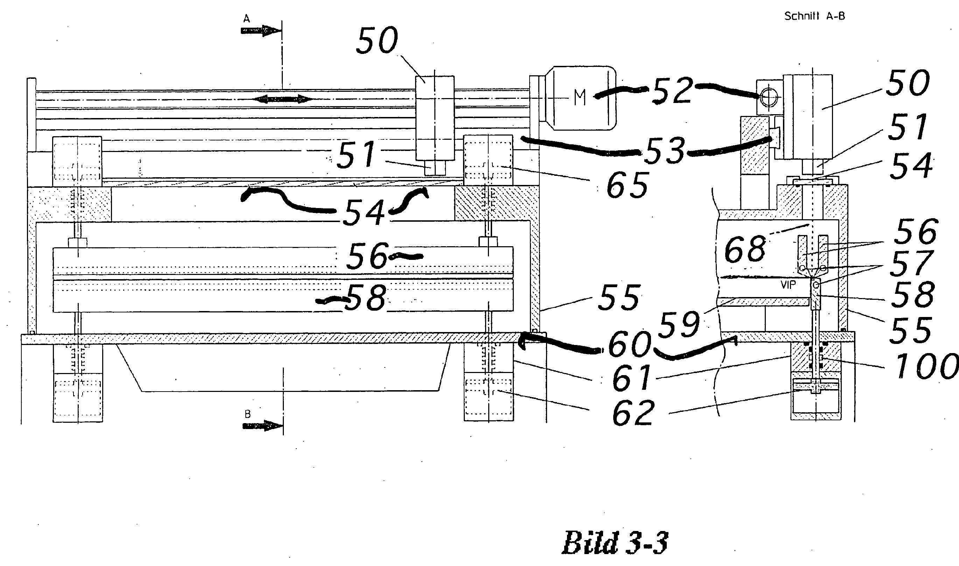

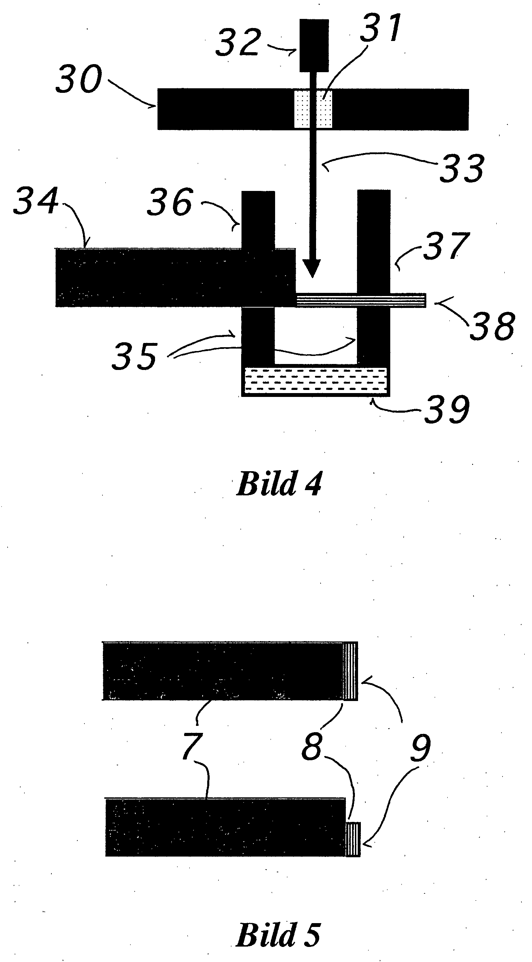

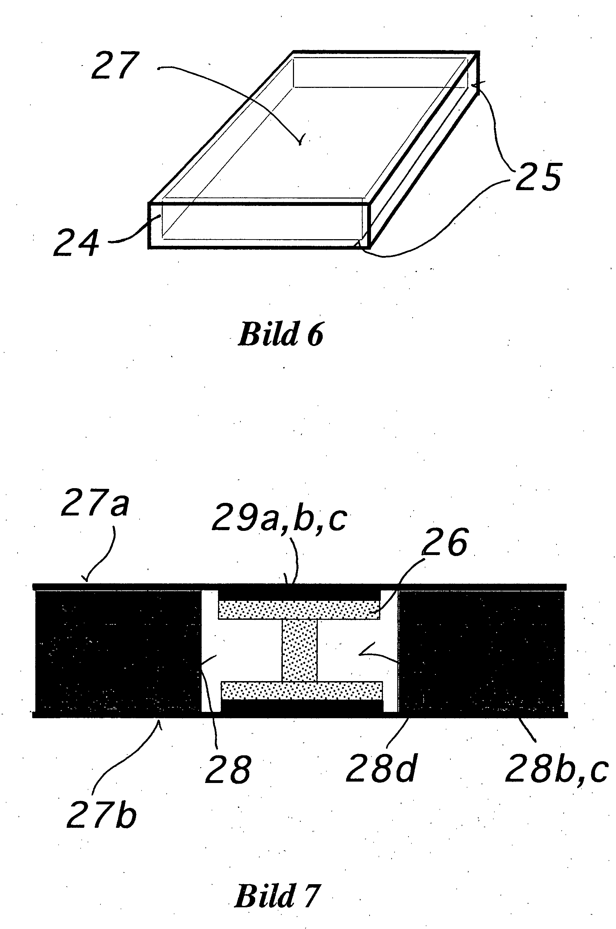

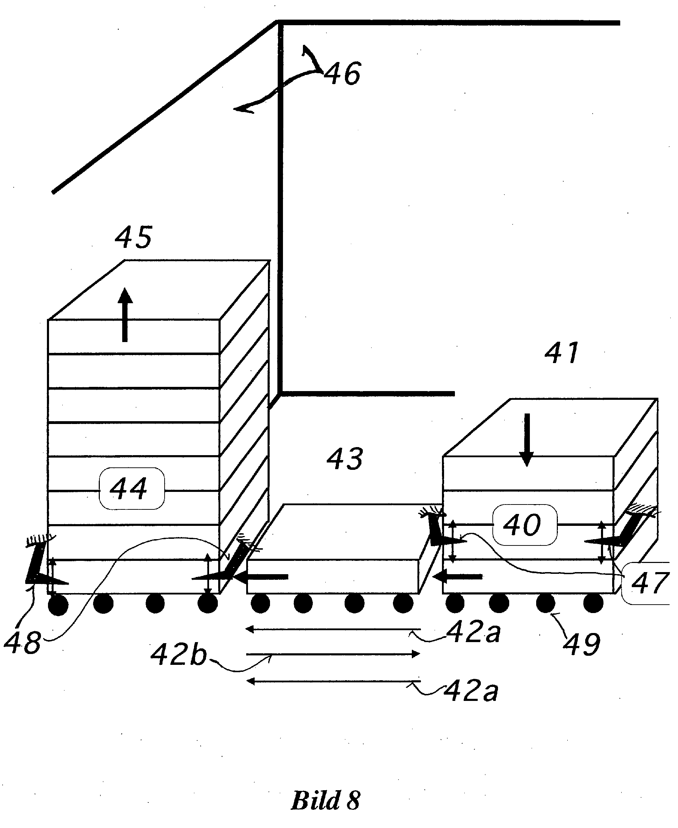

Insbesondere enthalten die Verfahren, für die die Vorrichtung nach DE 42 06 563 A 1 vorgesehen ist, keine "Bildung einer in-vacuo Verbindung durch eine in-vacuo Relativbewegung des mindestens einen Exemplars und einer vakuumtauglichen Fügeapparatur zueinander für eine Energiezufuhr und resultierende Verbindungsbildung", weil:
1. Ziel der DE 42 06 563 A 1 nicht eine den x-, y- und z-Raum ausnutzende Bewegung für die Bildung einer Schweißnaht, sondern die Positionierung und Ausrichtung entsprechender Orte vor Bildung einer Schweißnaht (Spalte 2, Zeilen 52 - 63) ist. Es wird keine Bewegung des mindestens einen Exemplars entlang einer Löt- oder Schweißnaht offenbart (vgl. Spalte 3, Zeile 57) oder beansprucht, sondern nur die Positionierung und Ausrichtung von komplizierten Werkstücken mit möglichen Orten für deren Bildung eg. an einer Hinterschneidung (vgl. Fig. 13 und entsprechende Diskussion in Spalten 1 und 2 in DE 42 06 563 A1).
2. das Vakuum auch deswegen undefiniert bleibt, weil drei oder mehr rotierende Stangen außerhalb der betreffenden Kammer betätigt werden und ein entsprechendes Verfahren durch die entsprechende Kammerwandungsperforation, die für diese Stangen aber die einzig offenbarte Möglichkeit für einen Antrieb der betreffenden Löt- und Schweißvorrichtung darstellen, mit einem Leckproblem konfrontieren, je höher das Vakuum (i.e. je größer der Vakuumunterdruck bzw. je niedriger der Kammerdruck) ist und die Vakuumtauglich der betreffenden Fügeapparatur vom Vakuum selbst abhängt. Dies ist ein Grund, warum der Fügebereich in DE 42 06 563 A1 kein Unterdruck-Gleichgewicht mit dem Hintergrundsvakuum enthält. Es verwundert deshalb nicht, daß die Bildung einer in-vacuo Verbindung von was auch immer in DE 42 06 563 A1 nicht offenbart wird. Demgegenüber ist das Verfahren nach DPA 101 55 028.6-41 Leck-frei und es werden in DPA 101 55 028.6-41 detaillierte Ausführungsbeispiele für die "Bildung einer in-vacuo Verbindung durch eine in-vacuo Relativbewegung des mindestens einen Exemplars und einer vakuumtauglichen Fügeapparatur zueinander für eine Energiezufuhr und resultierende Verbindungsbildung" offenbart. Die Vorrichtung nach DE 42 06 563 A1 ist deshalb inkompatibel mit dem hier offenbarten und beanspruchten Verfahren.
3. aus einer Beweglichkeit einer Tragplatte nicht hervorgeht, was diese Beweglichkeit mit der "Bildung einer in-vacuo Verbindung durch eine in-vacuo Relativbewegung des mindestens einen Exemplars und einer vakuumtauglichen Fügeapparatur zueinander für eine Energiezufuhr und resultierende Verbindungsbildung" zu tuen haben könnte und deshalb zwingend keine der Merkmale d), e), f1) - f3) und deren Kombination enthalten ist.
4. die entsprechende Energiezufuhr durch eine Strahlungsquelle erfolgt, die keine eigene Bewegung entlang einer Schweißnaht erlaubt.

Eine in-vacuo Relativbewegung, also auf der Basis der wechselseitig möglichen Bewegung von mindestens einem der Verfahrensbestandteile "mindestens ein Exemplar" und/oder "vakuumtaugliche Fügeapparatur" zueinander für eine Energiezufuhr und resultierende Verbindungsbildung wie in Anspruch 1 hier beanspucht und im Unteranspruch 5.A und C konkretisiert ist, ist demnach in DE 42 06 563 A1 nicht enthalten.

Ferner wird kein Antrieb oder eine Steuerung und Regelung oder ein Fertigungsautomat wie in Anspruch 6.B hier offenbart, sondern nur eine "freie" (Spalte 1, Zeile 59) Steuerung eines Werkstückes während der Positionierung vor Bildung einer Verbindungsbildung von Hand (Spalte 2, Zeile 3). Somit ist keine Konstanz der Beweglichkeit, geschweige denn der plastischen Verformung oder Stauchung oder der Geschwindigkeit eines mindestens einen Exemplars , somit auch keine Relativbewegung des mindestens einen Exemplars und einer vakuumtauglichen Fügeapparatur zueinander für eine Energiezufuhr und resultierende Verbindungsbildung mit den in den Abschnitten e) und f1) - f3) des Anspruches 1 beschriebenen Merkmalen des beanspruchten Verfahrens in DE 42 06 563 A1 enthalten.

### DE 198 01 612 C1

Keine der Merkmale des in den Abschnitten a) - f3) des Anspruches 1 des hier offenbarten und beanspruchten Verfahrens wird durch die in DE 198 01 612 C1 offenbarte Vorrichtung gewährleistet und ist auch nicht das Ziel, sondern Vakuumkammern für undefinierte Laserbearbeitung großer Werkstückflächen, weil nur Vorrichtungen für Bewegungen, aber keine
1. zu bearbeitenden Materialien,
2. in-vacuo Verbindung,
3. Kühlfalle oder sonstige Vakuumkontrolle (vgl. Punkt 2. der weiter unten dargestellten Ausführung 8),
4. angewandte Energien für den Laser offenbart oder beansprucht werden. Eine Kühlfalle für die in DE 198 01 612 C1 offenbarte Vorrichtung wäre aber das mindeste, was notwendig wäre, um ein Vakuum vor exzessiver Ausgasung infolge von unsachgemäßer Anwendung von leichtausgasenden Materialien für einen gegebenen Laser oder von überhöhter angewandter Laserenergie für ein gegebenes Material mit einer entsprechenden Vorrichtung zu schützen. Folglich kann die Vorrichtung in der in DE 198 01 612 C1 offenbarten Form nicht für das in DPA 101 55 028.6-41 beanspruchten Verfahren angewandt werden. Der Effekt der Vorrichtung in DE 198 01 612 C1 auf die einzelnen Merkmale des in Anspruch 1 der DPA 101 55 028.6-41 beanspruchten Verfahrens ist wie folgt:
   zu a) und c): ein definiertes Vakuum geht durch exzessive Ausgasung verloren, folglich auch ein Unterdruck-Gleichgewicht wie in DPA 101 55 028.6-41.
   zu b), d) und e) bis f3): eine resultierende Verbindungsbildung insbesondere mit den Merkmalen in den Abschnitten e) - f3) des Anspruches 1 wird unmöglich, dadurch auch eine in-vacuo Verbindung mit den Merkmalen im Abschnitt b) des Anspruches 1.

### DE 100 00 260 C1

Der in DE 100 00 260 C1 offenbarte doppelwandige Isolierkörper besitzt keine erfindungsrelevante oder neuheitsschädliche Ähnlichkeit mit den in DPA 101 55 028.6-41 in den Ansprüchen 10, 12, 15 und 16 beanspruchten VIPs besitzt.

Der beanspruchte doppelwandige Isolierkörper in DE 100 00 260 C1 ist funktionsuntüchtig, weil er sich mit guten Heißsiegeleigenschaften "eines" (!) nicht-metallischen Materiales des Dichtungsprofils (3) begnügt, welches das Dichtungsprofil (3) mit einer Beschichtung versieht oder es konstituiert und ihm gleichzeitig niedrige Wärmeleitfähigkeit verleiht, die großflächige Heißversiegelung selbst dagegen durch "Aktivieren" von nicht definierten Heizelementen 14a, 14b, 16e, 16f hergestellt und durch "Erkalten der heißversiegelten Flächen" "fertig" wird.

### Beweis

Spalte 4, Zeilen 6 - 10, 22 - 25 und 47 - 51.

### Begründung

Wenn sich aber die Erkaltung auf heißversiegelte "Flächen" gemäß der Offenbarung zur Bildung der großflächigen Heißversiegelung beschränkt, kann der nicht-offenbarte Werkstoff des nicht-metallischen Materials nicht aktiviert worden sein, damit der evakuierte Hohlraum dauerhaft vakuumdicht verschlossen bleibt. Dies ergibt sich zum einen aus der Tatsache, daß weder "heißversiegelte Flächen" eine"großflächige Heißversiegelung eines evakuierten Hohlraumes" darstellen noch das beanspruchte Dichtungsprofil (3) aus dem einen nicht-offenbarten Werkstoff bestehen kann, der dem Dichtungsprofil (3) gute Heißsiegeleigenschaften verleiht und gleichzeitig mit einem Versteifungsmaterial (10) ausfüllt, das "eine niedrige Wärmeleitfähigkeit hat" (s. Unteransprüche 3 und 5 in DE 100 00 260 C1). Auch ein solches Material ist in DE 100 00 260 C1 nicht offenbart worden.

Die bloße Aktivierung von nicht definierten Heizelementen ohne Regelung oder Steuerung oder Angabe einer präzisen Temperatur, eines präzisen Druckes oder einer präzisen Preßzeit auf die großflächige Versiegelung der Heißversiegelung erlaubt in DE 100 00 260 C1 keine konstante thermisch aktivierte Stauchung und Projektion, weil keine Widerstandsdrähte der Heizelemente mit konstantem Durchmesser und Härte, Planebenheit oder glatter Oberfläche und keine präzise Temperatur und infolgedessen keine homogene Verteilung der Verformung und Temperatur entlang der großflächigen Heißversiegelung offenbart werden wie in Anwendungsbeispiel 2 der DPA 101 55 028.6-41. Der Isolierkörper in DE 100 00 260 C1 wäre auch dann funktionsuntauglich, wenn das eine Material des Dichtungsprofils (3) oder eine Unterscheidung dieses Material von (s)einem Versteifungsmaterial (10) offenbart worden wäre.

Für eine homogene Verteilung bzw. eine konstante plastische Verformung oder Stauchung des mindestens einen Exemplars senkrecht zu der in-vacuo Verbindung ohne anschließendem Versagen (s. Anwendungsbeispiel 2 und Abschnitt f1) in Anspruch 1 der DPA 101 55 028.6-41) ist bei der Herstellung insbesondere einer vakuumtauglichen Heißversiegelung, die großflächig sein soll, neben der Anwendung einer präzisen Temperatur T_{S}, eines präzisen Druckes P_{S} und einer präzisen Preßzeit t_{S}, aber das dazugehörige Material, aus dem die Heißversiegelung bestehen soll, anzugeben, weil sonst unsachgemäße Bedingungen angewandt werden. In DE 100 00 260 C1 werden die Heizkörper nur so "aktiviert", daß die versiegelten Flächen "erkalten", für ein Erstarren eines Versiegelungsmaterials nach seinem Aufschmelzen ist' dies aber unter der Maßgabe, daß keine präzisen Angaben, Steuerung oder Regelung zu T_{S}, P_{S} und t_{S} offenbart werden, zu wenig "Aktivierung".

Es ist deshalb auch nur konsequent, wenn die Isolierkörper in DE 100 00 260 C1 nicht nur für den unbelasteten Zustand, sondern gerade auch für den Zustand unter Belastung ungeeignet sind, ist doch die entsprechende Heißversiegelung der schwächste Teil des Isolierkörpers in DE 100 00 260 C1 (s. Spalte 2, Zeilen 49 - 55 in DE 100 00 260 C1).

Demgegenüber enthalten die in den Ansprüchen 10, 12, 15 und 16 beanspruchten VIPs in der DPA 101 55 028.6-41 bei einer Heißversiegelung eine konstante thermisch aktivierte Stauchung und Projektion, weil in Anwendungsbeispiel 2 nicht nur homogene T_{S}, P_{S} und t_{S} offenbart werden, sondern diese auch auf das entsprechende Material (i.e. Polyethylen, Nylon oder Teflon) bei geeigneten Widerstandsdrähten der entsprechenden Heizelemente abgestimmt wurden. Es versteht sich, daß nur die VIPs in DPA 101 55 028.6-41, nicht aber der Isolierkörper in DE 100 00 260 C1 eine Heißversiegelung mit dem Merkmal des beanspruchten Verfahrens gemäß Abschnitt f1) in Anspruch 1 der DPA 101 55 028.6-41 enthält, welches den VIPs in Ansprüchen 10, 12, 15 und 16 der DPA 101 55 028.6-41 verliehen wird. Demgegenüber taugt das in DE 100 00 260 C1 beanspruchte Verfahren nur zur Herstellung funktionsuntauglicher Isolierkörper und benötigt selbst hierfür noch zwei Arbeitsschritte (Ansprüche 9 und 10 in DE 100 00 260 C1).

### Ziel der Erfindung

Durch neue Vakuum-Verfahren wie automatisiertes thermisches Versiegeln, Schweißen in einer flüssigen Phase oder im Festkörper sowie kunstoffreies Verbinden durch Löten und anorganische Klebverbindungen in einem Vakuum werden neue in-vacuo Strukturen und VIP mit niedrigem oder optimiertem Kosten-Leistungsverhältnis für Energieflußbarrieren ("Wärmedämmung") in Transport, Gebäude und technischem Gerät offenbart. Erst die in-vacuo durchgeführte Füge- und Verbindungstechnik und die damit einhergehenden Freiheitsgrade in Produkt-Dimensionierung und Fertigungstechnik erlauben die aus DE 199 14 963 A1, DE 199 04 799 und DE 200 12 547 U1 als Vergleich herangezogenen und dort vakuumtechnisch unzureichend offenbarten und beanspruchten VIP und VIP-Verbünde. Erst der Einsatz neuer und automatisierter Vakuumfügeverfahren unter Einsatz ausgesuchter Widerstandsschweißverfahren wie eg. des Rollenschweißens oder das Laserschweißen und das Direkte Löten ermöglichen die Anwendung neuer VIP-Folienmaterialien wie hochschmelzende Metallfolien einschließlich Stahl, Titan und Tantal und damit den Zugang insbesondere zu Metallfolien-VIP und ganz generell zu kunststoffreien VIP-Folien ohne lösbare Vorrichtungen für eine Post-Vakuumherstellung zwecks Wärmeisolation, wie vielfach nur suggeriert wird. Erst der Einsatz neuer Randbedingungen für automatisierte Vakuumverarbeitungsverfahren erlaubt es die genannten Beschränkungen der Ansätze für eine wirkliche industrielle Produktion von VIP und anderen, notwendigerweise unter Vakuum gefertigten Strukturen und Produkten zu überwinden. Dabei werden neue Anwendungen von technisch verbesserten VIP mit höherer mechanischer, thermischer, chemischer und physikalischer Belastbarkeit ermöglicht. Es werden beliebige Strukturen einschließlich solcher mit komplexer und ggfs. filigraner Gestalt und mindestens einer Fügestelle wie zum Beispiel mindestens eine Schweißnaht unter den Bedingungen einer ganzheitlich unter bzw. in einem Vakuum automatisierten Fertigung möglich.

Ziel der Erfindung ist es, durch neuheitliches in-vacuo Fügen und den Einsatz besserer Einsatzwerkstoffe für in-vacuo gefertigte Produkte das Spektrum ihrer Vermartktbarkeit signifikant zu erhöhen, den Aufwand für die Bereitstellung eines Vakuums bei der Herstellung einer Produktionseinheit einer ganzheitlich unter Vakuum hergestellten Struktur zu reduzieren. Als Beispiel wird hier die Produktionseinheit einer VIP genommen, und der Stand der technischen Anwendbarkeit sowie der Rezyklierbarkeit der VIP, hier insbesondere die Rezyklierbarkeit ihrer Ummantelung, i.e. des Folienmaterials von VIP, erweitert, (i.e. verbesserte Anwendbarkeit und verbesserte Rezyklierbarkeit vs. Stand der Technik), worin die Produktionseinheit einer VIP ein oder mehrere Exemplare der VIP, in jedem Fall aber ein ganzheitliches Vielfaches N einer VIP sein soll. Zugrunde liegt der Erfindung die Ausweitung der Materialien für verbesserte Produkteigenschaften durch reduzierten Aufwand für die Herstellung des notwendigen Vakuums für die anschließende Herstellung von VIP sowie der Beschleunigung des Geschwindigkeits-bestimmenden in-vacuo Fügeschrittes während einer charakteristischen in-vacuo Relativbewegung während des in-vacuo Fügevorganges. Der entsprechend erweiterte Nutzen entsprechender Strukturen wie der Vakuumisolationspaneele erweitert somit ihren wirtschaftlichen Einsatz und umgekehrt die technische Tiefe an erweiterten VIP-Fertigungsverfahren und -methoden, die dafür erforderlich sind.

So wird unter anderem offenbart, wie es realisiert wird, daß eine Komplett-Umhüllung einer VIP aus Stahl zum Beispiel gegenüber Aluminium bei gleicher Wandstärke eine etwa achtmal geringere Leitfähigkeit liefert und auf diese Weise eine gewisse Lösung des Wärmebrückenproblems an den transversalen Ummantelungen einer VIP aus dem entsprechenden Material anbietet, ohne auf weitere neuheitlichen Material- und Fertigungseinsatz zurückgreifen zu müssen. Schließlich werden neuheitliche Fertigungsund Materialeinsätze für eine umfassende und vakuumgerechte Lösung des Wärmebrückenproblems bei erhöhter Schadenstoleranz der VIP und für signifikante Markterschließung durch VIP offenbart.

### Offenlegung der Erfindung

Unter in-vacuo-Fügen wird das in-vacuo-Verbinden und sonstiges in-vacuo-Zusammenbringen wie das Versiegeln mindestens eines ganzheitlich in einem Vakuum untergebrachten Vorproduktes mit nach Einfachheit und Hochgeschwindigkeits-Fügepotential ausgesuchten in-vacuo-Fügeverfahren verstanden.

Der Erfindung liegt die Aufgabe zugrunde, ein großtechnisches Vakuumfügen für ein industrielles in-vacuo Fügen individueller Strukturen bei niedrigem Stückkosten-Leistungsverhältnis (eg. in einer in-vacuo Fertigungskette) zu schaffen durch
a) ein definiertes Vakuum in einem Fügebereich in einer Vakuumkammer, welches ein Unterdruck-Gleichgewicht zu einem definierten Hintergrunds-Vakuum in der Vakuumkammer aufweist, und
b) eine in-vacuo Relativbewegung als vorangige Verfahrensvariable für eine aus Aufschmelz-Schweißnaht, Festkörper-Schweißnaht, Hart-Lötnaht, Weich-Lötnaht oder anorganischer Klebstoffverbindung bestehende in-vacuo Verbindung.

Für das im dreidimensionalem Raum ablaufende Verfahren gibt es eine unendliche Schar von senkrechten Ebenen zu einer Schweißnaht, in dem unendlich viele Ebenen enthalten sind, die zueinander senkrecht stehen. Es wäre also falsch, sich auf eine auf zwei senkrechte Ebenen eingeengte Denkweise zu kaprizieren und "zwei senkrechte Ebenen" als Argument für ein Limitierungskriterium zu betrachten. Auch sind in der vorliegenden Anmeldung Schweißnähte selbst räumliche Gebilde mit einer Mikrostruktur. Eine Reduktion einer Naht auf eine eindimensionale Linie wäre erfindungsfeindlich und irrelevant für die vorliegende Erfindung. Auch sei darauf hingewiesen, daß ein Vektor eine Richtung, einen Richtungssinn, einen Betrag und eine Lage im Raum enthält.

Ein definiertes Vakuum überdauert in dem offenbarten und beanspruchten Verfahren gemäß Anspruch 1 aufgrund ausgesuchter Methoden für das Fügen im Vakuum (s. Unteransprüche 3, 7 und 8) sowie aufgrund ausgesuchter Materialien für das entsprechende Fügen (vgl. Unteransprüche 21 bis 25) eine entsprechende in-vacuo Fügeaktion. Dafür werden sorgfältig ausgesuchte Fügeenergien' über eine wohlbegründete Selektion von Methoden für die Zuführung der entsprechenden Energieform offenbart. Diese Energieformen aber machen in Verbindung mit der Auswahl der Methoden für die Zuführung der entsprechenden Energieform die Kontrolle der Ausgasung in das Vakuum mit der resultierenden Kontrolle des beanspruchten Verfahrens erst möglich. Andere Fügeenergien würden das Verfahren unmöglich machen, darunter eine Konstanz einer Vordefinition eines Vakuums vor Durchführung des Verfahrens für ein Vakuum während der Durchführung des Verfahrens, somit insbesondere die in den Abschnitten c) und f1) - f3) des Anspruches 1 beschriebenen Merkmale des beanspruchten Verfahrens. Deshalb sind die Merkmale a) bis e) mit den Energieformen und dem Vakuumzustand und allen anderen Abschnitten des Anspruches 1 wie Merkmale f1 bis f3 des beanspruchten Verfahrens verbunden.

Das erfinderische und neuheitliche Verfahren besteht u.a. aus:
1. dem in einem Vakuum ganzheitlich ausgeführtem und "getter"-Material-freiem "Fügen" von Vorprodukten (s. Zeilen 1 - 2, Abstrakt),
2. "in einer Vakuumkammer eine ganzheitliche "Aussetzung" mindestens eines Exemplares mindestens eines Vorproduktes an ein definiertes Vakuum" (Verfahrensmerkmal in Abschnitt a) des Anspruches 1.), somit wird die Ausgasung unterschiedlicher Materialien in unterschiedlichen energetischen Zuständen berücksichtigt,
3. c) der in-vacuo Fügebreich enthält ein "Unterdruck-Gleichgewicht" mit dem definiertem Vakuum (Verfahrensmerkmal in Abschnitt c) des Anspruches 1.).

DE 40 15 895 C enthält dagegen:
1. die Verfahren, für die die Vorrichtung nach DE 40 15 895 C vorgesehen ist (vgl. Spalte 5, Zeilen 34 - 37; Spalte 6, Zeile 28 in Anspruch 1) einen Brenner für die Energiezufuhr und resultierende Verbindungsbildung entlang der Verbindungsstelle enthalten, während die Energiezufuhr und resultierende Verbindungsbildung entlang der Verbindungsstelle mit dem Verfahren nach DPA 101 55 028.6-41 aber Brenner-frei sind, die Vorrichtung nach DE 40 15 895 C deshalb inkompatibel mit dem Verfahren nach DPA 101 55 028.6-41 ist. Dies ist ein Grund, warum der Fügebereich in DE 40 15 895 C kein Unterdruck-Gleichgewicht mit dem Hintergrundsvakuum enthält.
2. eine Vorrichtung für das Schweißen unter Schutzgas offenbart (vgl. Spalte 5, Zeilen 63 - 66), welches ein Unterdruck-Ungleichgewicht zwischen Fügebereich und Hintergrundsvakuum gerade dann schafft, wenn bei Unterdruck nach DE 40 15 895 C verfahren wird.
3. über eine manuelle betriebene Fertigung (vgl. Spalte 5, Zeilen 20 - 25.und 38 - 42) hinaus keinen Antrieb offenbart, die eine Konstanz der plastischen Verformung oder Stauchung oder der Geschwindigkeit des mindestens einen Exemplars erlaubt, und Steuer- und Regelung auf Ventile beschränkt bleiben (vgl. auch Spalte 7, Zeilen 56 - 59 in Anspruch 17).
4. keine Relativbewegung enthält, insbesondere nicht mit den in den Abschnitten e) und f1) - f3) des Anspruches 1 beschriebenen Merkmalen des beanspruchten Verfahrens enthält.

Die Offenbarung im Ausführungsbeispiel 1 offenbart die Randbedingungen für die Anwendung diskreter Vakuum-Regime wie Grobvakuum und Hochvakuum im beanspruchten Verfahren nach Anspruch 1 (s. S. 16, Zeilen 4 - 29) und sie zum Beispiel in den Anwendungsbeispielen 10 und 13 auf das Hochvakuum bezogen weiter ausführt. Das in Anspruch 1 beanspruchte Verfahren wird deshalb in Abschnitt A des Anspruches 2 unter absoluter Rechtsgültigkeit weiter limitiert (s. a. Anhang zum Verfahren in (3), welches nicht für die Anwemdung eines Hochvakuums geeignet ist.) Demgegenüber enthält der Stand der Technik keine für ein Unterdruck-Gleichgewicht gemäß Anspruch 1 taugliche Vakua.

In diesem Zusammenhang soll auf die Offenbarung der Ausführungsbeispiele mit den Randbedingungen für die Anwendung eines Wertes im Vakuum-Regime von 10⁻¹² bis 0,95 bar im beanspruchten Verfahren nach Anspruch 1 verwiesen werden, in denen nachgewiesen wird, daß das in Anspruch 1 beanspruchte Verfahren unter absoluter Rechtsgültigkeit von Unteransprüchen weiter limitiert wird.

Es geht hier nicht um ein Druck-Regime, sondern um die Tatsache daß das Unterdruckgleichgewicht in Anspruch 1 einen diskreten Druck-Wert in einem enthaltenem Vakuumregime enthält. Voraussetzung hierfür sind beispielsweise die in den Ausführungsbeispielen 1, 10 und 13 offenbarten Randbedingungen für die Anwendung diskreter Vakuum-Regime wie Grobvakuum und Hochvakuum im beanspruchten Verfahren nach Anspruch 1 (s. oben). Druckschwankungen in einem Vakuum über einen diskreten Druckwert hinaus sind dagegen zwingende Konsequenz in den Verfahren, die mit den im Stand der Technik offenbarten Vorrichtungen betrieben werden.

In den unabhängigen Produktansprüchen 17, 19, 22 und 23 werden neuartige und erfinderische Vakuumisolationspaneele beansprucht, worin das beanspruchte Verfahren in den Ansprüchen 1 bis 14 eine Möglichkeit ist, diese erfinderischen und neuen VIP herzustellen, während die übrigen der Produktansprüche von den unabhängigen Produktansprüchen abhängige Produktansprüche sind. Auch kann der Stand der Technik nicht den Begiff "Relativbewegung" für sich in Anspruch nehmen, nur wenn sich etwas relativ zu etwas anderem bewegt, weil der Begriff "Relativbewegung" die Beweglichkeit sowohl von Exemplar als auch von Fügeapparatur voraussetzt, sofern nicht anders gekennzeichnet. Dies ist im Stand der Technik nicht der Fall.
**Bild 1** Anschnitt des Querschnittes einer Vakuumisolationspaneele mit **1** Lasche, **2** in-vacuo hergestellter Schweißnaht, **3** Ummantelung aus einer Folie und **4** Dämmkern aus eg. pyrogener Kieselsäure-Platte unter einem Vakuum.
**Bild 2** Draufsicht auf eine Vakuumisolationspaneele mit **2** in-vacuo hergestellter Schweißnaht, **3** Ummantelung des VIP-Kerns mit Füllstoff unter einem Vakuum, **5** unter Normalatmosphäre gefertigte und über **3** hinausstehende Lasche der Breite x₁ und **6** aus dem in-vacuo Schweißvorgang hervorgehende Lasche der Breite x₂.
**Bild 2 - 2** Schematisch vergrößerte Gegenüberstellung von (i) (oben) **70** Kunststoff-Verbundfolien-Versiegelung mit **71** Gas-Diffusionswegsweg durch eine **79** HDPE-Heißsiegelnaht mit einer **80** Standardbreite mit einem Wert von 10 mm, welche als Standard-Folie für die Fertigung einer Vakuumisolationspaneele verwandt wird, worin ein Folienaufbau enthalten ist, worin der Folienaufbau eine **72** O-Nylon (Wandstärke 15 µm), **73** Trockenlaminierung ("dry lamination"), einen **74** VM PET-Film (Wandstärke 12 µm), eine **75** erneute und zweite Trockenlaminierung ("dry lamination"), **76** Aluminiumfolie mit einer Wandstärke von 7 µm und einer durchschnittlichen Anzahl von sogenannten "pin-holes" von 12 "pin-holes" pro Quadratmeter, i.e. 12/m², **77** erneute und dritte Trockenlaminierung ("dry lamination"), und einen **78** HDPE-Film mit einer Wandstärke von 50 µm und einem Kristallitschmelzpunkt von 126 - 136° C enthält, worin dieser HDPE-Film zu einer maximalen Anwendungstemperatur von 80°C über eine Anwendung einer Vakuumisolationspaneele in einem Zeitraum von mehreren Jahren erlaubt, vs. (ii) (unten) **81** Diffusionsweg-freie Metallfolienversiegelung, worin die Diffusionsweg-freie Metallfolienversiegelung hier Diffusionsweg-frei ist aufgrund der Abwesenheit einer Verwendung von kunststoffhaltigen Materialien in einem für die Diffusionsweg-freie Metallfolienversiegelung verwendeten Folienmaterial wie zum Beispiel eine **82** pin-hole-freie Stahlfolie mit einer Wandstärke mit einem Wert von ≥ 15 µm (vgl. auch weiter unten).
**Bild 2 - 3** Problematik der Verwendung von Standard-Kunstoffverbundfolien als einen Folienwerkstoff für eine Vakuumisolationspaneele (VIP), worin der Folienwerkstoff eine Aluminiumfolie mit einer Wandstärke von 7 µm enthält, hier mit (i) (oben) **83** entsprechender Oberfolie und **84** entsprechender Unterfolie, einem **85** Füllwerkstoff und zweier resultierenden Schnitte durch die entsprechende Heißsiegelnaht **79** mit der Standard-Laschen- oder Flanschbreite **80** von 10 mm sowie Andeutung der zwei grundsätzlichen Probleme via **86** Gasdiffusion durch die Heißsiegelnaht und **87** Gaseindringung beziehungsweise Gasmigration beziehungsweise Gasströmung via "pin-hole"-Perforation in den entsprechenden einer Atmosphäre mit einem höheren Druck zugewandten VIP-Oberflächen sowie (ii) (unten) durch den Nullpunkt gehender Graph der Durchdringungsrate als Funktion der "pin-hole"-Größe für eine Standard-Kunststoffverbundfolie einer Standard-Vakuumisolationspaneele, worin die Standard-Kunststoffverbundfolie eine 7 µm dicke Aluminiumschicht enthält.
**Bild 2 - 4** Schematische Darstellung (i) (oben) einer **90** typischen Öffnung für geregelte Gasaustrittsströmung aus einem Innenraum einer Vakuumisolationspaneele während einer erfindungsgemäßen in-vacuo Evakuierung des Innenraumes der Vakuumisolationspaneele vor einem Verschließen durch eine der erfindungsgemäßen Varianten einer in-vacuo Verbindungsbildung gemäß des in Anspruch 1 gelehrten Verfahrens, worin die Vakuumisolationspaneele zum Beispiel eine **88** Oberfolie aus Edelstahl und eine **89** Unterfolie aus Edelstahl mit einer Wandstärke mit einem Wert ≥ 15 µm enthält, in jedem Falle aber ein Folienmaterial enthält, welches erlaubt, daß diese typische Öffnung eine stabile Form während der in-vacuo Evakuierung beibehält, worin die Oberfolie eine Außenkante mit einer Bogenlänge der Oberfolie, ¹B2 (**91**), entlang der Verbindungslinie einer in-vacuo Verbindung und die Unterfolie eine Bogenlänge der Unterfolie, ¹B1 (**92**), entlang der Verbindungslinie der in-vacuo Verbindung enthält, worin der entsprechende Wert von ¹B2 (**91**) mit dem entsprechenden Wert von ¹B1 (**92**) identisch ist, i.e. ¹B2 (**91**) = ¹B1 (**92**), worin (Mitte) weiter die Unterfolie eine **93** Schalenform enthält, worin die Schalenform eine vom Innenraum weggekippte Außenkante **94** einer Lasche oder eines Flansches der Unterfolie enthält, worin die Standard-Laschen- oder Flanschbreite **80** hier schraffiert dargestellt ist und die Außenkante einen vom Innenraum wegführenden Bogen enthält, der zwar nach Verschließen der Vakuumisolationspaneele komplett in der Zeichenebene liegt, gegenüber seiner Konfiguration nach dem Verschließen aber eine aus der Zeichenebene herausführende als auch eine in der Zeichenebene von der entsprechenden Horizontalen wegführende Bewegungsrichtung enthält, während die Oberfolie in der Regel nur einen von der in der Zeichenebene enthaltenen Horizontalen vom Innenraum weg- und hochgebogenen Bogen der Oberfolie (mit der Bogenlänge ¹B2 (**91**)) vor Verschließen der Vakuumisolationspaneele enthält. **Bildes** **2 - 5** zeigt (unten) den entsprechenden Querschnitt der Vakuumisolationspaneelenöffnung in einer Preßvorrichtung mit (links) der **90** typischen resultierenden Öffnung der Vakuumisolationspaneele zwischen oberem und unterem Preßwerkzeug vor entsprechendem Verschließen und (rechts) dem resultierendem Querschnitt dieses Bereichs der Vakuumisolationspaneele nach Verschließen in und mit eben dieser Preßvorrichtung, aber noch vor der in-vacuo Verbindungsbildung, worin die Pfeile die Bewegungsrichtung der Presswerkzeuge während des in-vacuo--Schließvorganges der Vakuumisolationspaneele angeben.
**Bild 2 - 5** Schematische Darstellung verschiedener Querschnitte von durch in-vacuo Laser-Schweißen-und-Schneiden hergestellten Vakuumisolationspaneelen, worin diese Vakuumisolationspaneelen eine "pin-hole"-freie Edelstahlfolien-Umhüllung mit einer Wandstärke von 70 µm in der jeweiligen Ober- und Unterfolie sowie eine Laserschweißnaht L enthalten, worin die Vakuumisolationpaneelen **95**, **97** und **99** unten einen Flansch oder eine Lasche als planparalelle Verlängerung einer Oberfolie und die Vakuumisolationpaneelen **96**, **98** und **99** oben eine Symmetrie mit einem mittig angeordneten Flansch oder Lasche enthalten, worin die Vakuumisolationpaneelen **97** bis **99** zusätzlich eine in-vacuo hergestellte Trennaht T enthalten, die in einem Abstand D zur Laserschweißnaht L die entsprechenden Flansche oder Laschen abtrennte. N.B. In den Vakuumisolationpaneelen **95, 97** und **99** unten bilden die jeweiligen Unterfolien eine Schale, die die jeweiligen durch eine Schraffur repräsentierten Füllwerkstoffe aufnehmen, während diese Aufnahme der entsprechenden Füllwerkstoffe in den Vakuumisolationpaneelen **96, 98** und **99** oben von der jeweiligen Ober- und Unterfolie gleichermaßen vorgenommen wird.
**Bild** 3 Charakteristische in-vacuo Relativbewegungen als Geschwindigkeits-bestimmender Schritt in einer in-vacuo Fertigungskette mit dem in-vacuo Fügen einer Anzahl N von Vorprodukten, worin N gleich oder größer 1: a) fixierte vakuumtaugliche Fügeapparatur **10,** bewegliches erstes Vorprodukt **11a** und bewegliches zweites Vorprodukt **11b**, bewegliche in-vacuo Verbindungsstelle **12** und Richtungsvektor der in-vacuo Relativbewegung, hier der Vorprodukte **11a** und **11b**; b) bewegliche vakuumtaugliche Fügeapparatur **14,** fixiertes erstes Vorprodukt **15a** und fixiertes zweites Vorprodukt **15b,** fixierte in-vacuo Verbindungsstelle **16** und Richtungsvektor **17** der in-vacuo Relativbewegung der Fügeapparatur **14;** c) bewegliche vakuumtaugliche Fügeapparatur **18**, bewegliches erstes Vorprodukt 19a und fixiertes zweites Vorprodukt **19b,** bewegliche Projektion **20** und Richtungsvektor **21** der in-vacuo Relativbewegung der Fügeapparatur **17**, worin der Betrag des Richtungsvektors **21** limitiert wird von der Höhe der Projektion **19**; der umgekehrte Fall einer fixierten Fügeapparatur in Fall c) ändert den Betrag des Richtungsvektors **21** nicht. Dies ist ein prinzipieller Unterschied zum Betrag der Richtungsvektoren **13** und **17,** die aus Platzgründen, darunter wegen der Laschen einer VIP, verschieden sind.
**Bild 3 - 2** Vakuumtaugliche Fügeapparatur zur Ausführung eines in-vacuo Laser-Fuge-Verfahrens mit außerhalb einer Vakuumkammer angebrachten **50** Laser (eg. Hochleistungsdiodenlaser oder ND:YAG-Laser), **51** Laser-Fokussierung, **52** Laser-Linearantrieb, **53** Laser-Linear-Führungseinheit, **54** licht-transparentem und vakuumtauglichem Einkoppelfenster aus einem brechungsarmen Glasmaterial ggfs. mit einer Beschichtung aus einem reflektionsfreien oder reflektionsarmen Beschichtungsmaterial in einem **66** Vakuumkammerwandeinlaß für das licht-transparente und vakuumtaugliche Einkoppelfenster, durch das ein Laserstrahl aus einem **67** Ausgang des Laserstrahls aus der Laser-Fokussierung in eine **69** Ebene für ein in-vacuo Verschweißen in einem in-vacuo Fügebereich eingelassen wird, **55** Vakuumkammerwand eines abhebbaren Vakuumkammerdeckels, **56** oberes Presswerkzeug, **57** Kühlmittelkanal, **58** unteres Presswerkzeug, **59** Auflagetisch für eine Vakuumisolationspaneele (VIP), **60** Vakuumkammerboden, **61** Dichtflansch, **62** Antrieb für das untere Presswerkzeug und **63** Kanal zur Gewährleistung einer kontaktfreien Bildung einer Schweißnaht und Auffangvorrichtung zum Auffangen von Schmelztropfen in einem anschließendem Trennvorgang durch Schneiden zweier verschweißter Folien mit einem Laseraufschmelzen der zwei verschweißten Folien und in-vacuo Abtropfen von einem aufgeschmolzenen Folienmaterial. Bereich **64** deutet eine durch eine vertikale Vakuumkammerwand ge-stützte und aus einer vertikalen Verbindung bestehende Anbringung von **52** Laser-Linearantreib und **53** Laser-Linear-Führungseinheit mit einer vertikalen Vakuumkammerwand direkt unter dem Bereich **64** an, worin mindestens die vertikale Verbindung im Bereich **64** und die vertikale Vakuumkammerwand eine Inkompressibilität enthält. Der Laserstrahl enthält einen **68** Laserstrahlweg mit einem Abstand zwischen dem Ausgang **67** und der Ebene **69**, worin der Abstand einen konstanten Wert (eg. im Bereich von 50 bis 400 mm) enthält, worin der Wert einen internen Abstand zwischen dem Vakuumkammerwandeinlaß und der Ebene enthält, worin der interne Abstand einen internen und ggfs. variablen und ggfs. von einem Druckdifferential zwischen einem Umgebungsatmosphärendruck und einem Hintergrundsdruckwert in der Vakuumkammeratmosphäre abhängigen Abstandswert (eg. in einem Bereich von 100 bis 300 mm) enthält, worin der ggfs. variable Abstandswert eine Abstandsabweichung von einem konstanten Abstandswert ohne Effekt auf den konstanten Wert des Laserstrahlweges enthält.
**Bild 3 - 3** Vakuumtaugliche Fügeapparatur zur Ausführung eines in-vacuo Laser-Füge-Verfahrens, hier mit Querschnitt durch die Vakuumkammer entlang des in **Bild 3-2** gezeigten und in der rechten Bildhälfte reproduzierten vertikalen Längsschnittes derselben Vakuumkammer sowie mit dem in **Bild 3-2** nicht dargestellten Antrieb **65** für das obere Presswerkzeug **56** und einen **100** Zwischenabsaugkanal für ein Zwischen-Evakuieren eines Differentialvakuumkammervolumes, wie es auch für eine Leck-freie Kraftübertragung von einem elektromechanischen oder pneumatischen oder hydraulischen Antrieb außerhalb der Vakuumkammer auf das mindestens eine Exemplar in der Vakuumkammer über ein Gestänge durch ein abgedichtetes Differentialvakuumkammervolumen einer Vakuumkammerwand hindurch angewandt wird worin das Zwischen-Evakuieren ein Druckverhältnis mit einer Umgebungsatmosphärendruck von ≥ 010⁻³:1 und ein Druckverhältnis mit dem Hintergrunds-Druckwert von 1: p_{H} mit p_{H} < 1 enthält ( s. Anspruuch 2).
**Bild 4** Zur Vakuumkammer mit Kammerwand **30** und lichttransparentem Einlaß **31** externe Laser-Apparatur **32** mit Laserstrahl **33** und VIP **34**, Gegenlager **35**, Kühlfallen-wirkende VIP-Presse **36**, Kühlfallen-wirkende Laschenpresse **37**, Lasche **38** und Kühlsammler für abtropfendes Laschenmaterial **39**.
**Bild 5** Verklebte Lasche **9** einer VIP mit Kern **7** und Kleber **8.**
**Bild 6** Konstruktion einer VIP **27** mit umfassend geschlossenen Keramikrahmen **25** und vakuumdichter Verklebung **24.**
**Bild 7** Intra-Dämmkern-Verbinder beziehungsweise -Abstandshalter **26** in einem von Oberfolie **27a** und Unterfolie **27b** umschlossenen VIP-Innenraum **28** mit kunststoffreien Klebern **29a,** Oxidgemischloten **29b** und Kernmaterialien aus pyrogener Kieselsaure (Pulver oder Plattenform) **28b,** Aerogelen **28c** und/oder Hochvakuum **28d** oder einem Gradientenwerkstoff **28e** (s. Anspruch 18) bestehende VIP-Innenräume **28** sowie metallischen Lötfolien **29c.**
**Bild 8** In-vacuo Abarbeiten eines Stapels **40** identischer Vorprodukte einer offenen VIP mit Dämmkern in einem Zufuhrbereich **41** einer Vakuumkammer **46** durch in-vacuo Fügen via alternierender in-vacuo Relativbewegungen **42a** und **42b** einer in-vacuo Fügeapparatur **14** in einem in-vacuo Fügebereich **43** und anschließender Wieder-Aufbau eines Stapels **44** identischer in-vacuo gefügte Isolationspaneele mit einem identischen Vakuum in einem Lagerbereich **45** der Vakuumkammer **46.** Die fett eingetragenen Pfeile geben der Arbeitrichtung in der Fertigungskette mit den Rollenlagern **49** wieder, während die dünnen Doppelpfeile die Reziprokbewegung der auf dem vorletzten Niveau arbeitenden Greifer **47** des Stapels **40** und der auf dem untersten Niveau operierenden Greifer **48** des Stapels **44** andeuten.

### Ausführung 1 : Vakuum-Qualitätskontrolle für in-vacuo Fügen

Es wird auf die Verfahrensansprüche 1 bis 14, auf die Vorrichtungsansprüche 15 und 16 sowie auf die unabhängigen Produktansprüche 17, 19, 22 und 23 hingewiesen.
ad a): Es wird eine Vakuumkammer, in der die notwendigen Vorrichtungen für ein in-vacuo Fügen oder Verbinden und mindestens ein zu verbindendes oder zu fügendes Objekt innerhalb eines Fügebereichs aufgenommen sind, auf ein Vakuum (mit eg. einem Wert im Grob-, Fein- oder Hochvakuum) abgepumpt. Dabei stellt eine Vakuumkontrolle den Sollwert des sich einzustellenden Vakuumdruckwertes anhand eines Mikroprozessor-ge-steuerten Abgleichs mit dem Ist-Wert des Vakuumdruckes sicher, damit auch bei einer großen und ggfs. variierenden Anzahl von Vorprodukten oder Exemplaren sowie entsprechender Ausgasung- und Desorptionsprobleme des mindestens einen Vorproduktes die Verabeitung via Verbinden und/oder Fügen in einem definierten Vakuum stattfindet, worin das definierte Vakuum in einem Hintergrund durch *remote vacuum sensors* geregelt wird.

Erfindungsgemäß werden die Quellen einer unkontrollierten Zusammensetzung eines Vakuums in einem Fügebereich einer Vakuumkammer derart einer Kontrolle unterworfen, daß ein Gleichgewicht zwischen dem Zustand der Vakuumatmosphäre in diesem Fügebereich und einem definierten Vakuum in dem Hintergrund(sbereich) der Vakuumkammer hergestellt wird. Nach Erreichen eines dynamischen Gleichgewichtes zwischen dem Fügebereich und dem Hintergrund(druck) der entsprechenden Vakuumkammer ist der Druck und die Zusammensetzung der Atmosphäre des Fügebereiches, der das entsprechende Vorprodukt (Struktur, Behältnis, Behälter Rezipient, Tasche) enthält, gleich oder annähernd gleich mit dem druck und der Zusammensetzung der Hintergrundatmosphäre der entsprechenden Vakuumkammer.

### Entsprechende Ouellen vor der Füge-Aktion sind:

a- große Oberflächen-zu-Volumen-Verhältnisse des Vorproduktes (cf. VIP-Kernmaterial)
b- kunststoffhaltige Strukturmaterialien
c- Wasser auf kunststoffhaltigen Strukturmaterialien (eg. VIP-Ummantelungsoberfläche)

### Entsprechende Quellen während der Füge-Aktion sind:

d- Ausgasung kunststoffhaltiger Verbindungsmaterialien bei Raum-/Umgebungstemperatur
e- Verdampfungsproblem durch überhitzte bzw. excessiv ausgasender in-vacuo Verbindungen
f- Plasma bei 10⁻³ bis 10⁻¹ mbar und angewandten Spannungen > 50 V

### Entsprechende Quellen vor und während der Füge-Aktion sind:

g- hohe Stückzahl unter Maßgabe von a - f
h- kunststoffhaltige Fügeapparatur-Materialien, insbesondere für Geräte mit einer Kühlflüssigkeit
i- Hydraulik inklusive Schlauchmaterialien und vakuumtaugliche Kraftübertragung externer Antriebe
j- Reibung durch Transport

### Ausgasungs-Quellen a bis c: in-vacuo Vorprodukt-Vorbehandlung

Erfindungsgemäß werden Vorprodukte vorgewärmt, damit diese an auf Oberflächen adsorbierte Feuchtigkeit in einer kontrollierten und beschleunigten Rate desorbieren und an das Vakuum der Kammer abgegeben und dann ausgepumt, ggfs. durch eine Rezirkulierungsmaßmahme trocken der Vakuumkammer zurückgeführt. Besonders bedeutsam ist diese Ausheizung an Vorprodukten mit großem Oberflächen-zu-Volumenverhältnis wie der (mikro)poröse Füllstoff für eine Vakuumisolationspaneele. Im Fall einer VIP ist der Grad der Ausheizung adsorbierter Feuchtigkeit entscheidend über ihr Isolationsvermögen in der ent-sprechenden Anwendung. Die Auf- und Ausheizung ist bei kunststoffhaltigen Strukturmaterialien besonders effektiv, weil kunststoffhaltige Strukturmaterialien besonders hygroskopisch sind, wenn dieser Kunststoff wie eg. bei eine VIP-Ummantelungsoberfläche die äußere Schicht einer Verbundfolie bildet.

Zur Aufheizung werden die auszuheizenden Vorprodukte in einen Trockner gebracht oder auf eine Heizplatte positioniert und die ausgeasenden Stoffe direkt abgesaugt. Da während einer Vorbereitung(sphase) eines in-vacuo Fügens keine atmosphärische Druckkraft von außen auf der Ummantelungs-Folie der VIP lastet, ergibt sich bei geeigneter Dimensionierung der Folie ein Spalt zwischen Dämmfüllkern und Folie, der das Abpumpen der Gase aus dem Dämmfüllkern erleichtert, wodurch sich eine Beschleunigung der notwendigen Abpumpgeschwindigkeit und eine signifikante Reduzierung der notwendigen Abpumpzeit zum Erlangen eines gegebenen Vakuums in eben diesem Dämmfüllkern gegenüber dem Abpumpen von einer unter Normalatmosphäre abgepumpten und gefertigten Stahlgehäuse-VIP mit eventuell sehr aufwendigem Rundverbund (cf. DE 42 14 002) ergibt, und zwar von heute bis zu mehreren Stunden auf erfindungsgemäße Abpumpzeiten < 1 Minute. Unter "geeigneter Dimensionierung" wird hier eine minimale Formstabilität der Ummantelungsfolie bei entsprechender Überlänge der Ummantelungsfolie bezogen auf die Abmessungen des Dämmfüllkerns verstanden, worin diese Überlänge durch Falten und/oder Falten unter Laschenbildung nach erfolgtem Abpumpvorgang für eine glatte VIP-Ummantelungsoberfläche berücksichtigt wird. Die eingesparte Abpumpzeit t_{A} ist dabei umgekehrt proportional zu den Abmessungen des sich so ergebenen Spaltes, hier insbesondere der Querschnittsfläche dieses Spaltes, A_{S}.

Dieser Spaltvorteil wirkt beim Abpumpen mit und ohne dynamischen Druckausgleich zwischen Kern und Vakuumkammeratmosphäre und ist umso effektiver, umso länger der längste Evakuierungsweg eines entsprechenden "VIP-Systems" ist. Gegenüber einer Evakuierung über einen Flanschanschluß, bei der das VIP-Stahlgehäuse den Dämmfüllkern fest umschließt und in der Regel keinen entsprechenden Spalt zuläßt, wirkt der in-vacuo Spaltvorteil insbesondere im Fein- und speziell im Hochvakuum, da die Stoßrate von Gaspartikeln mit den Wandungen zu evakuierender Körper mit der mittleren freien Weglänge der Gaspartikel, somit mit steigendem Unterdruck (Vakuum) steigt. Ursache ist der so erzwungene Weg des abzupumpenden Gases durch das Füllstoffmaterial der VIP. Gegenüber unendlich langen Zeiten bei der Evakuierung einer Stahlgehäuse-VIP unter Normalatmospäre über einen Flansch (cf. DE 42 14 002) ergeben sich somit hohe Evakuierungsgeschwindigkeiten und hohe Meßgenauigkeiten hinsichtlich der Abschätzung des VIP-Innendruckes anhand der Druckes in entsprechenden Vakuumkammern. Der freie Gasaustritt ermöglicht erst die Wirtschaftlichkeit von VIP mit Hochvakuum-Innenraum bei kunststoffreier Ummantelung (rein metallisch oder Metall-Keramik-Verbünde, s. Ausführungen weiter unten).

Um das definierte Vakuum einer Vakuumkammer, die direkt an ein Vakuumpumpensystem angeschlossen ist und in der ein entsprechender Betriebsdruck gemessen wird, auch im Innenraum einer mit einem Dämmstoff gefüllten VIP zu erreichen, bedarf es der Einstellung eines dynamischen Druckgleichgewichtes mit dem Druck im Innenraum der teilweise geschlossenen und mindestens an einer Seite über eine Lasche offenstehenden VIP. Für eine gegebene Temperatur ist die Haltezeit t_{H} zur Einsstellung dieses Gleichgewichtes direkt proportional zur Größe der VIP und umgekehrt proportional zur Porengröße des Füllstoffmaterials, i.e. je feiner die Poren, desto länger die Haltezeit bei einer gegebenen VIP-Abmessung. Beispiel: bei einer VIP mit einer Querschnittsfläche von einem Quadratmeter und einer transversalen Wandstärke von 2 cm unter Verwendung pyrogener Kieselsäureplatten mit einer Porengröße von 0,5 mm beträgt zur sicheren Erlangung eines Innendruckes P_{VIP} = 4 mbar nach Erreichen dieses Wertes in der Vakuumkammer t_{H} = 1 min, bei entsprechender Wandstärke von 4 cm ist t_{H} = 2 min etc..
Es versteht sich, daß die hier aufgezeigten Vorteile der Vorprodukt -Vorbereitung ein kostengünstiges in-vacuo Fügen einer entsprechend hohen Stückzahl erst ermöglichen. Dies liegt nicht zuletzt an der Tatsache daß die hier dargestellte in-vacuo Vorprodukt-Vorbereitung eine "getter"-Material-freie Fertigung hohe Stückzahlen ermöglicht.

### Ausgasungs-Quellen d bis f: kunststoffreie Verbindungsmaterialien, Kühlfallen, Plasmaschutz, Unterdruck-Gleichgewicht

Kunststoffhaltige Struktur- und/oder Verbindungsmaterialien stellen im Vakuum bereits bei Raum-/Umgebungstemperatur ein signifikantes Ausgasungsproblem dar. Beim Verschweißen einer Verbundfolie im Temperaturbereich um 100° C (cf. Ausführung 2) entsteht deshalb im Vakuum leicht ein "Qualm" beim "Verschmelzen". Ein "Gleichgewicht" in Druck und Zusammensetzung eines Vakuum (beziehungsweise im Wert eines Unterdruckes) zwischen dem in-vacuo Fügebereich und dem hintergrund einer Vakuumkammer für in-vacuo Fügen ist deshalb am einfachsten durch Verwendung kunststoffreier Strukturmaterialien zu erzielen. Hierzu zählen:
komplett Metall
komplett Keramik
Metall-Keramik-Verbund
(s. Ansprüche 10 ff.), um das in-vacuo Fügen frei von "getter"-Materialien auszuführen. Mit Verbundfolie ist der Einsatz von"getter"-Material notwendig, wenn keine anderen Vorkehrungen getroffen werden.

Auch beim in-vacuo Fügen von Vorprodukten aus kunststoffreien Strukturmaterialien bilden überhitzte oder excessiv ausgasende in-vacuo Verbindungen potentielle operative Ausgasungs-Quellen oder Verdampfungsprobleme während der Füge-Aktion. Dann wird das in-vacuo Fügen mit Kühlfallen gelöst. Bei einer konstanten Vorschubgeschwindigkeit zwischen der vakuumtauglichen Fügeapparatur und dem mindestens einen Exemplar parallel werden vorzugsweise lokal mitgeführte Kühlfallen beim in-vacuo Fügen eingesetzt, bei einer konstanten Verformung oder Stauchung des mindestens einen Exemplars werden die Kühlfallen vorzugsweise in Form von Balken entlang der gesamten Schweißnaht eingesetzt. Zur Vermeidung von Gasentladungen werden bei Betriebsdrücken mit einem Wert im Bereich von 10⁻³ bis 10⁻¹ mbar nur Spannungen < 49 V angewandt beziehungsweise auf unter 49 V angewandte Spannungen zurückgefahren (s. "Paschenkurve" in A. Rutscher und H. Deutsch, Plasmatechnik - Grundlagen und Anwendungen). Mit lokalen Sensoren und Mikroprozessoren werden im Fügebereich die in-vacuo ange wandten Spannungen unterhalb dieses Wertes gehalten, wenn die Kühlfallen lokale Betriebsdrücke im Bereich von 10⁻³ bis 10⁻¹ mbar nicht verhindern.

Es versteht sich, daß die hier aufgezeigten Vorteile des in-vacuo Einsatzes von Kühlfallen beim Fügen mit in-vacuo Schweißverfahren, hier insbesondere für das in-vacuo Aufschmelz-Schweißen, sowie Plasma-schutz und eventueller Einsatz kunststoffreier Verbindungsmaterialien das System aus Hintergrund und Fügebereich der Vakuumkammer sensibel machen für eine Qualitätskontrolle des Vakuums vor und während der Fertigung. So werden grundsätzlich ausgasungsarme Materialien für Fügeapparatur und Fügegeräte ausgesucht und letztere so gefertigt, daß sie eine relativ geringe Oberfläche beziehungsweise ein geringes Oberflächen-zu-Volumen Verhältnis aufweisen. Energietransferierende Geräte wie Rollen- und andere Elektroden oder Reibschweißflächen werden durch ein flüssiges Kühlmedium gekühlt, welches ggfs. einem an ein Kühlaggregat angeschlossenes Kühlkreislauf angeschlossen ist. Die Hydraulikschläuche und beweglichen Teile sowie Kühlschläuche werden aus metallischen Oberflächen (eg. aus Stahl, OHC-Kupfer, Aluminium) gefertigt, die dem Vakuum der Vakuumkammer ausgesetzt sind. Reibung durch Transport wird durch Schwebetransport mit kontrollierten (Kühl)Systemen ausgeführt, sodaß unter Maßgabe der hier aufgezeigten Vakuumkontrolle konstante Vakuumzustände in der entsprechenden Vakuumkammer auch bei einer hohen Stückzahl via in-vacuo Fügen gewährleistet sind.
Ausführungsbeispiele für das Verfahren nach Anspruch 1 mit einem Einfrieren eines einzigartig kontrolierten Unterdruck-Gleichgewichtes in einem Hochleistungsprodukt sind gegeben in Anspruch 3.A für das Evakuieren einer tiefgezogenen VIP-Schale und in Anspruch 3.B für das Strecken einer VIP-Öffnung zwecks anschließender Verformung eg. gemäß Anspruch 2.

Vakuumtaugliche Kraftübertragung externer Antriebe eg. für Preßwerkzeuge wird grundsätzlich über ein Gestänge mit einer mehrfach gedichteten Flanschdichtung ausgeführt, wobei jeweils zwischen den Dichtungen (eg. Kolbenstangendichtungen) eine Differentialvakuumkammer vorhanden ist. Diese wird durch eine separate Vakuumpumpe auf einen Druck mit einem Wert im Bereich von 10⁻⁰ bis 10² mbar abgepumpt. Hierdurch wird die Druckdifferenz zwischen Umgebung der Vakuumkammer und dem Hintegrund der eigentlichen Vakuumkammeratmosphäre, in der das neue Verfahren ausgeführt wird, um einen Faktor von bis 1000x verringert, wodurch die bei einem Leck der inneren (Kolbenstangen)Dichtung möglicherweise eindringende Gasmenge um den gleichen Faktor reduziert wird und so neben einem laufenden Vakuumpumpenstand für die Vakuumkammer eine weitere unabhängige Kontrolle auf das Unterdruck-Gleichgewicht gemäß Anspruch 1 ausgeübt (s.a. Anspruch 2.).
Auf diese Weise werden die Ausführungsbeispiele des Verfahrens nach Anspruch 1 mit einem konstanten Vektor für plastische Verformung oder Stauchung gemäß Anspruch 2.A für eine Leck-freie Kraftübertragung und gemäß Anspruch 2.B für ein zusätzliches Falten-freies Aneinanderpressen von mindestens zwei Folien ausgeführt.

### Ausführung 2: Selektive "Verschmelzung" via in-vacuo hergestellter Projektion

Der Erfindung liegt die Aufgabe zugrunde, eine reproduzierbare Schweißnaht entlang ihrer Ausdehnung auf einer Verbundfolie einer VIP-Ummantelung durch ein in-vacuo-Schweißen zu erzielen.

Die Lösung der Aufgabe wird durch eine Variation des Projektionsschweißens (s. Tabelle 1 auf der übernächsten Seite) erzielt, worin in-vacuo eine Projektion in die Lasche einer VIP-Ummantelung mit Widerstandsschweißnähten eingedrückt und durch selektives Aufschmelzen bei T >T_{S(L)}, worin T_{S(L)} = Schmelztemperatur der niedrigst-schmelzenden Folienkomponente (zum Beispiel Polyethylen, Nylon oder Teflon) in der äußeren Schicht, und eine Festkörperaufheizung bei T <T_{S(H)}, T_{S(H)} = Schmelztemperatur der höchstschmelzenden Komponente (zum Beispiel Aluminium) durch Vertiefung, i.e. weiterer Stauchung versiegelt wird, worin die Projektion aus der aus einer linearen Naht, einem Maschennetz und einem aus rechtweckigen, dreieckigen, vieleckigen oder regelosen Maschen bestehenden Netz bestehenden Gruppe ausgesucht wird. Die Herstellung von VIP aus kunststoffhaltigen VIP-Ummantelungsfolien mit einer äußeren Schicht aus einem thermisch versiegelbaren Stoff wie zum Beispiel Polyethylen, Nylon oder Teflon mit relativ niedrigen) Schmelzpunkt und einer im Innern des transversalen Querschnittes enthaltenen Gas-Barriereschicht aus Aluminium wird so ausgeführt, daß für ein Versiegeln mit einer relativen Sicherheit (mindestens beziehungsweise in der Regel) zwei (2) Folien auf einem linearen Gegenlager übereinandergelegt werden, daraufhin die Vakuumkammer, in der sich das Gegenlager befindet, auf ein Vakuum mit einem Wert im Bereich vom 0,95 mbar bis herunter auf 10⁻¹² mbar evakuiert wird, welches sich dann auch im Kern der entsprechenden VIP nach einer der Haltezeiten gemäß Ausführung 1 einstellt, daraufhin durch Zusammenpressen (eg. via Preßluft) des (in Preßrichtung ggfs. beweglichen) Gegenlagers (das selber eine Schweißschiene sein kann) mit einer (ggfs. beweglichen) Schweißschiene unter den so gewählten Bedingungen eines Vakuums bei einer Temperatur eg. T_{S} = 140°C während einer Dauer von eg. t_{S} = 4 Sekunden und unter einem Druck P_{S} = 1 kg/(cm Schweißschiene) (die größer sein kann als die zu verschweißende Fläche) die entsprechende Verbundfolie unter eben diesen Bedingungen des Vakuums zusammengedrückt wird und dabei in einem Arbeitsgang eine entsprechende und den transversalen Querschnitt der Folie durchdringende Projektion eingedrückt wird, ein Fließvorgang an der Schnittstelle der beiden Folien in der jeweiligen äußeren Schicht einsetzt, die äußere Schicht an der Druckstelle aufgeschmolzen wird, und die Schnittstelle dort lokal unter Vertiefung (i.e. weitergehende Stauchung) und Verschmelzung der Projektion in der äußeren Schicht aufgehoben wird, i.e. die entsprechende VIP wird unter lokaler Verschmelzung zweier diskreter Außenschichten verschweißt.
Hierbei ist die mindestens eine Preßfläche der entsprechenden Schweißschiene(n) mit niederohmigen Widerstandsdrähten belegt. Durch das Anpressen der Verbundfolie an die Widerstandsdrähte bilden die Widerstandsnähte in-situ im Vakuum eine Projektion mit konstanten Ausmaßen entlang der zu verschweißenden Naht, weil die linear ausgelegten Widerstandsdrähte einen konstanten Durchmesser von konstanter Härte auf plangefräßten und glattpolierten Gegenlagern enthalten. Während des in-vacuo-Projektions-Schweißvorganges verschmelzen die beiden zu verschweißenden Folien an ihren durch Widerstandsdrähte zusammengepreßten Kontaktstellen ihre Oberflächen miteinander. Es findet eine konstante thermisch aktivierte Stauchung der Verbundfolien entlang der Widerstandsdrähte unter Vertiefung der anfänglich nur durch Druck entstandenen Projektion statt (s. Verfahrensmerkmal f1) in Anspruch 1), bis der in-vacuo-Projektions-Schweißvorgang abgeschlossen ist. Es sind also nicht nur homogener Druck, Temperatur und Preßzeit, sondern vor allem auch planebene und glatte Gegenlageroberflächen mit konstanten Abmessungen der Widerstandsdrähte und resultierenden Projektionen über die ganze Länge des Versiegelungs-Pressbereiches notwendig. Die Pressung der aufeinandergelegten Folien wird nach Unterschreiten ihrer Temperatur an der Schweißnaht unter die Schmelztemperatur des kritischen Verbundmaterials (oder -stoffes, eg. Polyethylen mit einem Schmelzpunkt von ca. 80°C) zurückgenommen. Auf diese Weise ist es möglich, die so unter Vakuumbedingungen durch eine partielle beziehungsweise selektive und auf die äußere Folienschicht beschränkte "Verschmelzung" der Ummantelungsfolie versiegelte VIP aus der entsprechenden Vakuum-appratur nach deren Re-Komprimierung zu entnehmen, ohne daß ein Versagen der entsprechenden VIP in Kauf genommen werden muß. Die durch die Schweißnaht aufzunehmenden Kräfte bestehen im Wesentlichen aus den Druck- und Zugspannungen, die aufgrund des Druckunterschiedes zwischen Paneeleninnerem und Einsatzatmosphäre nicht durch den (ggfs. druckstabilen) Füllkörper (i.e. dem "Kern"material) aufgenommen werden oder werden können beziehungsweise die durch das Vorhandensein des Füllkörpers in Querrichtung erst entstehen.

### Ausführung 3: Vakuumkammergrundflächen-Ausnutzung

Der Erfindung liegt die Aufgabe zugrunde, die der Ausführung 2 zugrundeliegenden relativ hohen Todzeiten und den dadurch relativ hohen notwendigen Zeitaufwand in einer in-vacuo Fertigungskette zu reduzieren, die dadurch zustande kommen, daß der Fügebereich in der Vakuumkammer stets durch eine einzige VIP ausgefüllt ist und erst wieder für eine neue VIP genutzt werden kann, wenn die VIP komplett ersetzt wurde.

Die Lösung der Aufgabe wird durch eine Kürzung der notwendigen linearen Dimension einer statischen Pressmaschine in Transportrichtung einer VIP mit den gemäß Tabelle 1 möglichen Verfahren erzielt, die eine parallel zur Schweißnaht fortschreitende in-vacuo Relativbewegung für Energiezufuhr und resultierende Verbindungsbildung enthalten und für das in-vacuo Fügen eingesetzt werden, und zwar durch Aufschmelzen via Rollnaht-Widerstandsschweißen, "Hochfrequenz"-Widerstandsschweißen, Elektronenstrahl-Schweißverfahren und Laser-Strahl-Schweißverfahren und durch Festkörper-Schweißen via Walzschweißen, Reibschweißen, Reibrührschweißen, Kontinuierliches Schmiede-Schweißen und Kontinuierliches Ultraschall--Schweißen.

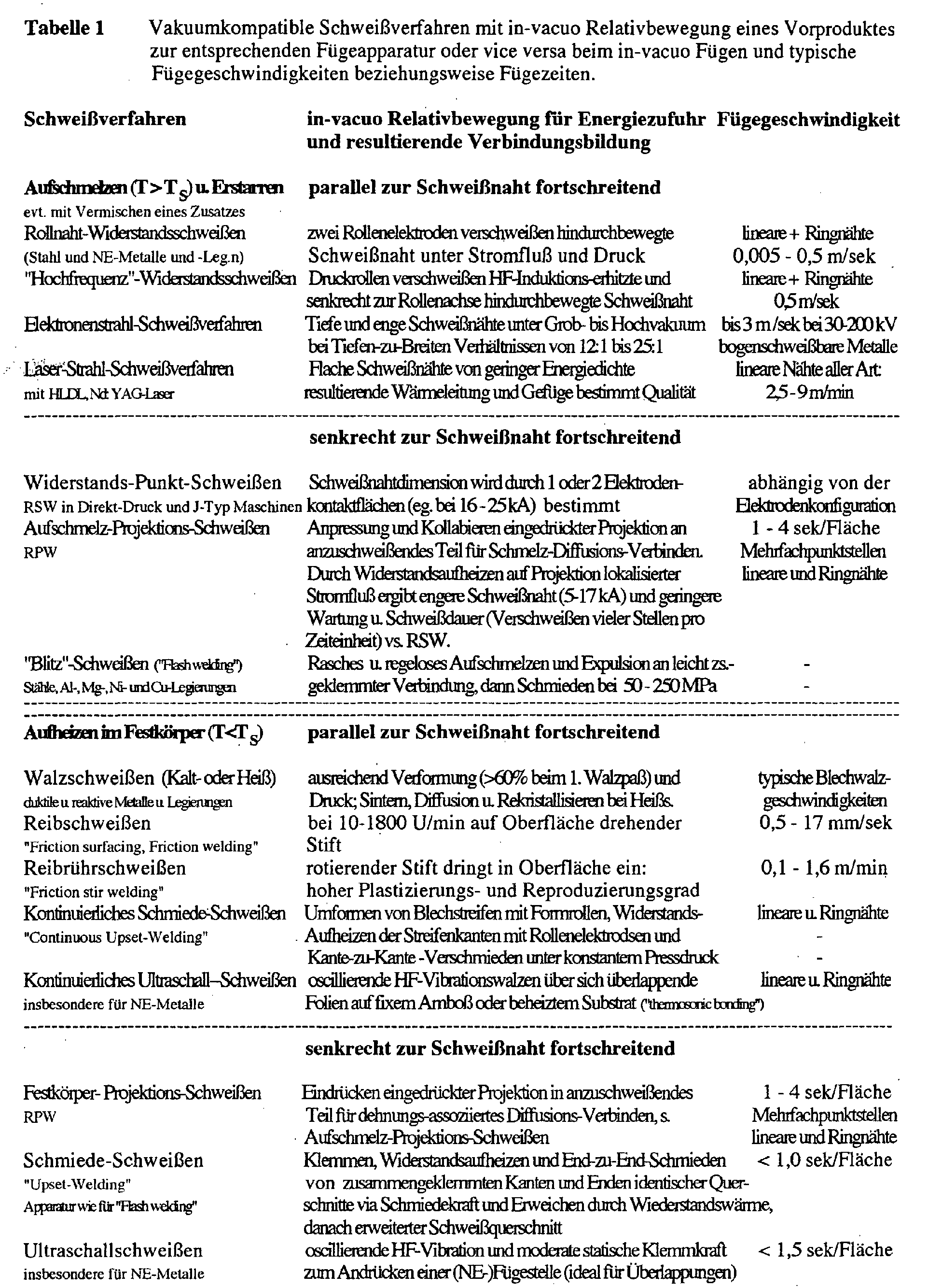

Für das in-vacuo Verschweißen dünner Folien besonders geeignet sind das Rollnaht-Widerstandsschweißen, das Laser-Strahl-Schweißverfahren, das Walzschweißen und das Kontinuierliches Ultraschall--Schweißen, weil sie den dünnen Folienquerschnitt lateral nicht unmäßig belasten und dadurch eine präzise Positionierung der in-acuo Schweißnaht beim in-vacuo Verschweißen dünner Folienmaterialien erlauben (s. a. Ausführungen 4 und 5 unten).

Erfindungsgemäß wird eine nach Herstellung des Vakuums das Fügen oder Verbinden in-situ unter Ausführung einer Relativbewegung zwischen eg. einer Rollnahtschweißmaschine und dem in-vacuo herzustellendem Produkt durchgeführt. Dabei ist die Rollnahtschweißmaschine in x- und z-Translation in einer fixen (Schweiß)Position, während das in-vacuo zu fügende Objekt an der Rollnahtschweißmaschine mit Hilfe einer vakuumtauglichen und verschleißfesten Führung in-vacuo entlang gefahren und kontinuierlich nachgeliefert wird. Alternativen umfassen die in Anspruch 5 zusammengefaßten Relativbewegungen. Die Positionierung einer Fügeapparatur und/oder eines Vorproduktes in eine aufeinander bezogene und über eine auf einen lokalisierten Punkt hinausgehende Fügeposition wird so ohne oder unter minimierten Todzeiten für das in-vacuo Verbinden erzielt. Es werden rotative Relativbewegungen und lineare Relativbewegungen, die besonders vorteilhaft für großflächige Strukturen und lange Fügestellen sind, ausgeführt. Der Umweg für das Verbinden und Fügen über das Vakuum ermöglicht auf diese Weise eine Nachhaltigkeit der Anwendung, darunter lineare Qualitätsverbindungen, die sowohl einseitig wie auch beidseitig einer späteren Normalatmosphäre ausgesetzt werden. Diese Relativbewegung besitzt eine zentrale Rolle bei der Effizienzsteigerung der Nutzung einer Vakuumkammer durch ein kontinuierlich betriebenes Verfahren hinsichtlich vorhandenem Betriebsplatzfläche A_{B} oder zulässiger Betriebszeit t_{B} (s. Ausführung 4 unten). Entscheidend dabei ist, daß nur die Konstanz der plastischen Verformung oder Stauchung oder Geschwindigkeit der in-vacu Relativbewegung das Unterdruckgleichgewicht zwischen in-vacuo Fügebereich und dem definierten Vakuum gemäß Anspruch 1 gewährleistet.

Der erstere der beiden Fälle (späteres einseitiges Aussetzen einer in-vacuo hergestellten Verbindung oder Fügung einer späteren Normalatmosphäre) wird am Beispiel einer Vakuumisolationspaneele (häufig auch "Vakuumisolationspaneel, VIP) demonstriert. Mit diesem Beispiel wird das Gebiet der industriellen in-vacuo Versiegelung, des Abschlusses und somit der Einkapselung der Vakuumbedingungen für Anwendungen des gleichen (nach Erreichen eines dynamischen Gleichgewichtes zwischen derselben und dem Hintergrund(sdruck) der entsprechenden Vakuumverarbeitungsapparatur) oder annähernd gleichen Druckes zwischen der Atmosphäre in der entsprechenden Struktur, Behältnis, Behälter Rezipient, Tasche mit eingekapseltem Vakuum für bestimmte Zwecke (wie am Beispiel einer VIP gezeigt wird) und der Hintergrundatmosphäre der entsprechenden Vakuumfügekammer betreten.

Als Füge- und Verbindungsautomat wird eine hochvakuumtauglich gemachte Rollnahtschweißmaschine (eg. N 600 pn) für Längs- und Quernahtversiegelung (-"schweißung") eingesetzt. Rollnahtschweißmaschinen funktionieren nach dem Prinzip des Widerstandsschweißens, worin über einen pneumatisch betätigten Schwingerarm eine über einen Mikroprozessor gesteuerte Rollenelektrode und eine Gegenrollenelektrode mit einer kontrollierten Umdrehungsgeschwindigkeit für eine stufenlos geregelte Schweißgeschwindigkeit angetrieben wird. Die Energiezufuhr zur Rollenelektrode wird über eine Schweißstromüberwachung geregelt, die resultierende Temperatur in der Versiegelungs- oder Schweißnaht über einen Schweißtransformer überwacht. Die Hydraulik dieser Maschine führt über vakuumtaugliche metallische Schläuche, wobei vorzugsweise aus Edelstahl gefertigte Strechschläuche eingesetzt werden. Effektiv eingesetzte in-vacuo Spannungen E_{R} zwischen den Rollen betragen bei Vakuumatmosphärendrücken im Druckbereich 10⁻³ bis 10⁻¹ mbar nicht mehr als 50 V, um ein allgemeines Plasma in der entsprechenden Vakuumkammer zu vermeiden (vgl. Ausführung 1).

Daraufhin werden zwei gegenüberliegende Folien an der offenen Lasche der VIP bei Schweiß-Geschwindigkeiten zwischen 1,0 bis 6,3 m/min durch die Rolle der Rollnahtschweißmaschine hindurchgefahren. Die für die Verschmelzung eingesetzte nominale Leistungsaufnahme liegt im Bereich von 0,1 W bis 70 kW. Die Versiegelung der VIP wird dabei durch Verschmelzung einer der Schichten in einem thermisch entsprechend versiegelbaren Temperaturbereich zwischen 80° und 140° C erzielt. Deshalb ist der Effekt der Wärmeentwicklung auf den Dämmkernwerkstoff unkritisch (vgl. a. Ausführung 5 unten). Infolge der automatisierten in-vacuo Fertigung entsprechender Versiegelungen werden automatisch ganzheitlich in einem Vakuum hergestellte VIP ohne lösbare Verbindungen an der Ummantelung möglich, die einen verbesserten Schutz gegen Wärmeleitung gegenüber einer in einer Normalatmosphäre automatisiert gefertigten Stahlplattengehäuse-VIP gemäß Stand der Technik (DE 42 14 002) anbieten, und zwar aufgrund reduzierter Ummantelungs-Querschnitte (Kostenreduzierung 1) bei gleichzeit erhöhter Produktivität gegenüber handwerklichen in-vacuo Fertigungsverfahren von Verbundfolien-VIP (Kostenreduzierung 2) und Freiheit von einem in-vacuo Einsatz von "getter"-Materialien (Kostenreduzierung 3). Neue in-situ Vakuumprodukte umfassen aus Verbundfolien hergestellte VIP mit einer eine mittlere Schicht aus (Edel)Stahl enthaltenen Ummantelung, die jedoch mit einem bei relativ niedrigen Temperaturen thermisch versiegelbarem Material wie PE versehen sind und bei denen die Edelstahlfolie über den gesamten Querschnitt der VIP als Gasbarriere-Schicht eingesetzt wird.

### Ausführung 4: Kunststoffreies in-vacuo Fügen eines monolithischen Metalls oder Legierung

Der Erfindung liegt die Aufgabe zugrunde, gemäß Ausführung 1 durch in-vacuo Fügen auf den Einsatz der begrenzt Vakuumverträglichen Kunststoffe als Strukturmaterialien zu verzichten und die begrenzten technischen Eigenschaften der konventionellen und kommerziellen VIP-Verbundfolie, hier insbesondere diejenigen, die durch den relativ niedrigen Schmelzpunkt eines auf der Oberfläche aufgetragenen thermisch versiegelbaren Stoffes wie zum Beispiel Polyethylen, Nylon oder Teflon, vorbestimmt und begrenzt sind, zu überwinden. Unter Kunststoff wird hier Kunststoff auf Kohlenwasserstoffbasis oder -haltige Werkstoffe (Polymere) verstanden.

Die Lösung der Aufgabe wird mit einem in-vacuo Füge-Verfahren zum Einbringen von variablen einschließlich relativ hoher lokaler Energien und hoher resultierender Schweiß-Temperaturen erzielt, mit dem das in-vacuo Fügen kunststoffreier Strukturmaterialien und vakuumdichter Vorprodukte auf der Basis eines Metalls oder einer Legierung möglich ist. Hinsichtlich Ausführung 4 wird auf die vom Verfahren nach Anspruch 1 ff. abhängigen und ansonsten unabhängigen VIP-Ansprüche 10 und 12 sowie auf Tabelle 1 hingewiesen.

Erfindungsgemäß wird ein kunststoffreies Material in-vacuo gefügt, worin die zu fügende Stelle des mindestens einen zu verarbeitenden Vorproduktes aus einem einschichtigen metallischen Material besteht, worin eine rein aus einem metallischen Material bestehende kunststoffreie monolithische Ummantelungsfolie einer VIP gefügt wird, worin das Material Stahl in Folienform ist, i.e. es wird eine aus Stahlfolie bestehendes monolithisches VIP-Ummantelungsmaterial a) durch Festkörper-Schweißen bei T < T_{S} und b) durch Aufschmelzen bei T > T_{S} nach einem Vefahren gemäß Tabelle 1 in-vacuo -"verschweißt" , worin T_{S} = Schmelztemperatur der monolithische Ummantelungsfolie.

Am Beispiel des Einsatzes einer vakuumtauglichen Rollnahtschweißmaschine wird eine aus einer offenen Folie bestehende Tasche einer Vakuumisolationspaneele (VIP) entlang einer Stirnnaht aus Edelstahl zur Herstellung einer vakuumdichten VIP mit über den Kern hinausragender Lasche einer VIP-Edelstahlfolie durch Aufschmelzen oder anhand des Walz- oder Ultraschallschweißens im Festkörperzustand verschweißt. Solche Folien können auch laterale Werkstoffverbünde mit vakuumdichten Schnittstellen enthalten, die hier "Kompositfolie" genannt werden soll, bestehend aus verschiedenen *lateral* aneinanderstoßenden Folienmaterialien, also kein über den Querschnitt aufgeschichteter Schichtverbund wie die o.g. VIP-Verbundfolien gemäß Stand der Technik. Bei dieser Erfindung wird zunächst eine (i) mit einer Pulverplatte aus pyrogener Kieselsäure gefüllte und (ii) an drei vor Einbringen in das Vakuum durch eine Schweißung oder Knickung versiegelte Seiten und (iii) an der Stirnnaht aus Edelstahl offene VIP-Tasche in eine offene Vakuumapparatur gebracht und nach Schließen und unter Vakuum-setzen der entsprechenden Vakuumapparatur durch die Rollnahtschweißmaschine unter dem Vakuum an der Stirnnaht aus Edelstahl verschweißt.

Damit eine Vakuumdichtheit der VIP-Ummantelungsfolie mit metallischer (eg. Edelstahl-) Naht gemäß den Ansprüchen 10 - 12 erzielt wird, werden erfindungsgemäß Vorschubgeschwindigkeiten mit einem konstanten Wert im Bereich von 0,005 - 1,0 m/sek eingesetzt. Der Vorteil variabler Vorschubgeschwindigkeit aus einer kontrollierten Erwärmung vor und Abkühlung nach dem Schweißvorgang, wodurch ein homogenes und homogen feinkörniges Schweißnahtgefüge mit hoher intrinsischer Duktilität erzielt wird. Außerdem wird das Laschenmaterial der VIP vor Durchgang durch die Rollenelektrode der Rollnahtschweißmaschine oder beim Festkörper-Rollenschweißen zusätzlich leicht vorgewärmt. Damit kann ein großer positiver Temperaturgradient und eine gerichtete Erstarrung (Stengelkristallgefüge) sowie Seigerungen aller Art im Schweißnahtgefüge unterdrückt und flache Maxima im ΔT(t)- und ΔT(x)-Verhalten der Schweißnaht erzielt werden, worin t = Betriebszeit und x = Abstand von der Schweißnaht.

Der in-vacuo Herstellung einer homogenen und 100%ig dichten Metall-Schweißnahtausbildung kommen dabei die Bedingungen des Aufschmelz-Schweißens bei T < T_{S} und des Festkörper-Schweißens bei T > T_{S} unter einem Vakuum und der damit verbundenen hohen Reinheit der unmittelbaren Prozessumgebung entgegen, weil aufgrund der Tatsache, daß alle Verarbeitungsschritte in der Vakuumkammer unter einem definierten Vakuum durchgeführt und alle atmosphärischen Einflüsse vermieden werden, die allfälligen Oxidations-, O₂-, Oxyd- und schlackenfreie Schweißnähte ausgeschlossen und die resultierenden Schweißnähte auf diese Weise frei von Einschlüssen aller Art sind und so eine hohe Schadenstoleranz aufweisen. Dies gilt im Übrigen nicht nur für die Schweißprozess-führung mit einer Rollnahtschweißmaschine, sondern auch für alle übrigen vakuum-kompatiblen Schweißverfahren nach Tabelle 1, darunter Laserschweißung und Widerstandsschweißung aller Art, wofür der Einsatz eines kunststoffreien monolithischen Metalls oder Legierung Bedingung ist (vgl. obiges Kapitel "Stand der Technik" und nachfolgende Ausführungen 5 ff.).

Dabei ist es besonders vorteilhaft, eine ggfs. notwendige Beseitigung von Oxydhäuten und die dabei eingebrachte Reibungswärme ΔQ_{friction} in eine in-vacuo Prozeßkette unmittelbar vor dem in-vacuo Fügen einzugliedern. Dabei muß die in-vacuo Kontrolle des ΔT(t)- und ΔT(x)-Verhaltens der Wärmeentwicklung im Vorprodukt und Produkt relativ breiter in-vacuo Schweißnähte eg. via das in-vacuo Rollennahtschweißen die gesamte in das Produkt lokal eingebrachte Energie sowie den resultierende Wärmefluß berücksichtigen, weil für die T-Kontrolle im Vakuum Konvektion als Wärmeabfuhrmöglichkeit ausfällt. Es ist deshalb von Vorteil, eventuelle in-vacuo Ausheiz- (cf. Ausführung 1) und Reinigungsschritte so zeitlich dicht wie möglich hintereinander oder überlappend in-vacuo auszuführen. Das anschließende in-vacuo Schweißen bei relativ hohen homologen, also auf den Schmelzpunkt des Materials der VIP-Ummantelung bezogenen Temperaturen im Vakuum berücksichtigt insbesondere die Wechselwirkung zwischen Wärmeentwicklung an der Versiegelungsstelle und der thermischen Stabilität des Füllmaterial(s) im Kern. Als Beispiel sei eine Schweißnaht-Solltemperatur von 1200 °C und eine kritische Füllstoffmaterial-Zersetzungstemperatur von 1400°C gegeben. Wenn bei dem Schweißvorgang keine Phasenumwandlung (i.e. Aufschmelzung des entsprechenden Werkstoffes) auftritt, beträgt die abzuführende Wärmemenge (in [J/mol]) ΔH_{ges} = ΔQ, mit Aufschmelzung dagegen ΔH_{ges} = ΔQ + ΔH_{Solidifi-cation}, worin ΔQ = Aufheizwärme, in der ΔQ_{friction} enthalten ist, und ΔH_{Solidification} = latente Erstarrungswärme. Damit sich der Füllstoff in der Nähe zum in-vacuo Schweißvorgang durch die entsprechende Wärmeentwicklung gerade unter den schlecht wärmeleitenden, quasi-konvektionsfreien Abkühlbedingungen in einem Vakuum nicht thermisch zersetzt oder nicht beschädigt wird, wird die Hitzeentwicklung durch die Schweißung und ihr entsprechender Einfluß auf das Aerogel, die pyrogene Kieselsäure und andere Füllkörper derart berücksichtigt, daß erfindungsgemäß eine Kühlrolle zwecks Entzug einer kontrollierten Wärmemenge zwischen Rollenelektrode und Füllstoff angebracht mit gleicher Umdrehungsgeschwindigkeit in Kontakt mit der VIP mitläuft (NB. eine von der Geschwindigkeit der Rollenelektrode unterschiedliche Geschwindigkeit würde Reibung und somit zusätzliche Wärme verursachen und den gewünschte Kühleffekt der Kühlrolle unterlaufen). Die Kühlrolle ist dabei so ausgelegt und dimensioniert, daß sie eine Bruchteil ***f*** der abzuführenden Wärmemenge durch Wärmeleitung wiederaufnimmt und aus der VIP an ein Kühlmedium abgibt, welches die Kühlrolle durchspült und zu einem Kühlaggregat zurückläuft, wo das Kühlmedium auf eine definierte Temperatur abgekühlt wird, bevor es zurück in die Kühlrolle fließt und sich der Vorgang pro Volumeneinheit Kühlflüssigkeit wiederholt. Typische Daten für die eingesetzte Kühleffekt der Kühlrolle betragen 0,3 < ***f*** < 0,6. Wenn zum Beispiel eine Schweißnaht auf 1400°C aufgeschmolzen werden muß, bleibt die Temperatur des Füllmaterials in inmittelbarer Nähe zur Rollenelektrode durch den Einsatz der Kühlrolle unter 1000°C. Zusätzliche Lösungen umfassen den Einsartz von kühlenden Führungsblechen zur Ableitung der Schmelzwärme und Erstarrungsenthalpie aus der VIP-Ummantelung in unmittelbarer Nachbarschaft zur Rollenelektrode. Auf diese Weise wird eine thermische Zersetzung oder lokale Überhitzung der entsprechenden Füllstoffe wie Aerogele erfindungsgemäß durch Umleitung des durch die Hochtemperatur in-vacuo Verschweißung einer VIP-Ummanntelung verursachten Wärmemenge in und Abfuhr durch ein Kühlmedium vermieden.

Wesentlichen Vorteile des kunststoffreien in-vacuo Fügens einer metallischen Verbindung eg. für eine VIP unter Einsatz einer eg. beweglichen Schweißnaht einer vollständig kunststoffreien Metallfolie (eg. einschichtige metallische Ummantelung einer VIP wie Edelstahlfolie) mit einer Vakuumschweißgerät gegenüber dem entsprechenden in-vacuo Fügen von Verbundfolien gemäß Stand der Technik liegen in der in-vacuo Fügetechnik selbst. Da eine kunststoffreie Metallfolie (eg. eine Edelstahlfolie) absolut vakuumdicht, in jedem Fall aber dichter ist als Verbundfolien für Versiegelung bei leicht erhöhten Temperaturen gemäß Stand der Technik (wie eg. Polyethylen im Temperaturbereich von 80° bis 150°C) sind, ergibt sich durch den Einsatz von völlig ohne Kunststoff beschichteten Edelstahlfolien eine kostengünstigere Verarbeitung, weil:
1. durch die Abwesenheit von Kunststoffen in der VIP-Folie gegenüber den Verbundfolien eine geringere Adsorption von Wasser an der Oberfläche der VIP-Folie erfolgt, somit ein geringerer Aufwand an notwendiger Pumpleistung zur Herstellung des entsprechenden Vakuums pro Einheitsoberfläche des herzustellenden Produktes. Es sei in diesem Zusammenhang darauf hingewiesen, daß sich auch die vergleichsweisen t_{H}-Werte gegenüber Ausführung 1 aufgrund der Abwesenheit von Kunststoff in der Ummantelung um bis 60 % reduzieren (s. unten).
2. kein "getter"-Material bei der Verarbeitung in der Vakuumapparatur erforderlich ist, wie dies beim Versiegeln von Standard-Verbundfolien der Fall ist.

Sofern eine ausreichende Steifigkeit der Metallfolie aufgrund metallischer und/oder ausreichender (Dimensionierung der) Wandstärke gegeben ist, ist ein besonderer Vorteil der invacuo VIP-Verschweißung beim Abpumpen einer VIP mit einer Ummantelung aus einer metallischen (eg. Stahl-) Folie über eine offene Lasche gegeben (vgl. Ausführung 1). Dieser Vorteil kommt beim Einsatz metallischer Ummantelungsfolien bei besonders großen VIP-Abmessungen zum Tragen. Die in-vacuo "Evakuierung" der Gasatmosphäre in und um der VIP-Ummantelung herum ermöglicht signifikant reduzierte Abpumpzeiten zur Erlangung von Innenraumdrücken < 10 mbar gegenüber der Stand-der-Technik-Fertigung von Stahlgehäusen-VIP sowie von VIP mit dünner Verbundfolien-Ummantelungen in der in-vacuo Fertigung. Dies trägt entscheidend dazu bei, daß das Kosten-Leistungsverhältnis individueller in-vacuo Strukturen wie Vakuumisolationspaneele (VIP) über eine Reduzierung der Stückkosten durch den Einsatz kunststoffreier Materialien erzielt wird (vgl. Beiträge durch Vakuumkammer-Ausnutzung und Vakuum-kompatibles Hochgeschwindigkeits-Fügen in den folgenden Ausführungen).

Ferner ist der Verschluß eines Absauganschlusses (via Verschweißen, verkleben etc.) unter atmosphärischen Bedingungen (cf. DE 42 14 002) eine wesentliche Fehlerquelle im Stand der Technik industrieller VIP-Fertigung. Demgegenüber ist festzuhalten, daß der erfindungsgemäße Verschluß einer VIP mit kunststoffreier und ggfs. kompletter Metallfolien-Ummantelung in einer Vakuumkammer unter Vakuum eine Lufteinströmung während dieses Verschließens ausschließt. Außerdem sind die in-vacuo hergestellten Schweißnähte frei von Leckagemöglichkeiten beim Verschließen, weil der VIP-Innendruck gleich dem VIP-Außendruck ist, bei der Prozeßführung also keine durch ein Druckdifferential verursachte (mechanische) Spannungen auftreten.

Dieser Umstand kann dabei sowohl makroskopisch als auch mikroskopisch den Sachverhalt ausnutzen, daß die VIP-Umhüllung während der in-vacuo Versiegelung via Metallverschweißung (aber auch via Einsatz eines ausgasungsfreien und kunststoffreien Klebers für Metall-Keramik Verbünde, s. Ausführungen weiter unten) in vorgegebener Position verbleibt und eine Verformung der VIP-Ummantelung während der gesamten in-vacuo Fertigungskette vermeiden hilft. Folgerichtig kommt die erhöhte Prozeßsicherheit hinzu, die aufgrund einer Automatisierung eines in-vacuo Schweißprozesses unter Verwendung einschichtiger Ummantelungsmaterialien gegeben ist und die alle durch den Betreiber (Operator) selbst verursachten Ungenauigkeiten weitestgehend unmöglich macht. Auf diese Weise werden einschichtige Schweißnähte mit homogenem Gefüge (Mikrostruktur) erzielt.

### Ausführung 5: Vakuum-Fügezeit-Minimierung

Der Erfindung liegt die Aufgabe zugrunde, die operative Betriebszeit für den Geschwindigkeits-bestimmenden und relativ teuren in-vacuo Füge-Schritt zu minimieren.

Die Lösung der Aufgabe wird mit einer Verbindung der Vorteile der in-vacuo Schweißverfahren mit einer parallel zur Schweißnaht fortschreitenden in-vacuo Relativbewegung für Energiezufuhr und resultierende Verbindungsbildung mit den Vorteilen der in-vacuo Schweißverfahren mit einer entsprechenden senkrecht zur Schweißnaht fortschreitenden in-vacuo Relativbewegung erzielt (kombinierte in-vacuo Fügeverfahren I, cf. Tabelle 1 und Ausführungen 1 - 4). Es wird auf die Zusammenfassung der prinzipiellen in-vacuo Relativbewegungen in **Bild 3** und Verfahrensmerkmal f3) des Anspruches 1 hingewiesen.

Die Vorteile der senkrecht zur Schweißnaht fortschreitenden in-vacuo Relativbewegung liegen in der hohen Füge-Geschwindigkeit, die mit entsprechenden Verfahren erzielt werden können. Dies liegt an ihrer Automatisierbarkeit (cf. Widerstands-Punkt-Schweißen via Direkt-Druck-Maschinen) und an den sehr dünnen, i.e. transversal eng begrenzten Querschnittsbreiten entsprechender Schweißnähte und der damit verbundenen Beschränkung des Energieaufwandes und Energie- oder Wärmeflusses durch Projektionsschweißen (sowohl im Festkörper als auch via Aufschmelzen, eventuellem Mischen mit einem Zusatz und Erstarrung) sowie die damit verbundene Möglichkeit der Nutzung intrinsischer Energie wie die einer lokalen Vorprodukt-Verformung.

Erfindungsgemäß wird die Aufgabe mit einer Kombination
a) dem lokalisierten Projektionsschweißen via Aufschmelzen mit dem (kontinuierlichen) Rollnaht-Widerstands-Schweißverfahren oder
b) dem lokalisierten Projektionsschweißen via dehnungs- oder stauchungs-assoziiertem Diffusionsverbinden mit dem (kontinuierlichen) Walzschweißen (im "kalten" oder "heißen" Zustand) gelöst (vgl. Tabelle 1). Dabei werden eine oder mehrere (parallel verlaufende) und durch Kerbeindrucksrollen geformte Schweißnähte hoher Verformungsenergie (eg. in Stahl) unmittelbar vor dem Schweißvorhang in das Vorprodukt eingekerbt und mit Rollenelektroden oder-Walzen linear durch die Rollenelektroden oder Walzen hindurchbewegt und kontinuierlich zusammengepreßt. Auf diese Weise werden die Eigenschaften des Rollnaht-Widerstandsschweißen und des Kalt- oder Warm-Walzschweißens auf die sehr lokalisierten Schweißnähte des Projektionsschweißens mit allen ihren Vorteilen kombiniert. Besonders vorteilhaft ist selbstverständlich die hier offenbarte Festkörper-Schweißverfahrens-Variante aufgrund ihrer besonderen Eignung für das Fügen in einem Vakuum infolge der relativ beschränkten Erwärmung der Schweißnaht und der resultierenden reduzierten Verdampfungsproblematik gegenüber dem vergleichsweisen Aufschmelzen desselben Werkstoffes oder Werkstoffkombination.

### Ausführung 6: Laschenfreies in-vacuo Folienfügen

Der Erfindung liegt die Aufgabe zugrunde, die operative Betriebszeit für den Geschwindigkeits-bestimmenden und relativ teuren in-vacuo Füge-Schritt einer VIP zu minimieren, worin die VIP an der in-vacuo Stirnnaht frei von einer überstehenden Lasche sein soll.

Die Lösung der Aufgabe wird mit einer Verbindung der Vorteile der in-vacuo Schweißverfahren mit einer parallel zur Schweißnaht fortschreitenden in-vacuo Relativbewegung für Energiezufuhr und resultierende Verbindungsbildung mit den Vorteilen der in-vacuo Schweißverfahren mit einer entsprechenden senkrecht zur Schweißnaht fortschreitenden in-vacuo Relativbewegung erzielt. Es wird auf Verfahrensmerkmal f3) des Anspruches 1, auf Ansprüche 2 und 3 und auf Anspruch 12 und auf **Bilder 3-2 und 3-3** und auf **Bild 4** sowie die entsprechenden Bildbeschreibungen hingewiesen.

Die Vorteile der senkrecht zur Schweißnaht fortschreitenden in-vacuo Relativbewegung liegen in der lokal hohen und zugleich genau kontrollierbaren einbringbaren Energie wie mit dem Laser-Strahl-Schweißverfahren mit einem Hochleistungsdioden-Laser wie dem Nd:YAG-Laser. Eine konstante Vorschubgeschwindigkeit gewährleistet dabei konstante Wärmeabfuhr und somit ein homogenes weil reproduzierbares Schweißnahtgefüge. So ist ein homogenes globulistisches Schweißnahtgefüge kritisch und notwendig für die Duktilität der Schweißnaht (vgl. letzter Unterpunkt in Anspruch 3). Eine Duktilität der Schweißnaht kann aber nur durch eine konstante Vorschubgeschwindigkeit eg. eines Lasers zum Vorprodukt (oder umgekehrt) gewährleistet werden, weil nur durch eine solche konstante Vorschubgeschwindigkeit versprödende Stengelkristalle und (Mikro)Seigerungen ausgeschlossen werden können.

Erfindungsgemäß wird die Aufgabe mit einer Kombination aus zwei linearen Schmiede-Klemmen parallel und eventuelle symmetrisch zum darin in der Mitte, i.e. linear-zentrisch angeordnetem Aufschmelzen mit dem mit einem Hochleistungsdioden-Laserausgeführten (kontinuierlichen) Laser-Schweißen und Erstarren zu einer Schweißnaht gemäß **Bild 4** gelöst. Dabei dienen die zwei linearen Schmiede-Klemmen als Spannvorrichtung in Form eines statischen Balkens für die zu verscheißenden Folien und zugleich als beidseitige Kühlfalle, welche ggfs. mit einem durch sie eg. in Mäanderform hindurchfließenden Kühlmittel gekühlt werden, für die Verdampfungen, die durch den durch sie parallel hindurchfahrenden Hochleistungsdioden-Laser anfallen. Alternativ können zwei auf die Umgebung des Laserstrahls lokalisierte Kühlfallen mit gleicher Vorschubgeschwindigkeit wie die der in-vacuo Relativbewegung zwischen Vorprodukt und Lasergerät mit dem Lasergerät dynamisch mitgeführt werden. Die Kühlfalle ist dabei wichtig, weil mit dem Laser eine relativ hohe Energie aufgewandt wird, um zur Vermeidung überstehender Laschen die Folie im Außenbereich der VIP parallel zur Schweißnaht gleichzeitig in-vacuo abtropfen zu lassen. Es ist deshalb besonders vorteilhaft, die Kühlfalle lokal mit unterschiedlichen Kühlleistungen zu betreiben, wobei die Kühlleistungen beider Kühlfallen oberhalb eines kritischen Wertes liegen, bei dem verdampfendes Material in den Fügebereich der Vakuumkammer und darüber in den Hintergrund der Vakuumkammer gelangen könnte.

Beide Presswerkzeuge, also das obere Presswerkzeug (eg. mit einer Pressbacke) und das untere Presswerkzeug (eg. mit einem Preßbolzen) sollten vorteilhafterweise eine zu der in **Bild 3-2** dargestellten vakuumtauglichen Laser-Fügeapparatur vertikale Bewegung ausführen beziehungsweise ausführen können. So wird sichergestellt, daß insbesondere immer dann, wenn sowohl die Unter- als auch die Oberfolie für eine VIP eine Schalenform enthalten, vor Abschluß einer Evakuierung des offenen Innenraumes der betreffenden VIP ein genügend großer Spalt und eine symmetrische Spalt-Öffnungsform für die gewünschte Strömung für den Gasaustritt eingesetzt wird und nach Abschluß dieser Evakuierung ein symmetrisches und somit auf beiden Seiten identisches Schließen durch Aneinanderpressen der nichtverschweißten Unter- an die Oberfolie der VIP-Öffnung mit beiden Presswerkzeugen in dem in-vacuo Laserfügen enthalten ist.

**Bild 3 - 2** zeigt eine vakuumtaugliche Fügeapparatur zur Ausführung des in-vacuo Füge-Verfahrens mit einem **50** Laser, **51** Laser-Fokussierung, **52** Laser-Linearantrieb, **53** Laser-Linear-Führungseinheit, **54** Einkoppelfenster, **55** Vakuumkammerwand eines abhebbaren Vakuumkammerdeckels, **56** oberem Presswerkzeug, **57** Kühlmittelkanal, **58** unterem Presswerkzeug, **59** Auflagetisch für eine Vakuumisolationspaneele (VIP), **60** Vakuumkammerboden, **61** Dichtflansch, **62** Antrieb für das untere Presswerkzeug und **63** Kanal zur Gewährleistung einer kontaktfreien Bildung einer Schweißnaht und zum Auffangen von Schmelztropfen in einem anschließendem Trennvorgang durch Schneiden zweier verschweißter Folien mit einem Laser aufschmelzen der zwei verschweißten Folien.

Wichtig für die Unabhängigkeit der Länge des Laser-Strahls von Bewegungen der Vakuumkammerwand (eg. eines wie in **Bild 3-2** dargestellten abhebbaren Vakuumkammerdeckels infolge der auf ihm lastenen Druckkraft infolge des Druckdifferentials zwischen Umgebungsatmosphäre und Vakuum der betreffenden Vakuumkammer) ist die aus einer vertikalen Verbindung bestehende Anbringung von **52** Laser-Linearantrieb und **53** Laser-Linear-Führungseinheit an der Vakuumkammerwand in einem Bereich **64**, der vertikal darunter durch eine vertikale Vakuumkammerwand gestützt wird, worin der Bereich **64** und die vertikal darunter befindliche Vakuumkammerwand außerhalb der Zeichenebene in **Bild 3-2** liegen und dementsprechend nicht in **Bild 3-2** dargestellt sind und der Bereich **64** nur angedeutet ist. Es ist die Inkompressibilität solcher vertikalen Wände, aufgrund derer die Unabhängigkeit der Länge des Laser-Strahls von Bewegungen der Vakuumkammerwand zustande kommt. Die Apparatur in Bild 3-2 ermöglicht Ausführungsbeispiel f3) in Anspruch 1, weil auch die Unabhängigkeit der Länge des Laser-Strahls von Bewegungen der Vakuumkammerwand eine e.g. in der Vertikalen fixe horizontale Bewegung von **52** Laser-Linearantreib und **53** Laser-Linear-Führungseinheit ermöglicht und deshalb der Vorschubsgeschwindigkeit-Vektor des Lasers in einer anderen Ebene im Raum als die vertikalen Zeichenebene in **Bild 3-2** konstant ist. Es versteht sich, daß die Vertikale eine beliebige andere Ebene im Raum außer derjenigen Ebene im Raum sein kann, in der die durch die Laser-Linear-Führungseinheit gesteuerte Bewegung des Lasers stattfindet.

Auf diese Weise läßt sich auch jede Form einer Verspannung der transversalen Außenseiten der VIP vermeiden, die auftreten würden, wenn eine überstehende Lasche nach dem in-vacuo Fügen nachträglich durch einen nicht-reproduzierbaren Arbeitsschritt innerhalb der Spannvorrichtung oder durch einen separaten Arbeitsschritt außerhalb der Spannvorrichtung entfernt werden sollte. Ein solcher Sekundär-Arbeitsschritt würde außerdem zu einem unreproduzierbaren Abschluß der VIP-Kante führen, weil aufgrund der lokalen Spannungen an den Ecken einer VIP die Abtrennung in die Schweißnaht hineingelangen könnte. Auf die erfindungsgemäß durchgeführte Weise bleibt die Duktilität der Schweißnaht aber erhalten und muß keiner unerwünschten Kaltverformung geopfert werden.

Unter diesen Bedingungen enthält die angewandte Laserleistung für das leckfreie in-vacuo Verschweißen zweier in einer Ruhepoosition befindlichen Edelstahlfolien WS 1.4301 mit einer Wandstärke von 70 µm bei einer Vorschubgeschwindigkeit eines extern zur Vakuumkammer angebrachten Lasers von 0,02 m/sec einen Wert von 500 Watt [W].

Weitere Ausführungsbeispiele für das Verfahren nach Anspruch 1 mit einem Laser sind in Anspruch 4.A für eine in-vacuo Laserstrahl-Einkopplung allgemein und in Anspruch 4.B für ein in-vacuo Laserverschweißen von Folien allgemein gegeben. In Anspruch 15 und 16 sind die Einzelheiten der Vorrichtung für ein brechungsarmes und Reflektions-freies Einkoppeln des Laserstrahls in die Vakuumlkammeratmoisphäre offenbart. Der speziellen Vorschubgeschwindigkeits-Vektor der außen vorbeifahrenden Laserapparatur wird erfindungsgemäß durch die Inkompressibilität der Anbringungsmaterialien der außen vorbeifahrenden Laserapparatur sowie der Vakuumkammerwand unter dieser Anbringung konstant. Es wird auf die Randbedingungen unter Ausführung 1 hingewiesen, die dieses Verfahren voraussetzt. Für das in-vacuo Laserverschweißen von Folien einer VIP-Öffnung gemäß Anspruch 5.A werden vorzugsweise die Evakuierungsbedingungen gemäß Anspruch 3 eingesetzt. In Anspruch 5.B wird das in-vacuo Laser-Schweißen-und-Schneiden von Folien einer VIP-Öffnung allgemein gelehrt und entsprechend in planparallel aneinandergepresste oder einen Vakuuminnenraum abschließende Folien einer entsprechenden nichtverschweißten Öffnung unterschieden. Anspruch 6.A offenbart ein Laschen-freies in-vacuo Laser-Schweißen-und-Schneiden von Folien einer VIP-Öffnung und Anspruch 6.B ein Verspannungsfreies in-vacuo Laser-Schweißen-und-Schneiden von Folien einer laschenfreien VIP-Öffnung. In diesem Zusammenhang wird auf die Bildbeschreibungen zu den **Bildern 2-2 bis 2-5 und 3-2 und 3-3** hingewiesen.

### Ausführung 7: Kunststoffreie in-vacuo VIP-Ummantelung ohne lösbare Verbindungen

Der Erfindung liegt die Aufgabe zugrunde, ein kunststoffreies VIP-Gehäuse ohne lösbare Verbindungen für den Einsatz bei hohen Temperaturen und unter statischer Belastung bereitzustellen.

Die Lösung der Aufgabe wird mit einer Ummantelung aus einem hochschmelzenden metallischen Werkstoff erzielt, weil ja bekanntlich die kritischen mechanischen Eigenschaften eines VIP-Verbundfolienmaterials wie Steifigkeit (E-Modul) und resultierende Festigkeit direkt proportional zum Schmelzpunkt desselben Materials sind (cf. C. Kittel, Introduction to Solid State Physics, 5th ed. New York, Wiley, 1976).

Erfindungsgemäß wird Edelstahlfolie als Ummantelungsmaterial eingesetzt und mit einem Verfahren nach einem oder mehreren der Ausführungen 1 - 6 hergestellt. Auf diese Weise werden VIP mit einer Stahlfolien-Ummantelung oder Stahl-Gehäuse mit reduzierter Gehäusematerialwandstärke ohne lösbare Verbindungen an der Ummantelung infolge einer in-vacuo Fertigung entsprechender Versiegelungenermöglicht, die einen verbesserten Schutz gegen Schaden gegenüber VIP mit einer Verbundfolien-Ummantelung und geringere Wärmeleitung gegenüber Stahlgehäuse-VIP gemäß Stand der Technik aufgrund reduzierter Ummantelungs-Querschnitte bei gleichzeit erhöhter Produktivität entsprechender Fertigungsverfahren und Freiheit eines Einsatzes von "getter"-Materialien anbieten.

Die speziellen Produktvorteile von in-vacuo verschweißten VIP mit kunststoffreier metallischer Ummantelung wie mit einer Edelstahlfolie umfassen:
- 100 %ig gasdichte Umhüllung inklusive Schweißnaht.
- maßhaltige, feste, abriebfeste, statisch stabile, knickfeste, tragende und faltungsfreie Oberfläche.
- temperaturstabile Umhüllung.
- geringere Wärmeleitung bei gleicher Festigkeit vs. einer VIP mit einer Ummantelung aus einem relativ dickwandigen unter Normalbedingungen gefertigetem (Edel)Stahlgehäuse Stahlgehäuse oder aus einer Aluminiumfolie gleicher Wandstärke oder aus einer Verbundfolie, die eine Gas-Barriereschicht aus Aluminium enthält.

Speziell gegenüber den VIP aus Edelstahl-Gehäusen nach DE 42 14 002 umfassen die besonderen Vorteile einer in-vacuo hergestellten VIP mit einer Edelstahlfolie als Ummantelungsmaterial eine reduzierte Wärmeleitung über die transversalen Wärmebrücken, weil geringere Ummantelungsquerschnitte verarbeitet werden können, da vom VIP-Kern während der Fertigung kein Druckdifferential aufgenommen werden muß sowie ein reduziertes Wärmebrückenproblem dadurch enthalten ist, daß an 2 Seiten einer eg. rechtwinkligen (rechteckigen) VIP die entsprechende Folie ohne Laschenbildung zu einem Schlauch gefaltet wird und dort achtmal weniger Wärme leitet als entsprechende Wärmebrücken aus Aluminium und zur Reduzierung der Gesamtwärmebrücke an den zwei weiteren Seiten die resultierenden Laschen gefaltet und an den entsprechenden transversalen Außenwänden der VIP an- oder verklebt beziehungsweise verlötet werden und keine lösbaren Verbindungen enthalten sind (s. **Bild 5**).

Die sogenannte "Wärmebrücke" an den transversalen Außenseiten stellt eine grundsätzliche Einschränkung der Wärmefluß-Barrierefunktion einer VIP dar. Hier hat eine VIP-Stahlfolie ohne weitere Komponenten beispielsweise gegenüber einer Aluminiumfolie ohne weitere Komponenten den Vorteil, bei gleichem Folienquerschnitt eine achtmal geringere transversale Wärmeleitung zu verursachen. Aufgrund der höheren Festigkeit von Stahl kann der entsprechende Querschnitt und somit die absolute Wärmeleitung von Stahl an den transversalen Außenseiten der VIP gegenüber einer transversalen Außenseite aus Aluminiumfolie weiter gesenkt werden. Die besonderen Eigenschaften von Stahl wie relativ kostengünstige Verfügbarkeit und gegenüber allen bisher in Betracht gezogenen Materialien erheblich verbesserte Schadenstoleranz (i.e. weniger leicht zerstörbar) infolge der typischen Edelstahleigenschaften wie Festigkeit bis 500 -700 N/mm² (vgl. Kunststoffe bis max. 35 N/mm²), E-Modul 181 - 230 kN/mm² (vgl. Kunststoffe mit Zug-E-Modul im Bereich 0,1 - 20 kN/mm²), thermische Beständigkeit bis 1000°C (handelsübliche Verbundfolien nach Stand der Technik bis max. 80° C), die weit überlegen sind gegenüber typischen VIP-Folienwerkstoffen wie Polyethylen, kommen zum Tragen, wenn Stahl(folie) über den gesamten Querschnitt der VIP-Ummantelung angewandt wird.

Eine solche VIP erlaubt wesentlich höhere VIP-Einsatztemperaturen gegenüber einer VIP, bei der die Ummantelungswerkstoff aus einer Kunststoff-haltigen Verbundfolie, aber auch gegenüber VIP aus einem kunststoffreien Folie aus einem relativ niedrigschmelzenden Werkstoff wie Aluminium besteht (NB. auch eine nach Ausführungen 4 - 7 angefertigte Aluminium-Ummantelung erlaubt den sichereren Einsatz bei höheren Einsatztemperaturen gegenüber den handelsüblichen VIP-Verbundfolien gemäß Stand der Technik). Bei völliger Abwesenheit von Kunststoff als dem thermisch labilsten Bestandteil einer Verbundfolie mit Metall-Gasbarriereschicht ergeben sich Produktvorteile wie absolute Vakuumdichtheit über einen längeren Zeitraum, i.e. P(t) = const. (bei VIP nach Stand der Technik steigt der Innendruck im Vakuum-Innenkern langfristig unter anderem aufgrund von imperfekten weil inhomogenen Kunststoff-Dichtungen wieder an). Das überlegende P(t)-Verhalten der erfindungsgemäßen VIP-Ummantelung beruht auf a) der metallischen Versiegelung durch Verschweißung bei relativ hohen Temperaturen bezogen auf den Temperatur-stabilsten Bestandteil der VIP-Ummantelung sowie b) auf der Abwesenheit von Kunststoffen in der VIP-Ummantelung. Typische Kenndaten einer VIP mit einer in-vacuo verschweißten Ummantelung aus Edelstahlfolie und ohne lösbarer Verbindung sind Wärmeleitung λ < 3 x 10⁻³ W/mK und P(t) für t = 0 < 4 mbar mit den nach Ausführung 4 - 6 in-vacuo angefertigten metallischen Schweißnähten. Ferner wird ein wesentlich verbessertes Zeitverhalten des Druckes im VIP-Innenraum, dem VIP-Kern erzielt. So beträgt P(t) für t= 2 Jahre denselben Wert für Druckbereiche < 5 mbar oder für jeden anderen Wert wie für t = 0, in jedem Fall aber ein besseres Zeitverhalten als VIP nach dem Stand der Technik, in denen in der Regel ein Anstieg des Innendruckes bereits nach t_{crit} = 1 Jahr feststellbar ist. Hieraus ergeben sich effektiv erhöhte Lebensdauer-Zeitspannen t_{Leb} sowie umgekehrt entsprechende Freiheitsgrade bei der Auslegung der VIP-Versiegelung für eine gegebene beziehungsweise geforderte Lebensdauer je nach Verbraucherart (t_{Leb}(Geräte) < t_{Leb}(Fahrzeuge), t_{Leb}(Gebäude)).

### Ausführung 8 Kunststoffreies in-vacuo Fügen metallischer Strukturen in einer Fertigungskette

Der Erfindung liegt die Aufgabe zugrunde, das in-vacuo Fügen als den Geschwindigkeits-bestimmenden Schritt bei hohen Fügegeschwindigkeiten am Beispiel kunststoffreier metallischer Werkstoffe wie Edelstahlfolien einer VIP im Vakuum in eine Fertigungskette zu integrieren.

Die Lösung der Aufgabe wird durch eine zeitliche Verkürzung der Relativbewegungen pro in-vacuo zu fügendes Vorprodukt dadurch erzielt, daß die vakuumtaugliche Fügeaparatur nach einem oder mehreren der Verfahren nach Tabelle 1 eine Kombination aus gegenläufiger und paralleler Bewegung zum Vorprodukt im Fügebereich ausführt, worin in-vacuo (Auf)Schmelz-Schweißverfahren bei T > T_{S} und Festkörper-Schweißen bei T < T_{S} am Beispiel einer VIP mit monolithischer Ummantelung aus Metall oder Legierung eingesetzt werden. Es wird auf die Verfahrensansprüche 9 - 14 hingewiesen.

Erfindungsgemäß erlaubt die in-vacuo Relativbewegung des Fügens ein kontinuierliches Fügen der VIP-Versiegelung via einer in-vacuo Fertigungskette unter kontinuierlichem Ersatz via Abfuhr des gefügten Produktes von und Zufuhr des entprechenden mindestens einen Vorproduktes in den Fügebereich der Vakuumkammer. Ausführung 2 enthält eine in-vacuo Relativbewegung des Produktes relativ zur Versiegelungsvorrichtung. Bei besonders großen zu fertigen Strukturen wie besonders große VIP ist es dagegen besonders vorteilhaft, die noch offene VIP in einem Fügebereich der Vakuumkammer zu fixieren und die Schweißvorrichtung wie eine Laser-Schweißapparatur oder die mindestens zwei Rollenelektroden einer vakuumtauglichen Rollnahtschweißmaschine entlang einer Präzisionsführungsschiene an der zu verschweißenden Lasche entlang zu fahren. Der Grund hierfür ist, daß die lineare Präzisionsbewegung zum Beispiel einer in-vacuo Laserapparatur einfacher zu steuern ist als beispielsweise eine VIP mit einem Querschnitt von 2 m².

Erfindungsgemäß wird eine "automatisierte in-vacuo Relativbewegung" zwischen Schweißvorrichtung und Produkt durchgeführt, worin die Schweißvorrichtung eine vakuumtaugliche Festkörper-Schweißvorrichtung oder eine vakuumtauggliche (Auf)Schmelz-Schweiß-Vorrichtung nach einem oder mehreren der Verfahren in Tabelle 1 ist, worin die entsprechende Vorrichtung beweglich relativ zu dem zu fügenden Vorprodukt und das Vorprodukt in einem in-vacuo Verarbeitungsbereich der entsprechenden Vakuumkammer positioniert und (mit einer Halterung) arretiert (fixiert) wird. Vorzugsweise wird das Vorprodukt dabei auf einer Führungsschiene in die Position des in-vacuo Verarbeitungsbereichs gebracht. Auch ist es vorteilhaft, das Vorprodukt zusammen mit einer lokal fixiert arbeitenden in-vacuo Fügeapparatur auf einer Führung zusammen zu fixieren und während des Fügevorgangs gemeinsam innerhalb des in-vacuo Fügebereiches fortzubewegen, sodaß während des in-vacuo - Fügens bereits einem neuen Arbeitsgang mit einem neuen zu fügenden Exemplar Platz gemacht wird.

Durch folgende Maßnahmen wird mit den Verfahren nach Tabelle 1 eine große Stückzahl kunststoffreier metallischer VIP-Ummantelungen wie Edelstahlfolien oder Folien aus einem NE-Metall in-vacuo versiegelt:
1. Unabhängige Kühlkreisläufe kühlen die in-vacuo Schweißnaht lokal in der Nähe der Schweißnaht durch mit der Fügeapparatur mitgeführte Kühlrollen nahe der Schweißnaht (s. Ausführung 4)
2. Unabhängige Kühlkreisläufe kühlen Elektroden der Widerstandsschweißverfahren mit einer Kühlflüssigkeit sowie Kühlfallen für lokale Vakuumkontrolle im Bereich der Schweißnahtbildung.
3. Metallische Werkstoffe minimieren Ausgasung aus der Oberfläche von Hydraulikvorrichtungen wie metallische Stretchschläuche für Hydraulikflüssigkeitsleitungen sowie der Vorprodukte und Produkte.
4. In-vacuo Spannungen im Druckbereich 10⁻³ bis 10⁻¹ mbar nicht über 50 V.
5. Schwebetechnik und verschleißfreie Führungen zur Durchführung des in-vacuo Transportes.

Diese Maßnahmen erlauben die weitestgehende Vorbereitung des mindestens einen Vorproduktes unter Normalbedingungen und die Beschränkung des Vakuum-Fügens auf das in-vacuo Verschweißen einer einzigen Seite, der sogenannten Stirnnaht einzelner VIP mit hoher Stückzahl. Bei einer quadratischen oder rechteckigen VIP aus zwei gegenüberliegenden Folien werden demnach drei Seiten vor Einbringen der VIP in die entsprechende Vakuumverarbeitungsapparatur unter Normalbedingungen vakuumdicht verschweißt oder es wird eine zu einem Schlauch gefaltete oder geknickte kunststoffreie Folie verwandt,die zunächst durch Falten oder Knicken zwei fügefreie vakuumdichte VIP-Seiten liefert und unter Normalbedingungen zunächst nur an einer Seite vakuumdicht verschweißt wird. Auf diese Weise reduziert sich die Anzahl der überstehenden Laschen (Überlappungen) mit der Breite x auf 2 pro rechteckiger VIP. Danach wird die verbleibende offene Lasche zum Evakuieren des VIP-Kerns in einer Vakuumkammer für in-vacuo Fügen genutzt und anschließend im Vakuum selbst verschweißt. Entsprechende VIP sind frei von lösbaren Verbindungen wie Ventile und erzielen so eine höhere Produktsicherheit. Zur Unterstützung des Fügevorganges, bei dem Fügeapparatur und Vorprodukt gemeinsam arretiert werden und während eines in-vacuo Fügens eg. mit dem Widerstandspunktschweißen (s. Tabelle 1) eine Translationsbewegung durch den Fügebereich der Vakuumkammer durchführen (s. oben), werden entsprechende VIP zuvor unter Normalbedingungen zu der Form einer offenen Flasche vorbereitet, sodaß der VIP-Innenraum nur noch an einer entsprechenden Punkt-Öffnung versiegelt wird und die senkrecht zur Schweißnaht fortschreitende in-vacuo-Relativbewegung für Energiezufuhr und resultierende Verbindungsbildung auf die entsprechende Fügestelle beschränkt ist.

Auf diese Weise werden VIP mit rechteckigen, stumpf- und spitzwinkligen sowie runden VIP-Profilen in-vacuo hergestellt. Wärmeflußkontrolle wird gemäß Ausführung 2 durchgeführt. Die Größe der VIP ist von der Dimensionierung der eingesetzten Vakuumkammer für das in-vacuo-Fügen abhängig und es werden VIP mit einer kunststoffreien metallischen Querschnittsfläche bis zu 3 m² erzielt. Typische VIP-Wandstärken inklusive VIP-Kern liegen im Bereich von 10 bis 120 mm. Mit dem Laser- und dem Elektronenstrahlverfahren werden in-vacuo an allen Seiten Laschen-freie VIP hergestellt. Die eingesetzten Pulverkerne sind bis 1400°C stabil. Sofern Laschen wie beim Rollnahtschweißen verbleiben, werden überstehende Restnähte gefaltet und an die transversale Außenseite der entsprechenden VIP angeklebt. Einerseits reduziert dies die Wärmebarriere (transversaler Wärmeflußwiderstand) bei besonders dünnen transveralen Stahlummantelungen an zwei Seiten gegenüber Edelstahlfolien-VIP ohne Restnähte beziehungsweise überstehenden Laschen, andereseits wird so die Wärmebarriere gegenüber den konventionellen VIP mit Edelstahlgehäuse und lösbarer Verbindung aufgrund signifikant reduzierter Ummantelungsqüerschnitte erhöht.

Dadurch sowie durch die Kontrolle des Vakuumzustandes im Fügebereich der Vakuumkammer unmittelbar an der Schweißnaht (s. Ausführungen 1 - 7) ist ein einziger Evakuierungsvorgang der Vakuumkammer pro Anzahl N von entsprechenden Vorprodukte und/oder gefertigten Strukturen notwendig, bevor über eine erneute Ein- und Ausschleusung der Vor- und Endprodukte die entsprechende Vakuumfügekammer neu chargiert wird (vgl. Verfahrensansprüche 9 - 14).

### Ausführung 9 Kunststoffreies in-vacuo Fügen beschichteter VIP-Ummantelungen

Der Erfindung liegt die Aufgabe zugrunde, individuelle in-vacuo hergestellte Vakuumisolationspaneele (VIP) bei niedrigem Kosten-Leistungsverhältnis herzustellen, wobei die Betonung auf der Verbesserung ausgesuchter Oberflächeneigenschaften wie Verschleißfestigkeit und auf Reduzierung der Stückkosten durch Einsatz einer kunststoffreien Ummantelung und Automatisierung der VIP-Fertigung liegen soll. Hinsichtlich Ausführung 9 wird auf Ausführung 7 und die vom Verfahren nach Anspruch 1 ff. abhängigen und ansonsten unabhängigen VIP-Ansprüche 17 und 19 sowie auf die abhängigen VIP-Ansprüche 18 und 20 ff. hingewiesen, worin eine rein aus einer Metallfolie bestehende Ummantelung durch in-vacuo-Fügen verarbeitet wird.

Es wird eine kunststoffreie Metallfolie mit PVD oder CVD beschichtet, wobei mindestens eine der chemischen Komponenten A (zum Beispiel Yttrium), B (zum Beispiel Kohlenstoff), und C (zum Beispiel Zirkon) der Beschichtung während eines Schmelzvorganges im Kristallgitter des Werkstoffes der metallischen Folie lösbar ist. Dabei enthält die resultierende in-vacuo hergestellte Schweißnaht vorzugsweise eine einschichtige homogene Mikrostruktur. In-vacuo Fügen favorisiert Einfachheit des Füge-Verfahrens. Deshalb werden vorzugsweise Festkörper-Schweißverfahren bei Schweißtemperaturen T < T_{S} und b) Aufschmelz-Schweißverfahren bei T > T_{S} ausgeführt, worin T_{S}=Schmelztemperatur des Basismaterials der VIP-Ummantelung oder der höchstschmelzenden Ummantelungskomponente, worin die pneumatische und hydraulische Systeme mit metallischen (ggfs. Stretch-)Schläuchen ausgestattet sind.

### Ausführung 10 Hochvakuum-VIP ohne lösbare Verbindung und mit kunststoffsfreier in-vacuo Ummantelung und intra-Dämmkern-Abstandshalter

Der Erfindung liegt die Aufgabe zugrunde, einen praktikablen Ersatz für teure Dämmkern-Füllstoffe wie Aerogele zwecks wertbewerbsfähigerem Einsatz einer VIP bei hohen Temperaturen bereitzustellen.

Die Lösung der Aufgabe wird durch eine hochvakuumdichte Ummantelung aus einem Metall oder einer Legierung erzielt, worin
a) kein Dämmkern, aber dünnwandige metallische oder keramische Streben gegen Kollabierung der Ummantelung durch das Hochvakuum und als Ersatz für teure Aerogele für Anwendungen bei Temperaturen > 80° die Hochvakuum-VIP komplettiert (s. Ausführungen 12 und 13).
   Es wird auf Verfahrensansprüche 7 bis 9 und auf VIP-Ansprüche 17 ff., und insbesondere auf Anspruch 26 hingewiesen. Alternative Anwendungen der Hochvakuum-VIP sind der Einsatz eines
b) relativ billigen Dämmstoffes wie Polyurethan für Anwendungen bei Raumtemperatur, tiefen Temperaturen und bis 80°C, oder
c) eines Dämmkerns aus Aerogelen für den Einsatz bei allen Temperaturen, innerhalb der auch die Ummantelung einsetzbar ist.

Besonders vorteilhaft sind dabei rein metallische oder aus einer Legierung bestehende VIP-Ummantelungen oder ausgasungsarme Ummantelungen aus einem Metall-Keramikverbund, worin die Keramik für die transversalen Außenseiten zur Reduzierung des Wärmebrückenproblems an dieser Stelle eingesetzt werden (s. (vgl. Ausführungen 13 - 15 weiter unten). Die intrinsische Steifigkeit einer Stahlfolie einer VIP ohne Dämmkern wird ferner gegen Kollabieren auf einfache Weise konstruktiv durch eingeschweißte oder anders (ein)gefügte Quer- oder Längsprofile eg. mit einem U- oder V-Profilquerschnitt als intra-Dämmkern-Abstandshalter mit erheblichen Gewinn an dimensionsbehafteter Steifigkeit verstärkt, bevor sie zum abschließenden Vakuumverarbeitungsschritt in eine Vakuumapparatur eingebracht wird. Das Hochvakuum kompensiert dabei den Wärmetransfer-Effekt der aus Stahl oder einem anderen Metall bestehenden intra-Dämmkern-Abstandshalter. Solche VIP sind besonders vorteilhaft einzusetzen im LKW-Transport, weil sie hervorragend die Vibration des Fahrbetriebs und resultierende Scherkräfte aufnehmen. Die Abwesenheit einer lösbaren Verbindung an der Ummantelung ist essentiell für die Beibehaltung des Hochvakuums in dem in-vacuo und somit ohne Druck-Differential versiegelten VIP-Innenraum. Entsprechende Hochvakuum-VIP sind in jeder Hinsicht praktisch weil einfach und dem Prinzip folgend: wenig Oberfläche, wenig verschiedene Werkstoffe, wenige Details - einfach dadurch, daß die Fertigung in einer kompatiblen und tauglichen Art und Weise in das Hochvakuum verlagert wurde.

Die Herstellung der Dämmkern-freien Ausführung ist besonders schnell, weil keine hohen Oberflächen bzw. Oberflächen-zu-Volumen-Verhältnis der VIP-Dämmkern-Füllstoffe für Isolationszwecke notwendig sind. Ein hohes Oberflächen-zu-Volumen-Verhältnis der VIP-Dämmkern-Füllstoffe ist für (die Herstellung von) Hochvakuum-VIP kontraproduktiv, weil die Abpumpzeit proportional zur effektiven mittleren freien Weglänge der sich so einstellenden VIP-Innenraumatmosphäre ist.

Erfindungsgemäß wird der VIP-Dämmkern-Füllstoff zur Verkürzung des Abpumpvorganges für die Alternativen b) und c) erwärmt oder erhitzt, bevor die in-vacuo -"Verschweißung" durchgeführt wird. Erfindungsgemäß wird hierzu die über mindestens eine Lasche offene VIP auf eine planparallele und erwärmte oder erhitzte Heizplatte aus einem ausgasungsarmen und gut leitfähigem Material wie Kupfer oder Aluminium gelegt, bis das gewünschte Hochvakuum sowie das entsprechende dynamische Druckgleichgewicht zwischen Vakuumkammeratmosphäre und VIP-Innenraum erreicht worden ist.

### Ausführung 11 Druckabhängiges in-vacuo Fügen für metallische VIP-Ummantelungen

Der Erfindung liegt die Aufgabe zugrunde, Material-spezifisch kritische Parameter wie den Druckbereich im VIP-Kern und die Duktilität der VIP-Ummantelung in Abhängigkeit vom Material der VIP-Ummantelung zu definieren, um das in-vacuo Fügen frei von Störungen durch die entsprechenden Ummantelungsmaterialien auszuführen.

Erfindungsgemäß werden-bei in-vacuo Fügeverfahren, bei denen eine hohe Temperatur und/oder flüssige Phase oder teilflüssige, i.e. "Mushy zone"-artige Schmelz-Festkörpergemische (i.e. in in-vacuo Schweiß-Schmelzen) oder relativ hoch zum betreffenden Schmelzpunkt erhitzte Festkörper wie insbesondere solche auf Mg-Basis auftreten, die vom Sättigungs-Dampfdruck des Materials der VIP-Ummantelung spezifisch abhängigen Verdampfungsprobleme dadurch vermieden, daß die Vakuum-Atmosphäre an den Sättigungsdampfdruck des entsprechenden Ummantelungsmaterials oder das Ummantelungsmatertial an den geforderten VIP-Kern-Innendruck angepaßt wird.

Wenn mit der Vakuumversiegelung erfindungsgemäß besonders hohe Vakua erzielt werden, also besonders niedrige Drücke im VIP-Innenraum, ist es besonders vorteilhaft, hochschmelzende VIP-Ummantelungs-Werkstoffe mit sehr niedrigem Sättigungsdampfdruck wie Tantal oder Stahl für Ummantelung und Versiegelung zu nehmen. Je höher der Schmelzpunkt T_{S} des Werkstoffes der Ummantelung und der Versiegelung, desto niedriger der Druck in der Vakuumverarbeitungskammer beziehungsweise VIP-Innenraum. Dagegen werden Ummantelungen auf der Basis von Magnesiumlegierungen vorzugsweise im Grobvakuum versiegelt. Der Einsatz von Metallfolien ist demnach sowohl aus produkttechnischen (s. Ausführungen 7 - 10) als auch aus vakuumverfahrens-technischen Gründen (vgl. Ausführungen 1 - 6) besonders vorteilhaft.

Bei der Selektion der Metallfolien wird deren Duktilität durch geeignete Vorauswahl wie Reinheit und Gefüge sichergestellt. Folien aus Metallen oder Legierungen mit einer hexagonalen (hexagonal dichtest gepackt, hdp) Gitterstruktur wie zum Beispiel auf Ti-, Mg-, Be-Basis haben eine homogene Korngröße im Bereich von 1 Mikrometer, um Duktilität und Verformbarkeit zu sichern. Entsprechende Folien-Mikrostrukturen sichern ebenfalls Knickfestigkeit durch Widerstand gegen Zwillingsbildung im Kristallgefüge aufgrund der Feinkörnigkeit im Mikrometerbereich und entsprechender Homogeneität. Als obere Toleranz für Mg-Legierungen werden Korngrößen von 8 Mikrometern festgelegt (cf. E. F. Emley, Magnesium Technology, Pergamon, 1966).

### Ausführung 12: Kunststoffreies In-vacuo Fügen von Metall-Keramik Verbünden (für VIP)

Der Erfindung liegt die Aufgabe zugrunde, ein stückkostengünstiges stoffschlüssiges (i.e. physikalischchemisches) in-vacuo Fügeverfahren für eine gasdichte Metall-Keramik Verbindung mit hoher mechanischer Festigkeit und Temperaturbelastbarkeit zu erzielen.

Die Lösung der Aufgabe wird durch ein Einstufiges (Direktes) In-vacuo Lötverfahren mit Widerstands-Hartlöten oder Widerstands-Weichlöten oder Laser-Weichlöten, ein in-vacuo Laserschweißen, ein in-vacuo Elektronenstrahlschweißen, ein in-vacuo Kaltpreßschweißen, ein Ofen-Hartlöten, ein in-vacuo-Diffusionsschweißen, ein in-vacuo-Heißpressen, ein Zweistufiges (Indirektes) In-vacuo Lötverfahren für einen Reaktionsverbund oder ein in-vacuo Reibschweißen der Metall-Keramik Verbund-Nahtstelle erzielt.

Erfindungsgemäß wird das Vakuum ggfs. in Verbindung mit einer in-vacuo Vorerwärmung der zu lötenden Verbindungsstelle zur Zersetzung von Oberflächen-Oxyden und/oder es wird erfindungsgemäß eine in-vacuo Vorbearbeitung der Füge- oder Kontaktstelle, hier insbesondere die der Keramik, durch Glätten, Polieren, Fixierung eines Lotes oder Metallisieren eingesetzt. Nach einer ersten Evakuierung zwecks Herstellung einer kontrollierten Unterdruckatmosphäre wird eine Spülung der Vakuumkammer mit einem Schutzgas zur Eliminierung von ggfs. kritischen Residual-Sauerstoffmengen in der Vakuumanlage für das in-vacuo Fügen nicht-oxydischer Keramiken oder mit einem reduzierenden Gas für das in-vacuo Fügen oxydischer Keramiken eingesetzt.

Beim Einstufigen (Direktem) In-vacuo Lötverfahren wird für Ausbildung von Metallen mit geringer Oxidationsneigung eine Metallschicht wie z. B. ein Lot vor Einbringen der Vor-Produkte in das Vakuum auf die Keramik aufgetragen. Insbesondere bei reaktiven Metall-Keramik Verbünden (eg. mit A1) wird eine automatische in-vacuo Auftragung des Lotes dadurch vorgenommen, daß von einer Wickelmaschine das Lot abgewickelt wird und das Lot ggfs. unter Einsatz eines Führstabes leicht auf die zu verlötende Kante der Keramik oder des Metalls oder Legerung aufgedrückt, sodaß ein genauer Sitz des Lots auf der Lötstelle während des Weitertransportes zum in-vacuo Fügebereich für den Lötvorgang gewährleistet ist.

Folgende Lote werden dabei eingesetzt:
1. Silber-Basis-Lote für Stähle, warmfeste Konstruktionen, Kupfer und Cu-Legierungen sowie Nickel und Ni-Legierungen, darunter eutektische AgCu-Lote.
2. Al-Si-Basis-Lote für Al-Legierungen.
3. CuP-Lote für Kupfer und Cu-Legierungen.
4. Gegen die Ausbildung spröder intermetallischer Zonen in der Verbindung wird Hf als Lotelement zur Ausbildung einer Diffusionsbarriere eingesetzt.
5. Für verbesserte Adhäsion wird ein chemisch Sauerstoff-affines Zusatzelement zum Lot wie Ti, Zr, Al, Si, Mn oder Li eingesetzt (aktive Hartlöt-Füllmaterialien, s. Anspruch 4 F.).

Die Erfindung wird an einem in-vacuo Widerstands-Hartlötverfahren einer Stahlfolie näher dargestellt. In dem System aus Elektrode, Keramik, Lot und Metallfolie stellt die Keramik das Material mit dem potentiell höchsten Widerstand dar. Folglich werden Elektroden aus einem Material hoher elektrischer Leitfähigkeit wie Cr-Cu-Legierungen (UNS C18200) AgW-Legierungen oder CuW-Legierungen eingesetzt. Gleichmäßigkeit der Erwärmung der Lötstelle wird durch Einsatz einer wassergekühlten Rollenelektrode wie beim Erhitzen via (kontinuierlichen) Widerstands-Schweißens) erzielt, deren Kontaktfläche die Hälfte der Lötfläche(nbreite) nicht unterschreitet und vorzugsweise die gleichen Konturen aufweist wie das zu verlötende Teil. Dieser Anforderung kommt die Tatsache entgegen, daß metallische oder aus einer Legierung bestehende VIP-Ummantelungsfolien auf Keramik-Kanten aufgelötet werden sollen.

Auf diese Weise erhitzt sich die Keramik-Lot-Schnittstelle am schellsten. Der eigentliche Lötvorgang wird durch dynamisches Heiß-Pressen der Metall-Keramik Nahtstelle mit der Rollenelektrode bei definierten Pressdruck P, Löttemperatur T und Lötzeit t ausgeführt, die ausreichende Kapillarwirkung (Benetzung) zwischen den zu verlötenden Strukturteilen sicherstellt und die Beibehaltung einer gleichmäßigen Temperatur, Vermeidung von Überhitzung der Keramik-Lot-Schnittstelle und den rechtzeitigen Abschluß des Lötvorganges durch eine Reduzierung der Temperatur an der Schnittstelle zwischen Keramik und Metallfolie gewährleistet.

Wahlweise wird ein Vakuumofen oder vakuumtauglicher Vorwärmer eingesetzt, um hochfeste oder chemisch stabile Löt-Verbindungen bei relativ niedrigen Löttemperaturen, relativ kurzen Lötzeiten und geringen Vakuumanlagenaufwand zu erzielen. Auf diese Weise wird unter Druck durch Widerstands-Preßlöten einer vorgewärmten Stahlfolie auf einen VIP-Rahmen aus Al₂O₃ mit einer eingelegten Cu-Lötfolie eine Verbindung mit geringer Spaltbreite und 50 - 60 % der Festigkeit von Al₂O₃ erzielt. Auf diese Weise wird vermieden, daß eine zu dicke Lötnaht mit ungenügender Festigkeit oder eine zu dünne Lötnaht, bei der das Lötmaterial an die Peripherie der Lötnaht herausgequetscht wurde und lokal jegliche Verbindung unterlaufen wird, vermieden.

Ferner werden Widerstands- oder Laser-Weichlöten eingesetzt, wenn das Folienmaterial der Ummantelung selbst einen relativ hohen elektrischen Widerstand aufweist und Gleichmäßigkeit der Temperatur der Umgebung des Lotes rascher eintritt als beim Hartlöten (s. oben). Beim Widerstands-Weichlöten werden dann vorzugsweise Elektroden aus einem Material mit hohem elektrischen Widerstand wie Graphit eingesetzt.

Insbesondere das Laser-Weichlöten mit dem Neodymium -gedopten Yttrium-Aluminium "garnet" (Nd:YAG) erlaubt die gut-fokussierte und hinsichtlich Ort und Zeit gut-dosierte Einbringung der lokal erforderlichen Energie für das Weich-Löten mit entsprechendem feinem Korn und Duktilität sowie Abwesenheit von thermischen Spannungen und Rißbildung in der Lötnaht. Energie-Reflektierung durch Oberflächenemissivität der Lötstelle ist durch das in-vacuo Weichlöten ein geringeres Problem als an einer Normalatmosphäre, weil der Sauerstoff unter Beachtung der oben aufgeführten Maßnahmen vollständig "getrappt" wurde und dies insbesondere bei in-vacuo Fügen gleicher Teile in einer Fertigungskette gilt, für die sich das Laser-Weichlöten nach Optimierung der Parameter infolge der Konstanz dieser Parameter wie unsbesondere die Geschwindigkeit der in-vacuo Relativbewegung besonders eignet, weil sich notwendige Rückmeldungen erübrigen (vgl. Verfahrensmerkmal f2) des Anspruches 1). Sofern verschiedene oder alternierende Vorprodukte großer Anzahl gefügt werden, löst ein die Lötstelle in-vacuo kontrollierender Infrarot-Detrektor eine intelligent automatisierte Anpassung der lokalen Lötparameter P, T und t aus. Entsprechende Lötvorgänge sind billig, weil sie aufwendige Inspektionsroutinen nach dem in-vacuo-Fügen erübrigen.

### Ausführung 13: Kunststoffreie VIP mit in-vacuo Keramik-Wärmebrücke und ohne lösbare Verbindung

Der Erfindung liegt die Aufgabe zugrunde, individuelle VIP mit tragenden Eigenschaften, Maßhaltigkeit und hoher Temperaturstabilität und sehr hoher Wärmedämmung bei niedrigem Kosten-Leistungsverhältnis unter den Bedingungen der Automatisierung nach Ausführung 12 herzustellen, wobei die Betonung auf der Erhöhung der Leistung (hier: integrale Wärmedämmung der Gesamt-VIP inklusive Wärmebrücken an transversalen Außenrädern) durch eine Keramik-Wärmebrücke liegt.

Die Lösung der Aufgabe wird durch eine VIP mit einer Ober- und Unterfolie aus Edelstahl und einem geschlossenen viereckigen Rahmen aus 100% dichter, i.e. Vakuum-dichter, feinkörniger Si₃N₄ Keramik, feinkörniger Al₂O₃-Keramik oder feinkörniger ZrO₂-Keramik mit hoher Schadenstoleranz und Stoßfestigkeit erzielt.

Erfindungsgemäß wird die vorbezeichnete VIP in-vacuo nach dem "Aluminium-Verfahren" (Einsatz von Al-Lötfolie für Stahl-Keramik-Verbünde) gefügt. Hierzu wird Aluminium-Lötfolie mit einer Wandstärke von 0,5 mm zwischen die zu verbindenen Oberflächen aus Stahlfolie und Si₃N₄ Keramik plaziert. Maximale Festigkeit der Verbindung wird bei 600°C unter einem Pressdruck von 25 MPa nach etwa 15 Minuten in-vacuo Pressen erzielt. Gute Ergebnisse ergeben sich auch bei Einsatz von Al-Lötfolie für VIP aus einem Verbund aus Stahlfolie und Al₂O₃-Rahmen bei 700°C unter einem Preßdruck von 10⁻² Pa nach bereits für 5 min. Das "Aluminium-Verfahren" eignet sich ebenso hervorragend zum in-vacuo Fügen 100% dichter und feinkörniger Keramiken aus ZrO₂, Sialon. Kordierit und α-SiC mit Nimonic 80-Folie. Mit der erfindungsgemäßen Fertigung nach Ausführungen 12 und 13 werden durch Einsatz schadenstoleranter Keramiken für den transversalen Ummantelungsrahmen gewährleistet:
- reduzierte Fertigungs- und Materialkosten,
- reduzierte Wärmeleitung (niedrigste λ-Werte zur Lösung des Wärmebrückenproblems),
- garantierte Vakuumkompatibilität der entsprechend preisgünstigen Fertigung.
- höchste Einsatz-Temperaturen: a) durch Keramik-Verstärkung *anstelle* eines Füllstoffes im Dämmkern plus Hochvakuum oder b) durch Keramik-Verstärkung mit einem temperaturstabilen Füllstoff wie pyrogene Kieselsäure oder Aerogele im Dämmkern.

Die Konstruktion erlaubt im Randbereich der VIP hohe Druckfestigkeit, hohe Form- und Maßgenauigkeit und hohe Wärmeisolierung (s. **Bild 6**). Die Lösung des Wärmebrückenproblems mit einer mit einer in-vacuo Wärmebrückenisolierung durch Keramik-Rahmen ist vakuumtauglicher als mit jedem Kunststoff für den VIP-Rahmen infolge der niedrigeren Ausgasung beziehungsweise Sättigungsdampfdrücke entsprechender Keramiken und ermöglicht eine kostengünstigere weil zum Beispiel "getter"-Material-freie in-vacuo Fertigung und höhere Langzeit-Stabilität des Unterdruckes im VIP-Innenraum auch bei höheren Anwendungstemperaturen. Sie wird durch die Ober- und Unterfolie aus einer Edelstahlfolie anstatt mit einer handelsüblichen Verbundfolie unterstützt.

### Ausführung 14: Hochfeste VIP mit Verstärkungen oder -Versteifungen aus Keramik

Der Erfindung liegt die Aufgabe zugrunde, eine VIP mit höchster Wärmeisolation und statischer Belastbarkeit für Anwendung bei beliebigen Temperaturen bereitszustellen.

Die Lösung der Aufgabe wird durch einen "Sandwich"-Aufbau der VIP gemäß Bild 7 und den darin enthaltenen intra-Dämmkern-Verbindern **26** beziehungsweise intra-Dämmkern-Abstandshaltern **26** zwischen der jeweiligen Ober- und Unterfolie **27a** und **27b** erzielt, worin diese vorbezeichneten Verbinder beziehungsweise Abstandshalter aus einem wärmeisolierenden Material hoher Festigkeit bestehen (s. a. **Bild 6**). Hinsichtlich konstruktiver Formen von **26** wir auf **Bild 8** und Anspruch 19 hingewiesen.

Erfindungsgemäß werden für Anwendungen bei relativ *niedrigenden* Temperaturen Kernmaterialien **28a** aus Polyurethan oder anderen Schäumen sowie:
a) *Vakuum-taugliche Klebstoffverbindungen aus kunststoffreien Klebern* **29a** zum in-vacuo Fügen des Verbundes der Metallfolien mit dem Keramikrahmen **25** und/oder der vorbezeichneten Metall- Keramik-Verstärkungen **26** oder Metall- Keramik-Versteifungen **26**, worin eg. ein anorganischer Klebstoff auf mineralischer Basis mit einer Walzauftragnaschine auf die zu verklebende Keramikkante des VIP-Rahmens aufgewalzt und der Keramik-VIP-Folienverbund unter Druck verklebt wird (s. Anspruch 4.D), und/oder
b) *Einstufiges (Direkte) in-vacuo Löten* von Oxidgemischloten (eg. PbO-ZnO-B₂O₃ auf Si₃N₄) **29b** für Verbindung mit Metallen bei Löttemperaturen von 350° C - 1700° C und Lötzeiten im Minutenbereich. eingesetzt.
   Erfindungsgemäß werden für Anwendungen bei relativ *hohen* Temperaturen Kernmaterialien aus pyrogener Kieselsaure (Pulver oder Plattenform) **28b,** Aerogelen **28c** und/oder Kernmaterial-freie und/oder aus einem Hochvakuum **28d** oder einem Gradientenwerkstoff **28e** (s. Anspruch 18) bestehende VIP-Innenräume **28** sowie folgende VIP-Metall-Keramik-Verbünde mit metallischen Lötfolien **29c** durch das *Einstufige (Direkte) in-vacuo Löten* einer VIP-Ummantelung mit einem transversalen Keramik-Rahmen eingesetzt:
c) Aktivmetallöten von vorgewärmeten VIP-Ummantelungen aus Nb-Folie, Stahl-Folie etc. **27a** und/oder **27b** mit Aktivinetall, welches bei einer Löttemperatur von eg. 845°C eine höhere Affinität zu Sauerstoff, Kohlenstoff, Stickstoff oder Bor besitzt und unter Druck als eingelegte Lötfolie im Vakuum zur Reduktion der Oberfläche eines keramischen VIP-Rahmens wie Al₂O₃ führt.
d) Einsatz von aktivierten Metallen wie amorphen Metallfolien **27a** und/oder **27b** oder zersetztem Ti oder Zr in Loten mit entsprechendem Hydrid oder Loten mit W oder Mo aus entsprechendem Karbid.
e) Aktivmetallöten von vorgewärmten Ummantelungsfolien **27a** und/oder **27b** aus Nb, Stahl etc. mit Aktivmetall, welches bei einer Löttemperatur (eg. 845°C) eine höhere Affinität zu Sauerstoff, Kohlenstoff, Stickstoff oder Bor besitzt und unter Druck als eingelegte Lötfolie im Vakuum zur Reduktion einer Keramikoberfläche einer Verstärkung oder Rahmens einer VIP aus einer Keramik **26** wie Al₂O₃ führt.

### Ausführung 15: Lastaufnehmende und/oder warmfeste VIP-Verbünde ohne Spalt

Der Erfindung liegt die Aufgabe zugrunde, eine auf mindestens zwei individuellen VIP basierende großflächige und besonders effiziente Wärmedämmung für lastaufnehmende Anwendungen und Anwendungen bei einseitig höheren Temperaturen bereitzustellen.

Die Lösung der Aufgabe wird durch eine oder mehrere VIP mit einer Wärmebrückenisolierung aus einer Keramik nach den Ausführungen 13 oder 14 durch ein in-vacuo VIP-Fügen nach Ausführung 12 erzielt.

Erfindungsgemäß sind VIP nach Ausführung 14 für eine großflächige Wärmedämmung besonders vorteilhaft, weil sie kunststoffrei sind und eine konstruktiv verstärkte Ummantelung enthalten und relativ hohe Lastaufnahmen sowie Wärmedämmung gegenüber hohen Temperaturen ermöglichen. Besonders vorteilhaft ist der Einsatz konstruktiver Verbünde aus mindestens zwei VIP nach Ausführung 14 für' großflächige Wärmedämmung bei fugenlosem Stößeln. Konstruktive Verbünde von mindestens zwei individuellen VIP mit kompletter Stahlummantelung eignen sich aufgrund ihrer gegenüber VIP mit einer Ummantelung aus einer handelsüblichen Verbundfolie wesentlich verbesserten mechanischen Belastbarkeit und Eigenschaften inklusive Festigkeit und Steifigkeit auch bei höheren Temperaturen.

Laschenfreie VIP nach Ausführung 14 eignen sich auf einer Seite an eine Gebäudewand(fläche) angeklebt und entsprechend zu einem Verbund aneinander gestößelt auch zu dekorativen Zwecken. Besonders vorteilhafte Anwendungen sind entsprechende VIP mit einer Edelstahl-Ober- und Unterfolie, die mit einer Politur auf der Oberfolie versehen sind und zu dekorativen Zwecken ohne weitere Verkleidung an einer der Umgebung ausgesetzen Wand(ung) installiert werden. Es versteht sich, daß dann Stoßbeschädigung auch ohne Perforation zu vermeiden ist. In dieser Erfindung ist Ummantelung und Abdeckung in einem Arbeitsschritt möglich, weil eine (eg. Ober-)Folie aus Edelstahl besonders schadenstolerant ist. Ähnliches gilt für entsprechende VIP mit mindestens einer (eg. Ober-Folie) aus einem Kupfer-Basiswerkstoff wie OHC-Kupfer oder aus einem Tantal-Basiswerkstoff.

### Ausführung 16: VIP-Verbund mit niedrigem Kosten-Leistungsverhältnis ohne Spalt

Der Erfindung liegt die Aufgabe zugrunde, eine auf mindestens zwei individuellen VIP basierende großflächige Wärmedämmung bei niedrigem Kosten-Leistungsverhältnis bereitszustellen.

Die Lösung der Aufgabe wird durch eine oder mehrere VIP mit einer Wärmebrückenisolierung nach den Ausführungen 7 und 10 in-vacuo gefügt nach den Ausführungen 6, 8, 9 und 11 erzielt.

Erfindungsgemäß werden VIP-Verbünde mit niedrigem Kosten-Leistungsverhältnis hergestellt, jedoch ohne eine über den versiegelten Kern hinaus überlappende VIP-Edelstahlfolie (**Bild 2**). Die laschenförmige Überlappung verschwindet in-vacuo durch in-vacuo Endig-fügen wie nach Ausführung 6 oder durch nachträgliches Abschneiden, wobei eine präzise Endfügung durch eine Genauigkeitsprüfung im lateralen µm-Bereich unter Benutzung von DMS-Streifen für Positionierung der VIP und/oder interner oder externe Laser-Apparaturen für vakuum-interne Schweißung und/oder für nach dem in-vacuo Fügen nachträglich durchgeführtes Abschneiden. Die Lösung enthält Folien-überlappungsfreie VIP-Kanten gemäß Ausführung 15 und ist somit ebenso für dekorative Zwecke geeignet, jedoch ohne Verwendung von Keramiken als Werkstoff für intra-Dämmkern-Verbinder **26** beziehungsweise intra-Dämmkern-Abstandshalter **26.**

### Ausführung 17: VIP-Verbund mit Spalt für verdeckte Wärmedämmung

Der Erfindung liegt die Aufgabe zugrunde, eine auf mindestens zwei individuellen VIP basierende großflächige Wärmedämmung bei niedrigem Kosten-Leistungsverhältnis für dekorativfreie Anwendungen bereitszustellen.

Die Lösung der Aufgabe wird durch eine oder mehrere VIP nach Ausführung 4 erzielt, worin die Ummantelung aus einer monolithischen Edelstahlfolie bestehen soll.

Mit der VIP nach Ausführung 4 wird die Anzahl struktureller VIP-Anwendungen erheblich gesteigert. Hierbei ist insbesondere die Schaffung von VIP-Verbünden aus lateral aneinandergefügten VIP zu nennen, wobei die entsprechende Technik zur Realisierung des Aneinanderfügens aus:
- Bohrungen für Bohrlöcher, Verschraubungen und Klemmen in Überlappungen über den druckstabilen Grundkörper hinaus, worin die Überlappungen eine ausreichende Steifigkeit und Festigkeit zur Aufnahme von Scher-, Zug- und Druckkräften besteht.
Auch werden Laschen zweier VIP zunächst übereinandergelegt und dann zusammen mit einem Klebstoff unter Anwendung eines Pressdruckes verklebt.

Aus Edelstahl bestehende Laschen eignen sich bevorzugt für eine mechanische Befestigung via Nageln, Schrauben etc. unter Einsatz vorgebohrter Laschen etc. Es werden VIP mit einer Edelstahlummantelung und Laschen eingesetzt, weil sich die laschenförmigen Überlappungen über den isolierenden VIP-Innenraum hinaus für Befestigungen der VIP sowie für die Befestigung transparenter Schutzwerkstoffe geeigneter Steifigkeit eignen, wenn der Ummantelungswerkstoff Edelstahl ist.

Demgegenüber sind überstehende Laschen der VIP-Ummnatelungen handelsüblicher Verbundfolien nicht oder nur begrenzt halt- und nutzbar und mechanisch insbesondere bei einer mechanischen Befestigung leicht zerstörbar oder zu beschädigen. Entsprechende VIP-Verbünde aus mindestens zwei individuellen VIP mit einer Ummantelung aus einer handelsüblichen kunststoffhaltigen Verbundfolie bedürfen deshalb zusätzlichen Schutz der Vakuum-dichten Ummantelungdurch eine Abdeckung der Metallfolie aus einer (eg. Plexi)Glasplatte(nkonstruktion) oder durch einen konstruktiven Schutz durch andere transparente Werkstoffe, die koplanar zur VIP-Außenseite angebracht sind. Ein solcher Schutz ist häufig durch die Anwendung vorgegeben, wenn zum Beispiel die entsprechenden VIP(-Verbünde) für Gebäudeisolierung einschließlich entsprechender Dächer eingesetzt werden soll.

Als Werkstoff wird mindestens an einem Rand der Ummantelung des Vakuum-Innenraumes mit einem Füllstoffkern eg. aus einer Pulverplatte aus pyrogener Kieselsäure, aus Aerogel oder einem anderen VIP-Kernfüllstoff erfindungsgemäß Edelstahlfolie verwandt, worin die Edelstahlfolie eine Dicke im Bereich von 5 µm bis 200 µm aufweist, und die Edelstahlfolie bei Wandstärken < 15 µm in einer Verbundfolie mit O-Nylon (Wandstärke 15 µm), Trockenlaminierung ("dry lamination"), einen VM PET-Film (Wandstärke 12 µm), und mindestens eine erneute Trockenlaminierung und einem HDPE-Film mit einer Wandstärke von 50 µm enthalten ist, sodaß Anwendungen mit geringer Lastaufnahme oder einer solchen Lastaufbahme durch eine VIP und den entsprechenden Verbund möglich sind, bei denen die Belastung im Kernbereich unkritisch ist. Mit einer Vielzahl N_{V} von Vakuumisolationspaneelen wird ein VIP-Verbund derart hergestellt, daß über den Füllstoffkern hinausreichende Folienüberlappungen der Breite x, worin 0,2 x < 20 cm, übereinandergelegt und gefügt, verbunden oder versiegelt werden, darunter durch Verwendung eines Schweißverfahrens wie das Rollenschweißen und/oder einer Verschraubung. Aufgrund des ausreichend steifen und festen VIP-Folienwerkstoffes Edelstahl wird so eine kostengünstige Isolierwand(ung) geschaffen, die für großflächige Bedachungen von Häusern aller Art eingesetzt wird. Besonders vorteilhaft ist dabei die gleichzeitige Verschraubung einzelner VIP untereinander und mit der Bedachung selbst mit einer einzigen Verschraubung pro Bohrung durch die Überlappung, weil auf diese Weise ein unsachgemäßer Transport größerer VIP-Verbünde umgangen werden kann. Andererseits soll nicht verkannt werden, daß die Stahlfolie eine hohe Schadenstoleranz gegen penetrierende Stoßbeschädigung besitzt.

### Ausführung 18: Mehrfaches in-vacuo Fügen einer VIP in einer Fertigungskette

Der Erfindung liegt die Aufgabe zugrunde, eine Reduzierung des Pumpleistungsaufwandes pro Produktionseinheit durch ein in-vacuo Fügen einer Anzahl N einer VIP zwischen Evakuieren und Re-Komprimieren einer Vakuumkammer über die Installierung des Durchlaufens der Anzahl N durch eine Fertigungskette zu erzielen, um den VIP/Vakuumbehälter-Grundriß-Wirkungsgrad ("coverage") zu erhöhen.

Die Lösung der Aufgabe wird durch eine Automatisierung im Vakuum stattfindender und extern angesteuerter automatisierter Schweißvorgänge erzielt, wobei eine Rollenschweiß- oder Laserapparatur an der Stirnnaht mit einer Reziprokbewegung entlang fährt und anschließend die so in-vacuo verschweißte VIP durch eine neue noch offene VIP ersetzt und der in-vacuo Fügeschritt wiederholt wird. Es wird auf **Bild 8** und Ansprüche 7 und 8 sowie auf die kontinuierliche Nachlieferung einer VIP in den in-vacuo Fügebereich in Ausführung 3 hingewiesen.

Ohne kontinuierliche Nachlieferung kann der Wirkungsgrad der Nutzflächenverwertung einer Vakuumkammer, der abhängig ist vom Verhältnis der Produktfläche zur Vakuumkammer-Grundfläche, einen Wert von 1.0 nicht nur nicht überschreiten, sondern auch nicht erreichen, da dieser Wirkungsgrad selbst bei einem einmaligen Fertigen einer individuellen VIP Platz durch den notwendige Platz an den Rändern der VIP für ihre Handhabung wie Einlegen und Entfernen reduziert wird.

Erfindungsgemäß werden signifikante Steigerung des vorbezeichneten Wirkungsgrades dadurch erzielt, daß Stapel einer oder verschiedener VIP vor und nach dem in-vacuo Fügeschriftbeidseitig vom in-vacuo Fügebereich anti-synchron in ein und demselben Vakuum abgebaut und wieder aufgebaut werden, wie in **Bild 8** schematisch dargestellt ist. Zwar bedeutet die zusätzliche Aufnahme eines Zufuhr- und eines Lagerbereiches in derselben Vakuumkammer für das einmalige Fügen einer VIP eine Reduzierung von Werten des Wirkungsgrades im Bereich von 0,9 auf Werte im Bereich von 0,2 oder weniger (0,9 / 3 minus Übergangsbereiche für lateralen Transport). Jedoch kann das in-vacuo Abarbeiten eines in-vacuo Stapels von eg. 30 VIPs gleicher Abmessungen den Wirkungsgrad auf eg. 0,15 x 30 = 4,5 erhöhen.

Wenn 2 Paletten mit einer Charge von jeweils 30 VIPs abgearbeitet werden, erniedrigt sich der Wirkungsgrad pro individueller VIP für die notwendige Fläche für die zusätzlichen Paltten auf unter 0,2, jedoch erhöht sich der Gesamtwirkungsgrad auf eg. 0,12 x 60 = 7,2. Je mehr Chargen hintereinander abgearbeitet werden können, ohne daß die Atmosphäre der Vakuumkammer zwischenzeitlich neu geflutet und wieder evakuiert werden muß, je größer ist der vorbezeichnete Wirkungsgrad effektiv.

### Ausführung 19: Alternatives in-vacuo Fügen von Keramik an eine Folie einer VIP-Ummantelung

Der Erfindung liegt die Aufgabe zugrunde, eine Vielzahl von nicht-benetzenden Standard Loten für das in-vacuo Fügen von VIP-Folien auf Keramik-Rahmen und Keramik-Verstärkungen zu operationalisieren.

Die Lösung der Aufgabe wurd durch den Einsatz folgender in-vacuo Fügeverfahren erzielt:
Zweistufiges In-vacuo Lötverfahren:
   mit einer Metallschicht "metallisierte" Keramik wird anschließend mit Hilfe eines Lotes auf Metall fixiert. Zweistufige Methode unter Einsatz relativ hoher Temperaturen. Es wird ein Vakuumofen und eine vakuumtaugliche Auftragmaschine für ein Pastensystem oder eine Kathodenzerstäuber-Anlage (Magnetron-Sputtern) für Reinigen (eg. von SiO₂ auf SiC) und Abscheiden einer relativ dünnen Schicht oder für ein chemisch-reduktives katalytisches Abscheiden einer dünnen Schicht eingesetzt oder eine thermische Aufdampfung einer Schicht.
   *Metallisierungsbeispiele und Ergebnisse:*
   - Verbund aus Metallfolie und Al₂O₃-Rahmen durch Einsatz einer Mn/Mo-Paste für Verbindungsnähte unter Bildung von MnAl₂O₄ mit Zugfestigkeiten σ_{z} im Bereich von 70 MPa.
   - der Einsatz von sauerstoffaffinen Elemente wie Ti (oder Zr) auf Al₂O₃ führt zur Reduktion von Al₂O₃ unter Bildung von TiO_{X}.
   - Verbund aus Metallfolie und Si₃N₄-Rahmen oder -Verstärkung über Wolframschicht und gemeinsamer Sinterung bei 1750°C.
   - Verbund aus Metallfolie und SiC-Rahmen oder -Verstärkung über Wolframschicht und gemeinsamer Sinterung bei 1750°C.
In-vacuo-Diffusionsschweißen:
   Dieses Verfahren wird für geometrisch einfache Teile hoher Oberflächenqualität beim 0,8 bis 0,9 fachen des entsprechenden Schmelzpunktes T_{S} der niedrigstschmelzenden Komponente eingesetzt.
   Es werden eine vakuumtaugliche Diffusionsschweißanlage und ggfs. Zwischenschichten (eg. hochenergetisch wie amorphe Metallfolie) zwecks Festkörper-In-Diffusion der zu fügenden Werkstoffe zur Bildung einer Mischphase mit ausreichender Löslichkeit entsprechender chemischer Komponenten (Elemente) eingesetzt.
   *Beispiele:*
   - Stahlfolie mit Rahmen oder Verstärkung aus Si₃N₄, TiN, Al₂O₃ bei 1400°C und Preßdruck 100 - 150 MPa über 30 min unter Vakuum.
   - Al, Cu und Ni-Folien mit Rahmen oder Verstärkung aus Al₂O₃ bei 630°C und Preßdruck 50 MPa über 30 min unter Vakuum.
   - Nb-Folie mit Rahmen oder Verstärkung aus Si₃N₄ bei 1600°C und Preßdruck 0,65 MPa über 120 min unter Vakuum.
   - Pt, Rh-Folie mit Rahmen oder Verstärkung aus ZrO₂ (oder Al₂O₃) bei 1650°C und Preßdruck 90 MPa über 20 min unter Vakuum.
   *Ergebnis:*
   Verbindungsnähte mit Biegebruchfestigkeiten σ_{bB} im Bereich von 50 - 365 MPa.
In-vacuo-Heißpressen für einen Reaktionsverbund:
   Dieses Verfahren wird für für geometrisch einfache Teile hoher Oberflächenqualität bei 0,8 bis 0,9fachem des entsprechenden Schmelzpunktes T_{S} der niedrigstschmelzenden Komponente und hohem Druck eingesetzt. Betriebsdauer: im Bereich von 30 min.
   Es werden eine vakuumtaugliche Heißpresse oder HIP und (Schlicker-)Zwischenschichten (eg. Al₂O₃, ZrO₂, MgO-Y₂O₃, MgO-Si₃N₄, Si₃N₄-Y₂O₃, Si₃N₄-Al₂O₃, karbidbildene Metalle und Legierung wie Alund Ti-Basis) zwecks Festkörper-In-Diffusion der zu fügenden Werkstoffe zur Bildung einer Mischphase mit ausreichender Löslichkeit entsprechender chemischer Komponenten (Elemente) eingesetzt.
   *Beispiele:*
   - Metallfolien und Rahmen oder Verstärkungen aus Si₃N₄, AIN, SiC, TiC, ZrB₂, Oxide.

### Zusammenfassung

Kostengünstigere Vakuumproduktion bei höherer Produktsicherheit und erhöhtem Potential entsprechender Produktinnovationen, darunter den Anwendungsfällen für VIP bei Raumtemperatur durch höhere Festigkeit und Struktur-dimensionale Steifigkeit wie auch bei wesentlich höheren Temperaturen und Tieftemperaturanwendungen sowie komplexe und Sonderanwendungen einschließlich solcher in chemischen (säurehaltigen) wie auch physikalischen (cf. Weltraumanwendungen mit Goldbeschichtungen und/oder Berylliumfolien) Problembereichen. Dabei liegt dem erhöhten Potential entsprechender Produktinnovationen eine verfahrenstechnisch abgesicherte Verbreiterung der angewandten Folienwerkstoffe wie Stahl, Tantal sowie weiterer schadenstoleranter und chemisch widerstandsfähiger, aber auch besonders leichter Werkstoffe gegenüber den Verbundfolien gemäß Stand der Technik zu Grunde, deren begrenzte Vakuumtauglichkeit auch die Ursache für die beschränkte Lebensdauer und Zuverlässigkeit der heutigen VIP gemäß Stand der Technik ist. Der Erfindung liegt die konsequente Weiterentwicklung des bereits begonnenen Einzugs von eg. Aluminium als Gasbarriere und/oder Verstärkung in Verbundfolien unter Berücksichtigung der vakuumverfahrenstechnischen Anforderungen an ihre wirtschaftliche Herstellung zugrunde.

Die vorliegende Erfindung enthält neuartige Herstellverfahren für auf neuen Materialien basierende Vakuumisolationspaneelen (VIP). Ausgeweitete Materialauswahl und reduzierter Aufwand für die Herstellung des Vakuums zur Fertigung von VIP erweitern den wirtschaftlichen Einsatz und den Nutzen der Vorteile von Vakuumisolationspaneelen. Hierbei ist insbesondere der erweiterte Einsatz von vielen neuen Verbindungstechniken und entsprechend neu anwendbaren VIP-Folienmaterialien zu nennen, aber auch die automatisierten Herstellmethoden sowie ihre Integration in eine vakuumeffiziente Fertigungskette, die mit der notwendigen Evakuierung des von den VIP-Folienmaterialien eingeschlossenen Vakuum-Innenraums zur Aufnahme eines Füllkörpers, dem sogenannten VIP-"Kern", je nach Anwendungsund Kostenzweck verbunden sind. Mit dem neuen Herstellverfahren sowie mit den neuen VIP werden ganz neue Anwendungsgattungen für VIP geschaffen, darunter lastaufnehmende, schadenstolerante, säure- und hitzebeständige sowie gesundheitsschützende und entsprechend großtechnische VIP-Anwendungen. Die Konstanz der plastischen Verformung oder Stauchung oder Geschwindigkeit der in-vacuo Relativbewegung für Energiezufuhr und resultierender Verbindungsbildung gewährleistet dabei das Unterdruckgleichgewicht zwischen in-vacuo Fügebereich und dem definierten Vakuum, worin das Unterdruckgleichgewicht ein Gütesiegel insbesondere für solche in-vacuo Strukturen ist, die das Vakuum als kritischen Produkt-Bestandteil in der entsprechenden Struktur enthalten, sei es direkt als eine darin enthaltene Atmosphäre oder indirekt in der Qualität der in-vacuo Fügestelle, i.e. der in-vacuo erzielten in-vacuo Verbindung.

## Patentansprüche

1. **Verfahren** zur Herstellung eines Produktes durch "getter"-Material-freies Fügen eines Vorproduktes unter Vakuum,
worin das Verfahren so zu operieren ausgelegt ist, daß
a) in einer Vakuumkammer eine ganzheitliche Aussetzung mindestens eines Exemplares mindestens eines Vorproduktes an ein definiertes Vakuum, und
b) in einem in-vacuo Fügebereich der Vakuumkammer eine Bildung einer aus der aus einer Aufschmelz-und-Erstarrungs-Schweißnaht, einer Festkörper-Schweißnaht, einer Hart-Lötnaht, einer Weich-Lötnaht oder einer anorganischen Klebstoffverbindung bestehenden Gruppe ausgesuchten in-vacuo Verbindung mit einem Durchmesser oder einem Querschnitt oder mindestens einer Längendimension mit einem Wert ≥ 15 µm enthalten ist,
worin
c) der in-vacuo Fügebereich ein Unterdruck-Gleichgewicht mit dem definierten Vakuum und das definierte Vakuum einen Hintergrund der Vakuumkammer enthält, worin das Unterdruck-Gleichgewicht ein lokal an einer Kühlfalle vorgenommenes Kondensieren von mindestens einem aus der in-vacuo Verbindung ausdampfenden oder ausgasenden Stoff und der Hintergrund einen kontrollierten Hintergrunds-Druckwert p_{H} enthält,
und
d) die Bildung der in-vacuo Verbindung eine in-vacuo Relativbewegung des mindestens einen Exemplars und einer vakuumtauglichen Fügeapparatur zueinander für eine Zusatzstoff-freie Energiezufuhr und für eine resultierende Verbindungsbildung enthält,
worin
e) die Zusatzstoff-freie Energiezufuhr eine durch elektrischen Strom, Widerstandsheizen, Druck, Induktion, Elektronenstrahl, Laserlicht, Verformungsenergie, Ultra-Schall oder Pressoder Schmiedekraft zugeführte Energieform
und die resultierende Verbindungsbildung
f1) eine plastische Verformung oder Stauchung des mindestens einen Exemplars enthält, worin die plastische Verformung oder Stauchung einen konstanten Verformungs- oder Stauchungs-Vektor enthält, worin der konstante Verformungs- oder Stauchungs-Vektor in mindestens einem senkrechten Winkel im Raum zu der in-vacuo Verbindung steht, worin der mindestens eine senkrechte Winkel im Raum ein Azimuth- oder ein Polarwinkel ist,
oder
f2) eine Vorschubgeschwindigkeit des mindestens einen Exemplares relativ zu der vakuumtauglichen Fügeapparatur enthält, worin die Vorschubgeschwindigkeit einen konstanten Vorschubgeschwindigkeits-Vektor enthält, worin der konstante Vorschubgeschwindigkeits-Vektor in einer die in-vacuo Verbindung enthaltenen Ebene im Raum liegt
oder
f3) eine aus der Verformung oder Stauchung nach f1) und der Vorschubgeschwindigkeit nach f2) kombinierte Verbindungsbildung
enthält, worin der Wert ≥ 15 µm und die Kühlfalle und der konstante Verformungsoder Stauchungs-Vektor im Raum oder der konstante Vorschubgeschwindigkeits-Vektor im Raum ein "getter"-Material ersetzt.

2. Das Verfahren nach Anspruch 1, worin die plastische Verformung oder Stauchung ein oder mehrere der folgenden Kennzeichen enthält:
A. eine Leck-freie Kraftübertragung von einem elektromechanischen oder pneumatischen oder hydraulischen Antrieb außerhalb der Vakuumkammer auf das mindestens eine Exemplar in der Vakuumkammer über ein Gestänge durch ein mehrfach durch eine Kolbenstangendichtung abgedichtetes Differentialvakuumkammervolumen einer Vakuumkammerwand hindurch, worin das Gestänge eine durch die Vakuumkammerwand hindurch auf das mindestens eine Exemplar mit einer auf und ab beweglichen Preßbacke und einem Preßbolzen übertragenen Presskraft enthält, worin das mindestens eine Exemplar einen durch die übertragene Presskraft erzeugten Pressdruck für die plastische Verformung oder Stauchung enthält, worin das mehrfach abgedichtete Differentialvakuumkammervolumen durch ein von dem Hintergrundsvakuumdruck unabhängiges Zwischen-Evakuieren ein Druckverhältnis mit einer Umgebungsatmosphärendruck von ≥ 10⁻³:1 und ein Druckverhältnis mit dem Hintergrunds-Druckwert von 1 : p_{H} mit p_{H} < 1 enthält.
B. ein Falten-freies Aneinanderpressen von mindestens zwei pin-hole-freien Folien vor und während der Bildung der in-vacuo Verbindung mit einer Verform- und Anpressvorrichtung,
worin die Verform- und Anpresseinrichtung eine oder mehrere auf und ab bewegliche Preßbacke und einen oder mehrere Preßbolzen enthält, worin die Preßbacke und der Preßbolzen jeweils mindestens eine zueinander planparallele Preßfläche für das Falten-freie Aneinanderpressen der mindestens zwei pin-hole-freien Folien enthalten, worin die mindestens zwei pin-hole-freien Folien vor der Bildung der in-vacuo Verbindung einen maximalen Zwischenspalt von 5% einer Folienstärke einer der mindestens zwei pin-hole-freien Folien oder eine Zwischenspalt-Freiheit enthalten, worin das Falten-freie Aneinanderpressen einen Pressdruck mit einem Wert im Bereich von ≥ 0,1 N/mm² enthält, worin der Pressdruck eine konstante Verformungs- oder Stauchungskraft enthält, worin die konstante Verformungsoder Stauchungskraft eine homogene Auflösung eines verbundenen Gefäßdruckes einer pneumatischen oder hydraulischen Antriebseinheit auf der planparallelen Preßfläche enthält.

3. Das Verfahren nach Anspruch 1 oder 2, worin das Verfahren ein oder mehrere der folgenden Kennzeichen enthält:
A. eine laminare Evakuierungsströmung oder eine molekulare Evakuierungsströmung oder eine Knudsen-Evakuierungsströmung in einer nichtverschweißten Öffnung einer offenen Vakuumisolationspaneele während eines in-vacuo Evakuierens innerhalb der ganzheitlichen Aussetzung einer offenen Vakuumisolationspaneele, worin die offene Vakuumisolationspaneele eine verschweißte Umrandung um eine tiefgezogene flache Schale aus einer pin-hole-freien Unter- und/oder einer pin-hole-freien Oberfolie enthält, worin die verschweißte Umrandung eine runde Form oder zwei oder mehrere gerade Seiten und die tiefgezogene flache Schale einen porösen Füllwerkstoff und die nichtverschweißte Öffnung einen durch eine Formgebung und eine Foliensteifigkeit erzielten stabilen Abstand zwischen der pin-hole-freien Unter- und der pin-hole-freien Oberfolie während des in-vacuo Evakuierens enthält, worin die Formgebung eine Außenkante mit einer Bogenlänge der Oberfolie, ¹B2, entlang der Verbindungslinie der in-vacuo Verbindung und die Unterfolie eine Bogenlänge der Unterfolie, ¹B1, entlang der Verbindungslinie der in-vacuo Verbindung enthält, worin die offene Vakuumisolationspaneele bei der laminaren Evakuierungsströmung einen Grobvakuumsdruck und bei der molekularen Evakuierungsströmung einen Hochvakuumsdruck und bei der Knudsen-Evakuierungsströmung einen Feinvakuumsdruck in der tiefgezogenen flachen Schale enthält.
B. ein mit einer oder mehreren auf und ab beweglichen Preßbacken und mit einem oder mehreren Preßbolzen erzieltes Falten-freies Aneinanderpressen einer pin-hole-freien Unter- und einer pin-hole-freien Oberfolie einer nichtverschweißten Öffnung einer vor der Bildung der in-vacuo Verbindung evakuierten runden und/oder drei-, vier- oder mehrseitigen Vakuumisolationspaneele, worin die nichtverschweißte Öffnung eine durch das Falten-freie Aneinanderpressen der pin-hole-freien Unter- und der pin-hole-freien Oberfolie erhaltene gestreckte Form enthält, worin die gestreckte Form eine verschweißte Umrandung um einen Füllwerkstoff mit dem definierten Vakuum verbindet und eine Folien-Lasche oder einen Folien-Flansch enthält, worin die Folien-Lasche oder der Folien-Flansch eine Verformbarkeit und eine Abtrennbarkeit enthält, worin die gestreckte Form eine identische Folienlänge der pin-hole-freien Unter- und der pin-hole-freien Oberfolie entlang der nichtverschweißten Öffnung enthält, worin die identischen Folienlänge einen Zwischenspalt mit einer Breite von maximal 5% einer Folienstärke der pin-hole-freien Unter- und/oder der pin-hole-freien Oberfolie oder eine Zwischenspalt-Freiheit enthält.

4. Das Verfahren nach einem oder mehreren der Ansprüche 1 bis 3, worin die Vorschubgeschwindigkeit ein oder mehrere der folgenden Kennzeichen enthält:
A. ein Brechungs-armes und Reflektions-freies Einkoppeln eines Laserstrahls aus einer Atmosphäre einer Umgebung der Vakuumkammer in die Vakuumkammeratmosphäre hinein für die Bildung der aus der Aufschmelz-und-Erstarrungs-Schweißnaht bestehenden in-vacuo Verbindung, worin der Laserstrahl ein Durchstrahlen eines licht-transparenten vakuumtauglichen Einkoppelfensters enthält, worin das Einkoppelfenster eine vakuumdichte und formstabile und gasdichte Einfassung und eine planparallele Auf-lage auf der Vakuumkammer und eine Fertigungstoleranz im µm-Bereich und einen gegenüber ein Druckdifferential zwischen der Atmosphäre der Umgebung und der Vakuumkammeratmosphäre form- und dimensions-stabilen Querschnitt und eine Parallelität einer Einlaßgrenzfläche und einer Ausgangsgrenzfläche für den Laserstrahl und eine minimierte Reflektivität enthält, worin das Einkoppelfenster ein brechungsarmes Glasmaterial und das Brechungs-arme und Reflektions-freie Einkoppeln eine dimensionsstabile Brennweite enthält, worin die dimensionsstabile Brennweite ein hochpräzises Einkoppeln des Laserstrahls enthält, worin das hochpräzise Einkoppeln des Laserstrahls einen Einstrahlwinkel des Laserstrahls auf das Einkoppelfenster von 90° oder eine Breitband-Multilayer-Antireflexbeschichtung und ein in-vacuo Schweißen oder ein in-vacuo Schweißen-und-Schneiden enthält.
B. ein in-vacuo Verschweißen von mindestens zwei pin-hole-freien und planparallel aneinandergepressten Folien mit einem Laserstrahl, worin der Laserstrahl eine kontrollierte Länge eines Abstandes zwischen seinem Austritt aus einer Laser-Fokussierung eines Lasers und einem Laserspot auf den mindestens zwei pin-hole-freien und planparallel aneinandergepressten Folien für die Bildung der in-vacuo Verbindung durch eine Auflagerung des Lasers und der Laser-Fokussierung und einer Laser-Linear-Führungseinheit auf einer inkompressiblen Vakuumkammerwand enthält, worin die kontrollierte Länge unabhängig von einer durch ein Druckdifferential verursachten Vakuumkammerwandbewegung ist und der Laser einen Hochleistungsdiodenlaser oder einen gepulsten oder einen kontinuierlichen ND:YAG-Laser enthält, worin der Hochleistungsdiodenlaser oder der gepulste oder der kontinuierliche ND:YAG-Laser außen an einer Außenwand des licht-transparenten Einkoppelfensters der Vakuumkammer vorbeifährt und die Vorschubgeschwindigkeit und den konstanten Vorschubgeschwindigkeits-Vektor und eine Laserprozeßkontrolle enthält, worin die Laserprozeßkontrolle eine Vorschubgeschwindigkeits-Vektor-Kontrolle und eine Laserleistungskontrolle enthält, worin die Vorschubgeschwindigkeits-Vektor-Kontrolle einen Laser-Linear-Antrieb und die Auflagerung auf der inkompressiblen Vakuumkammerwand enthält, worin die Laser-Linear-Führungseinheit eine Regelung einer Laserleistung bezogen auf einen durch den Laser-Linear-Antrieb erzeugten Betrag des konstanten Vorschubgeschwindigkeits-Vektor enthält, worin die Laserleistung eine Konstanz bezogen auf einen konstanten Betrag des konstanten Vorschubgeschwindigkeits-Vektors enthält.

5. Das Verfahren nach einem oder mehreren der Ansprüche 1 bis 4, worin das Verfahren ein oder mehrere der folgenden Kennzeichen enthält:
A. ein leckfreies in-vacuo Verschweißen von mindestens zwei pin-hole-freien und planparallel aneinandergepressten Folien einer nichtverschweißten Öffnung einer evakuierten Vakuumisolationspaneele mit einem Laserstrahl, worin der Laserstrahl eine kontrollierte Länge eines Abstandes zwischen seinem Austritt aus einer Laser-Fokussierung eines Lasers und einem Laserspot für die Bildung der in-vacuo Verbindung der evakuierten Vakuumisolationspaneele enthält, worin der Laser außen an einer Außenwand eines licht-transparenten Einkoppelfensters der Vakuumkammer vorbeifährt und die Vorschubgeschwindigkeit und den konstanten Vorschubgeschwindigkeits-Vektor und eine konstante Laserleistung und eine vollautomatische Laserprozeßkontrolle enthält, worin die vollautomatische Laserprozeßkontrolle eine Vorschubgeschwindigkeits-Vektor-Kontrolle durch eine Auflagerung einer Laser-Linear-Führungseinheit auf einer inkompressiblen Vakuumkammerwand und eine Laserleistungskontrolle durch eine Regelung einer Laserleistung bezogen auf einen konstanten Betrag des konstanten Vorschubgeschwindigkeits-Vektors und eine Laserabstandskontrolle der kontrollierten Länge des Abstandes mit der Laser-Fokussierung enthält, worin die Laserabstandskontrolle eine Längenkonstanz der kontrollierten Länge des Abstandes enthält, worin die vollautomatische Laserprozeßkontrolle eine Toleranz einer Abstandsabweichung von der Längenkonstanz enthält, worin die Toleranz einen maximalen Abstandsabweichungwert von ± 0.5 mm enthält, worin die Toleranz eine Unabhängigkeit von einer Vakuumkammerwandbewegung und einem in-vacuo Abstand zwischen dem licht-transparenten Einkoppelfenster in einer Vakuumkammerwand und dem Laserspot und eine Bildung eines homogenen und reproduzierbaren Laser-Schweißnahtgefüges der in-vacuo Verbindung aus einem Gasdiffusions-freiem Material enthält.
B. ein kombiniertes leckfreies in-vacuo Schweißen-und-Schneiden von mindestens zwei pin-hole-freien und planparallel aneinandergepressten oder einen Vakuuminnenraum abschließenden Folien einer nichtverschweißten Öffnung einer evakuierten Vakuumisolationspaneele mit einem Laserstrahl, worin der Laserstrahl eine kontrollierte Länge eines Abstandes zwischen seinem Austritt aus einer Laser-Fokussierung eines Lasers und einem Laserspot für die Bildung der in-vacuo Verbindung auf der evakuierten Vakuumisolationspaneele enthält, worin das leckfreie kombinierte in-vacuo Schweißen-und-Schneiden ein mit dem Laserstrahl lokal ausgeführtes kontinuierliches Laser-Aufschmelzen der mindestens zwei pin-hole-freien und planparallel aneinandergepressten Folien und ein Erstarren zu einer in-vacuo Schweißnaht und ein anschließendes und parallel zu der in-vacuo Schweißnaht angeordnetes in-vacuo Schneiden von mindestens zwei pin-hole-freien und einen Vakuuminnenraum abschließenden Folien durch Verschwenken einer Optik der Laser-Fokussierung zu einem Trennahtbildungs-Laserspot und Aufschmelzen der mindestens zwei pin-hole-freien und planparallel aneinandergepressten Folien ohne Erstarren enthält, worin das in--vacuo Schneiden ein in-vacuo Abtropfen von einem aufgeschmolzenen Folienmaterial in eine Auffangvorrichtung und ein bezogen auf die in-vacuo Schweißnaht beidseitiges Einfangen des mindestens einen aus der in-vacuo Verbindung ausdampfenden oder ausgasenden Stoffes mit zwei linearen Schmiede-Klemmen und eine Trennahtbildung enthält, worin die zwei linearen Schmiede-Klemmen eine Form eines statischen Balkens zum Spannen der mindestens zwei pin-hole-freien und den Vakuuminnenraum abschließenden Folien und ein durch sie hindurchfließendes Kühlmittel enthalten, worin die Laser-Linear-Führungseinheit eine Regelung einer Laserleistung bezogen auf einen Betrag des konstanten Vorschubgeschwindigkeits-Vektors v und bezogen auf eine notwendige Energie E1 für das lokal ausgeführte kontinuierliche Laser-Aufschmelzen und bezogen auf eine Energie E2 für die Trennahtbildung enthält, worin vorzugsweise E2 > E1 für v1 = v2 oder E2 = E1 für v2 > v1, worin v2 = ein konstanter Geschwindigkeitsvektor für das in-vacuo Schneiden und v1 = ein konstanter Geschwindigkeitsvektor für das in-vacuo Schweißen.

6. Das Verfahren nach einem oder mehreren der Ansprüche 1 bis 5, worin das Verfahren ein oder mehrere der folgenden Kennzeichen enthält:
A. ein laschen- und leckfreies in-vacuo Schweißen-und-Schneiden von mindestens zwei pin-hole-freien und planparallel aneinandergepressten oder einen Vakuuminnenraum abschließenden Folien einer nichtverschweißten Öffnung einer evakuierten Vakuumisolationspaneele mit einem Laserstrahl, worin der Laserstrahl eine kontrollierte Länge eines Abstandes zwischen seinem Austritt aus einer Laser-Fokussierung eines Lasers und einem Laserspot für die Bildung der in-vacuo Verbindung auf der evakuierten Vakuumisolationspaneele enthält, worin das an das in-vacuo Schweißen anschließende und parallel zu der in-vacuo Schweißnaht angeordnete in-vacuo Schneiden ein Abtrennen der Folien-Lasche oder des Folien-Flansches von der in-vacuo Schweißnaht und von der verschweißten Umrandung durch ein in-vacuo Aufschmelzen ohne Erstarren der mindestens zwei pin-hole-freien und den planparallel aneinandergepressten Folien enthält, worin das Abtrennen eine Bildung einer Verlängerung der verschweißten Umrandung um die tiefgezogene flache Schale mit dem Füllwerkstoff mit dem definierten Vakuum in dem Vakuuminnenraum durch die in-vacuo Verbindung enthält, worin die verschweißte Umrandung und die Verlängerung einen Laschen-freien Außenbereich enthalten, worin der Laschen-freie Außenbereich der in-vacuo Verbindung eine in-vacuo Trennaht und eine Außenbereichsbreite x' zwischen der in-vacuo Verbindung und der in-vacuo Trennaht enthält, worin die Außenbereichsbreite x' eine lineare Zentrierung in einem Zwischenbereich von zwei linearen Schmiede-Klemmen und eine Parallelität und einen konstanten Abstand der in-vacuo Schweißnaht von der in-vacuo Trennaht enthält, worin der konstante Abstand vorzugsweise einen maximalen Wert von zwei Wandstärken oder Wanddicken von einer der zwei pin-hole-freien und den Vakuuminnenraum abschließenden Folien enthält.
B. ein verspannungsfreies in-vacuo Folienfügen einer evakuierten und leckfreien Vakuumisolationspaneele mit einem Laserstrahl, worin das verspannungsfreies in-vacuo Folienfügen ein reproduzierbares in-vacuo Schweißen-und-Schneiden von mindestens zwei pin-hole-freien und planparallel aneinandergepressten oder einen Vakuuminnenraum abschließenden Folien einer nichtverschweißten Öffnung der evakuierten Vakuumisolationspaneele und einen reproduzierbaren Arbeitsschritt innerhalb der Spannvorrichtung und/oder eine kalt-verformungsfreie Sekundär-Bearbeitung außerhalb einer Vakuumisolationspaneele-Spannvorrichtung enthält, worin die evakuierte Vakuumisolationspaneele eine mit dem in-vacuo Folienfügen erzielte Laschen-Freiheit mit oder ohne Außenbereichsbreite x' > 0 und eine Kaltverformungs-freie in-vacuo Schweißnaht und eine Kaltverformungs-freie in-vacuo Trennaht und mindestens eine Kaltverformungs-freie Kante enthält, worin die Kaltverformungs-freie in-vacuo Schweißnaht oder die Kaltverformungs-freie in-vacuo Trennaht oder die mindestens eine Kaltverformungs-freie Kante einen duktilen Werkstoff enthält.

7. Das Verfahren nach einem oder mehreren der Ansprüche 1 bis 6, worin der kontrollierte Hintergrunds-Druckwert einen konstanten Unterdruck durch eine Unterdruck-Kontrolle mit einem oder mehreren der folgenden Kennzeichen enthält:
A. eine Pumpgeschwindigkeit eines Vakuumpumpenstandes und eine durch einen Ausgasungskennwert definierte Vakuumkammerinnenwandungsfläche und durch mindestens eine durch einen Ausgasungskennwert definierte Ausgasungsoberfläche von mindestens einer vakuumtauglichen Fügeapparatur.
B. einen Ausschluß von einem Kunststoff oder Polymer und von einem hohen Oberflächen-zu-Volumen-Verhältnis in einer Konstruktion der in-vacuo Fügeapparatur.
C. ein aus der aus einem Grobvakuum, einem Feinvakuum, einem Hochvakuum und einem Ultrahochvakuum bestehenden Gruppe ausgesuchtes Vakuumkammervakuum, worin das Vakuumkammervakuum einen Unterdruck mit einem konstanten Wert in einem Bereich von 10⁻¹² bis 0.95 bar gegenüber einer die Vakuumkammer umgebenden Normalatmosphäre enthält.
D. ein kontrollierter Einlaß von einem Schutzgas, reaktiven Gas, reduzierendem Gas oder Spülgas in die Vakuumkammer.

8. Das Verfahren nach einem oder mehreren der Ansprüche 1 bis 7, worin der in-vacuo Fügebereich ein oder mehrere der folgenden Kennzeichen enthält:
A. eine Ausgasungskontrolle durch eine Temperaturkontrolle der in-vacuo Verbindung, worin die Temperaturkontrolle eine unabhängige Kühlung der in-vacuo Verbindung enthält.
B. eine Kontrolle der Kühlfalle durch eine Kühlflüssigkeit.
C. eine atmosphärische Kontrolle durch eine in-vacuo Vorbehandlung des mindestens einen Vorproduktes, worin die in-vacuo Vorbehandlung aus der aus einer Ausheizung, einem Polieren oder einem Absputtern einer Oxidschicht einer Oberfläche des mindestens einen Exemplars bestehenden Gruppe ausgesucht wird.
D. eine atmosphärische Kontrolle durch Einsatz eines kunstoffreien Vorproduktes oder einer kunstoffreien und "pin-hole"-freien Metallfolie oder eines kunststoffreien in-vacuo Fügeverfahrens oder eines metallischen Vorproduktes oder eines keramischen Vorproduktes.
E. Ausschluß von Gasentladungen durch eine Anwendung einer Betriebsspannung mit einem Wert < 49 V bei einem Betriebsdruck mit einem Wert im Bereich von 10⁻³ bis 10⁻¹ mbar.

9. Das Verfahren nach einem oder mehreren der Ansprüche 1 bis 8, worin die in-vacuo Verbindung ein oder mehrere der folgenden Kennzeichen enthält:
A. eine aus der aus Reibschweißnaht, Rollnaht-Schweißnaht, Laser-Strahl-Schweißnaht, "Hochfrequenz"-Widerstandsschweißnaht, Elektronenstrahl-Schweißnaht, Widerstands-Punkt-Schweißnaht, Direkt-Druck- oder J-Typ Maschineschweißnaht, Aufschmelz-und-Erstarrungs-Projektions-Schweißnaht und "Blitz"-Schweißnaht bestehenden Gruppe ausgesuchte metallische Aufschmelz-und-Erstarrungs-Schweißnaht.
B. eine aus der aus Walzschweißnaht, Reibschweißnaht, Reibrührschweißnaht, Kontinuierliche Schmiede-Schweißnaht, Kontinuierliche Ultraschall-Schweißnaht; Festkörper-Projektions-Schweißnaht und Schmiede-Schweißnaht bestehenden Gruppe ausgesuchte metallische Festkörper-Schweißnaht.
C. eine metallische in-vacuo Versiegelung einer vakuumdichten metallischen Ummantelung eines aus der aus vakuumdichten Behälter, vakuumdichter Tasche, vakuumdichter Tüte, vakuumdichter Verpackung und vakuumdichter Vakuumisolationspaneele bestehenden Gruppe ausgesuchten vakuumdichten Behältnisses für eine Anwendung unter Normalbedingungen.

10. Das Verfahren nach einem oder mehreren der Ansprüche 1 bis 8, worin die in-vacuo Verbindungsstelle ein oder mehrere der folgenden der folgenden Kennzeichen enthält:
A. eine aus der aus Ofen-Hart-Lötnaht, Heiß-Pressnaht, Einstufig (Direkt) hergestellte Widerstands-Hart-Lötnaht und Zweistufig (Indirekt) hergestellte Reaktionsverbund-Lötnaht bestehenden Gruppe ausgesuchte Metall-Keramik-Lötnaht.
B. eine aus der aus Laser-Weich-Lötnaht und Einstufig (Direkt) hergestellte Widerstands-Weich-Lötnaht bestehenden Gruppe ausgesuchte Metall-Keramik-Lötnaht.
C. eine Laser-Schweißnaht, Elektronenstrahl-Schweißnaht, Diffusions-Schweißnaht, Reib-Schweißnaht, Kaltpreß-Schweißnaht, bestehenden Gruppe ausgesuchte Metall-Keramik-Schweißnaht oder Metall-Keramik-Aufschmelz-und-Erstarrungs-Schweißnaht.
D. eine aus der aus anorganische Klebstoffverbindung, anorganische mineralische Klebstoffverbindung, Hochtemperatur-Klebstoffverbindung und ausgasungsfreie Klebstoffverbindung bestehenden Gruppe ausgesuchte Metall-Keramik-Klebstoffverbindung.
E. eine in-vacuo Metall-Keramik-Versiegelung einer vakuumdichten Metall-Keramik-Ummantelung eines aus der aus vakuumdichten Behälter, vakuumdichter Tasche, vakuumdichter Tüte, vakuumdichter Verpackung und vakuumdichter Vakuumisolationspaneele bestehenden Gruppe ausgesuchten vakuumdichten Behältnisses für eine Anwendung unter Normalbedingungen.
F. eine mit einem aus der aus 92Pb-4In-4Ti, 68,8Ag-26,7Cu-4,5Ti (Ticusil), 71,15Ag-28,1Cu-0,75Ni (Nicusil 3), AgCuInTi, 96Ag-4Ti, CuAlSiTi, CuAu mit 35, 37,5, 40 oder 50 Au, 63Ag-34,2Cu-lSn-1,75Ti, 67,5Cu-23,5Mn-9Ni (Nicuman 23) und 58,5Cu-31,5Mn-10Co (Cocuman) bestehenden Gruppe ausgesuchtem Lötmaterial hergestellte Metall-Keramik-Lötnaht.

11. Das Verfahren nach einem oder mehreren der Ansprüche 1 bis 10, worin die in-vacuo Relativbewegung ein oder mehrere der folgenden Kennzeichen enthält:
A. ein Vorbeiführen der vakuumtauglichen Fügeapparatur an dem mindestens einen Vorprodukt, worin das mindestens ein Vorprodukt eine fixe Fügungsposition enthält.
B. ein Vorbeiführen des mindestens einen Vorproduktes an der vakuumtauglichen Fügeapparatur, worin die vakuumtaugliche Fügeapparatur eine fixe Fügeposition enthält.
C. ein Aufeinanderzubewegen oder ein Voneinanderwegbewegen, worin die vakuumtaugliche Fügeapparatur eine bewegliche Fügeposition und das mindestens eine Vorprodukt eine bewegliche Fügungsposition enthält.
D. eine aus einer linearen Bewegung, einer Geradeausbewegung, einer Kurvenbewegung, einer rotativen Bewegung und einer Reziprokbewegung ausgesuchte in-vacuo Relativbewegung.
gung. E. eine Präzisionsbewegung mit einer Positions- oder Bewegungstoleranz von < 1 µm relativ zu einer in-vacuo Relativbewegungsrichtung.
F. eine Präzisionsbewegung mit einer Positions- oder Bewegungstoleranz von < 3 µm relativ zu einer in-vacuo Relativbewegungsrichtung.
G. eine Präzisionsbewegung mit einer Positions- oder Bewegungstoleranz von < 6 µm relativ zu einer in-vacuo Relativbewegungsrichtung.
H. eine Präzisionsbewegung mit einer Positions- oder Bewegungstoleranz von < 12 µm relativ zu einer in-vacuo Relativbewegungsrichtung.
I. eine Präzisionsbewegung mit einer Positions- oder Bewegungstoleranz von < 20 µm relativ zu einer in-vacuo Relativbewegungsrichtung.
J. eine Präzisionsbewegung mit einer Positions- oder Bewegungstoleranz von < 30 µm relativ zu einer in-vacuo Relativbewegungsrichtung.

12. Das Verfahren nach einem oder mehreren der Ansprüche 1 bis 11, worin die vakuumtaugliche Fügeapparatur ein oder mehrere der folgenden Kennzeichen enthält:
A. mindestens ein Material mit einem niedrigen Ausgasungskoeffizienten und einem geringen Oberflächen-zu-Volumenverhältnis.
B. einen aus der aus Reibschweißautomat, Rollnaht-Schweißautomat, Hochleistungsdioden-Laserapparatur, Nd:YAG-Laserapparatur, "Hochfrequenz"-Widerstandsschweißgerät, Elektronenstrahl-Schweißgerät, Widerstands-Punkt-Schweißgerät, DirektDruck- und J-Typ Maschine, Aufschmelz-und-Erstarrungs-Projektions-Schweißgerät, "Blitz"-Schweißgerät, Walzschweißgerät, Reibschweißgerät, Reibrührschweißgerät, Kontinuierliches Schmiede-Schweißgerät, Kontinuierliches Ultraschall-Schweißgerät, Festkörper-Projektions-Schweißgerät und Schmiede-Schweißgerät bestehenden Gruppe ausgesuchten Schweißautomaten, worin der Schweißautomat in dem Fügebereich enthalten ist.
C. ein externes Lasergerät, worin das externe Lasergerät außerhalb der Vakuumkammer zum Fügebereich versetzt enthalten ist.
D. einen Lötautomaten, worin der Lötautomat in dem Fügebereich enthalten ist.

13. Das Verfahren nach einem oder mehreren der Ansprüche 1 bis 12, worin die in-vacuo Relativbewegung in einer in-vacuo Fertigungskette enthalten ist, worin die in-vacuo Fertigungskette ein oder mehrere der folgenden Kennzeichen enthält:
A. eine Beförderung des mindestens eines Vorproduktes aus einem Zufuhrbereich der Vakuumkammer in den in-vacuo Fügebereich.
B. einen Transport der in-vacuo gefügten oder verbundenen Struktur oder der vakuumdichten Behälters oder der vakuumdichten Verpackung in einen Lagerbereich der Vakuumkammer.
C. einen Ersatz des mindestens einen Exemplares in dem in-vacuo Fügebereich durch eine Zufuhr mindestens eines neuen Exemplares aus dem Zufuhrbereich.
D. mindestens einen die Beförderung, die in-vacuo Relativbewegung, den Transport und den Ersatz enthaltenen in-vacuo Fügezyklus.
E. eine aus der aus Führungsschiene, Halterung, Weiche und Palettierroboter bestehenden Gruppe ausgesuchte Verfahrensapparatur aus mindestens einem Material mit einem niedrigen Ausgasungskoeffizienten und einem geringen Oberflächen-zu-Volumenverhältnis.
F. einen Produktionszyklus aus in-vacuo Fügezyklus, in-die Vakuumkammer-Hereinschleusen des mindestens einen Exemplares und aus-der-Vakuumkammer-Heraus-schleusen von mindestens einem Produkt.
G. einen effektiven Wirkungsgrad eines VIP/Vakuumbehälter-Grundriß-Wirkungsgrades mit einem Wert im Bereich von 0,08 - 20.
H. eine aus der aus Beförderungs-, Transport- und Zufuhrgeschwindigkeit ausgesuchte in-vacuo Geschwindigkeit.
I. "Batch"-Prozeß.
J. eine Automatisierung.
K. einen IR-Detektor zur on-line Kontrolle einer in-vacuo-Verbindungstemperatur während die Bildung der in-vacuo Verbindung.

14. Das Verfahren nach einem oder mehreren der Ansprüche 9 bis 13, worin das mindestens eine Exemplar ein oder mehrere der folgenden Kennzeichen enthält:
A. ein aus der aus offenstehendem Behälter, offenstehender Tasche, offenstehender Tüte, offenstehender Verpackung und offenstehender Vakuumisolationspaneele bestehenden Gruppe ausgesuchtes und über eine zu fügende Verbindungsstelle offenstehendes vakuumtaugliches Behältnis.
B. eine dem Vakuum ganzseitig ausgesetzte Außenseite.
C. eine Anzahl N_{E}, worin 1 < N_{E} < 1000 einer Anzahl N_{V} des mindestens einen Vorproduktes, worin 1 < N_{V} < 20.
D. in einer Anzahl N_{B,T,V}(1) des vakuumdichten Behältnisses enthalten ist, worin 1 < N_{B,T,V}(1) < 1000.
E. in einer Anzahl N_{B,T,V}(2) des vakuumdichten Behältnisses enthalten ist, worin 1 <N_{B,T,V}(2) < 500 und das vakuumdichte Behältnis eine Falz entlang von zwei in-vacuo Verbindungsstellen enthält.
F. in einer Anzahl N_{S} einer vakuumgefügten oder vakuumverbundenen Struktur enthalten ist, worin 1 < N_{S} < 500.
G. in einem Stapel oder Charge des mindestens einen Vorproduktes, in mindestens zwei nacheinander identischen Stapeln oder Chargen des mindestens einen Vorproduktes, in mindestens zwei nacheinander verschiedenen Stapeln oder Chargen des mindestens einen Vorproduktes und in mindestens zwei nacheinander verschiedenen Stapeln oder Chargen mit verschiedenen Vorprodukten enthalten ist.
H. in einem in-vacuo Produkt, in einem in einem Stapel oder Charge identischen in-vacuo Produkt, in einem in mindestens zwei nacheinander identischen Stapeln oder Chargen identischem in-vacuo Produkt, in einem in mindestens zwei nacheinander verschiedenen Stapeln oder Chargen identischen in-vacuo Produkt und in in mindestens zwei nacheinander verschiedenen Stapeln oder Chargen ver-schiedenen in-vacuo Produkten enthalten ist.
I. in einem Produkt aus mindestens zwei verschiedenen Vorprodukten enthalten ist.
J. in verschiedenen Produkten aus verschiedenen Fügezyklen enthalten ist.
K. in verschiedenen Produkten aus verschiedenen Vorprodukten enthalten ist.
L. in verschiedenen Produkten aus alternierenden Vorprodukten enthalten ist.
M. in alternierenden Produkten aus alternierenden Vorprodukten enthalten ist.
N. in alternierenden Produkten aus alternierenden und an verschiedenen Vorprodukten angewandten Fügezyklen enthalten ist.

15. **Eine vakuumtaugliche Fügeapparatur** zur Ausführung des Verfahrens nach einem oder mehreren der Ansprüche 1 - 14,
worin die vakuumtaugliche Fügeapparatur eine Vakuumkammer enthält, worin die Vakuumkammer einen Vakuumkammerwandeinlaß in einer Vakuumkammerwand enthält, worin der Vakuumkammerwandeinlaß ein lichttransparentes und vakuumtaugliches Einkoppelfenster für ein brechungsarmes Einkoppeln eines außerhalb der Vakuumkammer erzeugten Laserstrahles in eine Vakuumkammeratmosphäre enthält, worin das lichttransparente und vakuumtaugliche Einkoppelfenster ein brechungsarmes Glasmaterial enthält,
worin die Vakuumkammer weiter ein oberes als eine Kühlfalle ausgebildetes Presswerkzeug mit einem Kühlmittelkanal und ein unteres Presswerkzeug mit einem Kanal für eine kontaktfreie Bildung einer Schweißnaht oder einer Trennaht und für ein Auffangen von Schmelztropfen bei der Bildung der Trennaht und eine von außen an die Vakuumkammerwand angebrachte Anbringung für ein in-vacuo Laser-Füge-Verfahren enthält, worin die Anbringung eine vakuumtaugliche Laserquelle und eine Laser-Fokussierung und einen Laser-Linear-Antrieb und eine Laser-Linear-Führungseinheit und eine vertikale Inkompressibilität enthält,
worin die Anbringung weiter eine inkompressible Verbindung mit einem Vakuumkammerwandort der Vakuumkammerwand enthält, worin der Vakuumkammerwandort eine Unterstützung durch eine inkompressible Vakuumkammerwand enthält,
worin die vakuumtaugliche Fügeapparatur weiter einen von einem Vakuumkammerdruck in der Vakuumkammer und einer Lage des Einkoppelfensters unabhängigen konstanten und durch das Einkoppelfenster hindurchführenden Abstand zwischen der Laser-Fokussierung einerseits und einer Ebene für ein in-vacuo Verschweißen in dem in-vacuo Fügebereich oder einem Auflagetisch für das mindestens eine Exemplar oder einem Vauumkammerboden andererseits enthält.

16. Die vakuumtaugliche Fügeapparatur nach Anspruch 15, worin die vakuumtaugliche Fügeapparatur ein oder mehrere der folgenden Kennzeichen enthält:
A. einen Presswerkzeugantrieb für eine Auf-und-Ab-Bewegung des oberen Presswerkzeuges und/oder des unteren Presswerkzeuges, worin die Vakuumkammer einen Dichtflansch für vakuumtaugliche Abdichtung des Presswerkzeugantriebes enthält.
B. einen Vakuumkammerdeckel.
C. einen Vakuumkammerdeckel zum Ein- und/oder Ausschleusen des mindestens einen Exemplars.
D. einen Vakuumkammerdeckel, worin der Vakuumkammerwanddeckel den Vakuumkammerwandeinlaß enthält.
E. eine einen Hochleistungsdiodenlaser oder einen ND:YAG-Laser enthaltene Laserquelle.
F. eine Anordnung der vakuumtauglichen Laserquelle und der Laserfokussierung für ein reflektionsfreies Auftreffen des außerhalb der Vakuumkammer erzeugten Laserstrahls auf das Einkoppelfenster, worin die Anordnung einen Einstrahlwinkel von 90 ° enthält.
G. ein ein brechungsarmes Glasmaterial enthaltenes Einkoppelfenster, worin das brechungsarme Glasmaterial eine Einstrahlseite und eine Ausstrahlseite für den erzeugten Laserstrahl enthält, worin die Einstrahlseite und die Ausstrahlseite eine aufgedampfte Interferenzschicht mit einem niedrigen Brechungsindex enthält, worin die aufgedampfte Interferenzschicht vorzugsweise mehrere Schichtlagen enthält.
H. ein ein brechungsarmes Glasmaterial enthaltenes Einkoppelfenster, worin das brechungsarme Glasmaterial eine reflektionsarme Beschichtung enthält, worin die reflektionsarme Beschichtung eine Breitband-Multilayer-Antireflexbeschichtung enthält.
I. eine durch eine vertikale Vakuumkammerwand gestützte vertikale Verbindung des Laser-Linearantriebs und der Laser-Linear-Führungseinheit mit der vertikalen Vakuumkammerwand, worin mindestens die vertikale Verbindung und die vertikale Vakuumkammerwand eine Inkompressibilität enthält.

17. **Eine Vakuumisolationspaneele** mit kunststoffreier Ummantelung um Vakuum-Innenraum mit dem porösen Füllwerkstoff durch Herstellung mit dem Verfahren nach einem oder mehreren der Ansprüche 1 bis 14 oder durch Herstellung mit einer vakuumtauglichen Fügeapparatur nach Anspruch 15 oder 16 zur Ausführung des Verfahrens nach einem oder mehreren der Ansprüche 1 bis 14,
worin die Vakuumisolationspaneele eine frei-von-mechanisch-lösbare-Verbindung seiende Ummantelung enthält, worin die frei-von-mechanisch-lösbare-Verbindung seiende Ummantelung einen in-vacuo eingekapselten Vakuum-Innenraum durch eine in-vacuo hergestellte vakuumdichte Versiegelung enthält, worin die in-vacuo hergestellte vakuumdichte Versiegelung ein oder mehrere der folgenden Kennzeichen enthält:
A. Kunststoffreiheit.
B. Gasdiffusionsfreiheit.
C. "pin-hole"-Freiheit.
D. Wandstärke oder Durchmesser oder Querschnitt oder mindestens eine Längendimension mit einem Wert ≥ 15 µm.
E. Folie mit einer pin-hole freien Wandstärke oder Durchmesser oder einen pin-hole freien Querschnitt oder mindestens eine pin-hole freien Längendimension.
F. organische oder Bio-Materialfreiheit.
G. Ventilfreiheit.
H. Absaugstutzenfreiheit.
I. Verschlußfreiheit.
J. Perforationsfreiheit.
K. Reproduzierbarkeit.
L. Gasmigrationsfreiheit oder Gasströmungsfreiheit.
M. ein Metall oder eine Legierung.
N. eine Keramik.
O. ein Metal-Keramik Verbund oder ein Legierung-Keramik-Verbund.

18. Die Vakuumisolationspaneele nach Anspruch 17, worin die in-vacuo hergestellte vakuumdichte Versiegelung ein Versiegelungsmaterial mit einem oder mehreren der folgenden Kennzeichen enthält:
A. eine Präzisionsversiegelung.
B. eine Präzisionsversiegelung zwischen zwei Folienenden.
C. mindestens zwei Präzisionsversiegelungen zwischen einem Folienende und einer Falz.
D. eine kunststoffreie Klebversiegelung.
E. eine Schweißnahtversiegelung aus einem metallischen Werkstoff.
F. eine Schweißnahtversiegelung aus einer Schicht mit einem homogenen Gefüge.
G. eine Schweißnahtversiegelung aus einer Schicht mit einem homogenen Feiunkorngefüge.
H. eine aus der aus Reibschweißnaht, Rollnaht-Schweißnaht,, Laserstrahl-Schweißnaht, "Hochfrequenz"-Widerstandsschweißnaht, Elektronenstrahl-Schweißnaht, Widerstands-Punkt-Schweißnaht, Direkt-Druck- oder J-Typ Maschinenschweißnaht, Aufschmelz-und-Erstarrungs-Projektions-Schweißnaht, "Blitz"-Schweißnaht, Walzschweißnaht, Reibschweißnaht, Reibrührschweißnaht, Kontinuierliche Schmiede-Schweißnaht, Kontinuierliche Ultraschall-Schweißnaht, Festkörper-Projektions-Schweißnaht und Schmiede-Schweißnaht bestehenden Gruppe ausgesuchte Schweißnahtversiegelung.
I. eine Präzisionsschweißnahtversiegelung.
J. eine Präzisionsschweißnahtversiegelung zwischen zwei Folienenden.
K. mindestens zwei Präzisionsschweißnähte zwischen einem Folienende und einer Falz.

19. **Eine Vakuumisolationspaneele** mit frei-von-mechanisch-lösbarer-Verbindung seiender Ummantelung um Vakuum-Innenraum mit dem porösen Füllwerkstoff durch Herstellung mit dem Verfahren nach einem oder mehreren der Ansprüche 1 bis 14 oder durch Herstellung mit einer vakuumtauglichen Fügeapparatur nach Anspruch 15 oder 16 zur Ausführung des Verfahrens nach einem oder mehreren der Ansprüche 1 bis 14,
worin die Vakuumisolationspaneele eine kunststoffreie Ummantelung enthält, worin die kunststoffreie Ummantelung einen in-vacuo eingekapselten Vakuum-Innenraum durch eine in-vacuo hergestellte vakuumdichte Versiegelung enthält, worin die in-vacuo hergestellte vakuumdichte Versiegelung ein oder mehrere der folgenden Kennzeichen enthält:
A. eine Löslichkeit einer chemischen Komponente in einer Phase eines Gefüges.
B. eine Homogeneität.
C. eine einschichtige Mikrostruktur.
D. eine Seigerungsfreiheit.
E. eine Einschlußfreiheit.
F. ein feinkörniges Gefüge.
G. eine reproduzierbare Duktilität.
H. eine reproduzierbare Schadenstoleranz.
I. ein Metall oder eine Legierung.
J. eine Keramik.
K. ein Metal-Keramik Verbund oder ein Legierung-Keramik-Verbund.

20. Die Vakuumisolationspaneele nach Anspruch 17 oder 18,
worin die in-vacuo hergestellte vakuumdichte Versiegelung ein oder mehrere der folgenden Kennzeichen enthält:
A. eine Löslichkeit einer chemischen Komponente.
B. eine Homogeneität.
C. eine einschichtige Mikrostruktur.
D. eine Seigerungsfreiheit.
E. eine Einschlußfreiheit.
F. ein feinkörniges Gefüge.
G. eine reproduzierbare Duktilität.
H. eine reproduzierbare Schadenstoleranz.

21. Die Vakuumisolationspaneele nach einem oder mehreren der Ansprüche 17 bis 20, worin ein oder mehrere der nachfolgenden Kennzeichen ein aus der aus einem Stahl, einem Edelstahl, einem Tantalmetall, einer Tantallegierung, einem Titanmetall, einer Titanlegierung, einem Aluminiummetall, einer Aluminiumlegierung, einem Kupfermetall, einem OHC-Kuper, einer Kupferlegierung, einem Nickelmetall, einer Nickelbasislegierung, einer Superlegierung, einer ODS-Legierung, einer intermetallischen Legierung, einer TiAl-Basislegierung, einem Goldmetall, einer Goldbasislegierung, einem Edelmetall, einem Berylliummetall, einer Berylliumlegierung, einer Magnesiumlegierung und einem "thermal barrier" Werkstoff ausgesuchtes Metall oder Legierung enthalten:
A. die in-vacuo hergestellte vakuumdichte Versiegelung
B. die kunststoffreie Ummantelung.
C. die frei-von-mechanisch-lösbarer-Verbindung seiende Ummantelung.

22. **Eine Vakuumisolationspaneele** mit kunststoffreier Ummantelung um Vakuum-Innenraum mit dem porösen Füllwerkstoff durch Herstellung mit dem Verfahren nach einem oder mehreren der Ansprüche 1 bis 14 oder durch Herstellung mit einer vakuumtauglichen Fügeapparatur nach Anspruch 15 oder 16 zur Ausführung des Verfahrens nach einem oder mehreren der Ansprüche 1 bis 14,
worin ein oder mehrere der nachfolgenden Kennzeichen ein aus der aus einem Stahl, einem Edelstahl, einem Tantalmetall, einer Tantallegierung, einem Titanmetall, einer Titanlegierung, einem Aluminiummetall, einer Aluminiumlegierung, einem Kupfermetall, einem OHC-Kuper, einer Kupferlegierung, einem Nickelmetall, einer Nickelbasislegierung, einer Superlegierung, einer ODS-Legierung, einer intermetallischen Legierung, einer TiAl-Basislegierung, einem Goldmetall, einer Goldbasislegierung, einem Edelmetall, einem Berylliummetall, einer Berylliumlegierung, einer Magnesiumlegierung und einem "thermal barrier" Werkstoff ausgesuchtes Metall oder Legierung enthalten:
A. eine in-vacuo hergestellte vakuumdichte Versiegelung.
B. eine frei-von-mechanisch-lösbarer-Verbindung seiende Ummantelung.
C. die kunststoffreie Ummantelung.

23. **Eine Vakuumisolationspaneele** mit frei-von-mechanisch-lösbarer-Verbindung seiender Ummantelung um Vakuum-Innenraum mit dem porösen Füllwerkstoff durch Herstellung mit dem Verfahren nach einem oder mehreren der Ansprüche 1 bis 14 oder durch Herstellung mit einer vakuumtauglichen Fügeapparatur nach Anspruch 15 oder 16 zur Ausführung des Verfahrens nach einem oder mehreren der Ansprüche 1 bis 14,
worin ein oder mehrere der nachfolgenden Kennzeichen ein aus der aus einem Stahl, einem Edelstahl, einem Tantalmetall, einer Tantallegierung, einem Titanmetall, einer Titanlegierung, einem Aluminiummetall, einer Aluminiumlegierung, einem Kupfermetall, einem OHC-Kuper, einer Kupferlegierung, einem Nickelmetall, einer Nickelbasislegierung, einer Superlegierung, einer ODS-Legierung, einer intermetallischen Legierung, einer TiAl-Basislegierung, einem Goldmetall, einer Goldbasislegierung, einem Edelmetall, einem Berylliummetall, einer Berylliumlegierung, einer Magnesiumlegierung und einem "thermal barrier" Werkstoff ausgesuchtes Metall oder Legierung enthalten:
A. eine in-vacuo hergestellte vakuumdichte Versiegelung
B. eine kunststoffreie Ummantelung.
C. die frei-von-mechanisch-lösbarer-Verbindung seiende Ummantelung.

24. Die Vakuumisolationspaneele nach einem oder mehreren der Ansprüche 17 bis 23, worin die kunststoffreie Ummantelung ein oder mehrere der folgenden Kennzeichen enthält:
A. eine polykristalline Mikrostruktur mit einer Korngröße mit einem Wert im Bereich von 0,05 bis 2,0 µm.
B. eine polykristalline Mikrostruktur mit einer Korngröße mit einem Wert im Bereich von 0,1 bis 5,0 µm.
C. eine polykristalline Mikrostruktur mit einer Korngröße mit einem Wert im Bereich von 0,5 bis 8,0 µm.
D. eine polykristalline Mikrostruktur mit einer Korngröße mit einem Wert im Bereich von 0,1 bis 8,0 µm.
E. eine bis 1400°C thermisch stabile polykristalline Mikrostruktur.
F. eine Foliendicke mit einem Wert im Bereich von 15,0 bis 25,0 µm.
G. eine Foliendicke mit einem Wert im Bereich von 20,0 bis 30,0 µm.
H. eine Foliendicke mit einem Wert im Bereich von 25,0 bis 40,0 µm.
I. eine Foliendicke mit einem Wert im Bereich von 30,0 bis 200,0 µm.
J. einen Folienstahl mit einer Wärmeleitfähigkeit bei 20°C mit einem Wert im Bereich von 15 - 30 W/(K x m) und einem E-Modul unter Zug mit einem Wert im Bereich von 150 - 240 kN/mm².
K. ein Folienaluminium mit einem spezifischen E-Modul E/ρ_{Al} mit einem Wert 26.8 < E/ρ_{Al} < 27.2, worin ρ_{Al} = spezifische Dichte des Folienaluminiums, worin das Folienaluminium das Aluminiummetall ist.
L. ein Folienaluminium mit einem spezifischen E-Modul E/ρ_{Al} mit einem Wert 26.9 < E/ρ_{Al} < 35,0, worin ρ_{Al} = spezifische Dichte des Folienaluminiums, worin das Folienaluminium die Aluminiumlegierung ist.
M. ein Folienberyllium mit einem spezifischen E-Modul E/ρ_{Be} mit einem Wert 161,9 < E/ρ_{Be} < 162,4, worin ρ_{Be} = spezifische Dichte des Folienberylliums, worin das Folienberyllium das Berylliummetall ist.
N. ein Folienberyllium mit einem spezifischen E-Modul E/ρ_{Be} mit einem Wert 162,0 < E/ρ_{Be} < 170,0, worin ρ_{Be} = spezifische Dichte des Folienberylliums, worin das Folienberyllium die Beryllium-legierung ist.
O. ein Folienmagnesium mit einem spezifischen E-Modul E/ρ_{Mg} mit einem Wert 24,9 < E/ρ_{Mg} < 32,0, worin ρ_{Mg} = spezifische Dichte des Folienmagnesiums, worin das Folienmagnesium die Magnesiumlegierung ist.
P. einen aus der aus einer "thermal barrier" bestehenden Werkstoff, worin die "thermal barrier" eine poröse "sputter"-Schicht aus einem Zr-Basisoxyd oder Zr-Yttrium-Basisoxyd enthält.
Q. eine Folie aus einem hochreinem Metall oder einer hochreinen Legierung.
R. eine hochreine Keramik.

25. Die Vakuumisolationspaneele nach einem oder mehreren der Ansprüche 17 bis 24, worin die kunststoffreie Ummantelung ein oder mehrere der folgenden Kennzeichen enthält:
A. eine PVD-Beschichtung oder eine CVD-Beschichtung aus einem Metall oder aus einer Legierung.
B. eine PVD-Beschichtung oder eine CVD-Beschichtung aus einem aus der aus einem Stahl, einem Edelstahl, einem Feinkornstahl, einem Tantalmetall, einer Tantallegierung, einer Tantallegierung, einem Titanmetall, einer Titanlegierung, einem Aluminiummetall, einer Aluminiumlegierung, einem Kupfermetall, einem OHC-Kupfer, einer Kupferlegierung, einem Nickelmetall, einer Nickelbasislegierung, einer Superlegierung, eine ODS-Legierung, einer intermetallischen Legierung, einer TiAl-Basislegierung, einer TiNi-Basislegierung, ein Goldmetall, eine Goldbasislegierung, einem Berylliummetall; einer Berylliumlegierung, einer Magnesiumlegierung und einem "thermal barrier"-Werkstoff bestehenden Gruppe ausgesuchtem Folienbeschichtungsmaterial.
C. mindestens eine Innenseite mit der PVD-Beschichtung oder mit der CVD-Beschichtung nach A. oder B..
D. mindestens eine Außenseite mit der PVD-Beschichtung oder mit der CVD-Beschichtung nach A. oder B..

26. Die Vakuumisolationspaneele nach einem oder mehreren der Ansprüche 17 bis 25, worin die kunststoffreie Ummantelung ein oder mehrere der folgenden Kennzeichen enthält:
A. eine Kompositfolie, worin die Kompositfolie einen Werkstoffverbund enthält, worin der Werkstoffverbund mindestens zwei verschiedene Werkstoffe in einer lateralen Richtung enthält, worin die zwei verschiedenen Werkstoffe eine vakuumdicht verbundene Schnittstelle enthalten.
B. eine Verbundfolie mit einem aus der aus Fe, Ni, Cr, Ta, Nb, Ti, Cu, Gold (Au), Silber, Pt, Pd und Zr bestehenden Gruppe ausgesuchtem hochschmelzendem Übergangsmetall.
C. eine Verbundfolie mit einem aus der aus Zn, In, Sn und Pb bestehenden Gruppe ausgesuchtem niedrig-schmelzenden Metall.

27. Die Vakuumisolationspaneele nach einem oder mehreren der Ansprüche 17 bis 26, worin der Vakuum-Innenraum ein oder mehrere der folgenden Kennzeichen enthält:
A. einen Gradientenwerkstoff.
B. einen Gradientenwerkstoff für hohe Temperaturgradienten zwischen mindestens zwei gegenüberliegenden Außenseiten der Vakuumisolationspaneele.
C. ein Hochvakuum.
D. ein definiertes Vakuum.
E. einen getter"-Material-freien Vakuum-Innenraum.
F. mindestens eine keramische Verstärkung.
G. mindestens eine Verstärkung aus einem Metall.
H. mindestens einen intra-Verbinder oder intra-Abstandshalter.
I. mindestens einen intra-Dämmkern-Verbinder oder intra-Dämmkern-Abstandshaltern.

28. Die Vakuumisolationspaneele nach einem oder mehreren der Ansprüche 17 bis 27, worin der Vakuum-Innenraum ein oder mehrere der folgenden Kennzeichen enthält:
A. mindestens eine zwischen dem Kernmaterial und der kunststoffreien Folie koplanar eingelegte Röntgenstrahlabsorber-Platte, Röntgenstrahlabsorber-Blech oder Röntgenstrahlabsorber-Folie aus dem Berylliummetall oder aus der Berylliumlegierung.
B. mindestens eine Längsstrebe für eine konstruktive Versteifung der Vakuumpaneele, worin die Längsstrebe mit der kunststoffreien Folie zusammengefügt ist.
C. mindestens eine Querstrebe für eine konstruktive Versteifung der Vakuumpaneele, worin die Längsstrebe mit der kunstoffreien Folie zusammengefügt ist.
D. mindestens ein als Längs- oder Querstrebe benutztes versteifendes Profil.
E. ein aus der aus einem T-, Doppel-T-, U-, V-, W-, O- und S-Querschnittsprofil, einer Lamelle, einer Rippe, einer wabenförmigen Verstärkung oder Versteifung, einem "honeycomb" und einem wellenförmigen Querschnitt bestehenden Gruppe ausgesuchtes versteifendes Profil.

29. Die Vakuumisolationspaneele nach einem oder mehreren der Ansprüche 17 bis 28, worin die Vakuumisolationspaneele ein oder mehrere der folgenden Kennzeichen enthält:
A. eine Undurchlässigkeit gegenüber Röntgenstrahlen.
B. mindestens eine säurebeständige Außenseite.
C. einen Druckunterschied.
D. einen Temperaturunterschied.
E. eine Lastaufnahme senkrecht zu einer großflächigen Ummantelung.
F. eine Zug- oder Druckbeanspruchung Längs zu einer großflächigen Ummantelung.
G. eine thermische Barriere an einer äußeren Querseite.

30. Die Vakuumisolationspaneele nach einem oder mehreren der Ansprüche 17 bis 29, worin die Vakuumisolationspaneele ein oder mehrere der folgenden Kennzeichen enthält:
A. eine aus der aus rechteckiger, quadratischer, dreieckiger und vieleckiger Querschnitt bestehenden Gruppe ausgesuchte Querschnittsform.
B. eine mit einer auf eine Querschnittseite beschränkte und vakuumdichte in-vacuo Stirnnaht versehende Querschnittsform.
C. eine mit einer auf eine Querschnittseite beschränkte und vakuumdichte in-vacuo Stirnnaht versehende Querschnittsform, worin die Querschnittsseite in einer Ebene einer Oberseite oder einer Unterseite enthalten ist.
D. eine aus der aus runder und kreisrunder Querschnitt bestehenden Gruppe ausgesuchte Querschnittsform.
E. mindestens eine gegenüber mechanischer Befestigung oder Belastung reißfeste Überlappung oder Lasche, worin die mindestens eine reißfeste Überlappung oder Lasche eine monolithische Metallfolie oder eine monolithische Legierungsfolie enthält.
F. eine gegenüber mechanischer Befestigung reißfeste Überlappung oder Lasche mit einer konstanten Breite x, worin 30 µm < x < 20,0 cm.
G. eine mindestens eine Schweißnaht enthaltende Überlappung oder Lasche.
H. eine mindestens eine Projektionsschweißnaht enthaltende Überlappung oder Lasche, worin die Projektionsschweißnaht entlang der Überlappung oder Lasche enthalten ist und aus der aus mindestens einer linearen Naht, einem Maschennetz und einem aus rechtweckigen, dreieckigen, vieleckigen oder regelosen Maschen bestehenden Netz bestehenden Gruppe ausgesucht wird.
I. mindestens eine gegenüber mechanischer Befestigung reißfeste Überlappung oder Lasche mit einer konstanten Breite x₁ und mindestens eine gegenüber mechanischer Befestigung reißfeste Überlappung oder Lasche mit einer konstanten Breite x₂. ' J. eine mechanisch beanspruchbare Überlappung oder Lasche mit mindestens einem Bohrloch für eine mechanische Befestigung.

31. Die Vakuumisolationspaneele nach einem oder mehreren der Ansprüche 17 bis 29, worin die Vakuumisolationspaneele ein oder mehrere der folgenden Kennzeichen enthält:
A. eine Überlappungs- oder Laschenfreiheit.
B. eine aus der aus runder, kreisrunder, rechteckiger, quadratischer, dreieckiger und vieleckiger Querschnitt bestehenden Gruppe ausgesuchte und Überlappungs- oder Laschen-freie Querschnittsform.
C. eine mit einer auf eine Querschnittsseite beschränkte und vakuumdichte in-vacuo Stirnnaht versehende und Überlappungs- oder Laschen-freie Querschnittsform.
D. eine mit einer auf eine Querschnittsseite beschränkte und vakuumdichte in-vacuo Stirnnaht versehende und Überlappungs- oder Laschen-freie Querschnittsform, worin die Querschnittsseite in einer Ebene einer Oberseite oder einer Unterseite enthalten ist.

32. Ein Vakuumisolationspaneelen-Verbund unter Verwendung von mindestens zwei Vakuumisolationspaneelen nach einem oder mehreren der Ansprüche 16 bis 31, worin der Vakuumisolationspaneelen-Verbund ein oder mehrere der folgenden Kennzeichen enthält:
A. eine Spaltfreiheit zwischen den mindestens zwei Vakuumisolationspaneelen.
B. eine Beschichtung oder Hochglanzpolitur.
C. einen Schutz gegen Perforation.
D. einen Spalt.
E. mindestens einen Spalt und mindestens vier Laschen für eine mechanische Befestigung.
F. einen Spaltverbund.
G. einen Spaltverbund für mechanische Befestigung.
